# EUROPEAN PATENT APPLICATION

(11) **EP 1 486 980 A1**
(43) Date of publication of application: **15.12.2004**
(21) Application number: 04013148.4
(22) Date of filing: 03.06.2004
(51) Int. Cl.: G11B 27/10, G11B 27/30

(54) **Information recording medium, information recording method, information recording apparatus, information playback method, and information playback apparatus**

(30) Priority: 05.06.2003 JP 2003161273
(71) Applicant: Kabushiki Kaisha Toshiba, Tokyo 105-8001 (JP)
(72) Inventor: Nakashika, Masahiro, c/o Toshiba Corporation, Minato-ku Tokyo 105-8001 (JP); Kikuchi, Shinichi, c/o Toshiba Corporation, Minato-ku Tokyo 105-8001 (JP)
(74) Representative: Henkel, Feiler & Hänzel

(57) **Abstract**

A type of a broadcasting system of a digital stream signal to be recorded is checked. When a recorded digital stream signal is present, the broadcasting system of the recorded signal is determined from APP_NAME, and the broadcasting system of the recorded signal is compared with the broadcasting system of a signal to be newly recorded. When these broadcasting systems are matched, an object is added after the recorded ESOB file, and when they are not matched, an ESOB file of the corresponding format is newly created, and the object is recorded in this file. Accordingly, conforming to various broadcasting systems, the invention can provide a mechanism allowing coexistence of recorded contents by various broadcasting systems in one optical disk.

## Description

The present invention relates to an information recording medium (or data structure), an information recording/playback method, and an information recording/playback apparatus for recording and playing back digital stream signals MPEG-TS for use in satellite digital television broadcast or terrestrial digital television broadcast.

In recent years, TV broadcast has entered the era of digital broadcasts having Hi-Vision programs as principal broadcast contents. The current digital broadcast adopts an MPEG transport stream (to be abbreviated as MPEG-TS as needed hereinafter). In the field of digital broadcast using moving pictures, MPEG-TS will be used as a standard format in the future.

At the start of such digital TV broadcast, market needs for a streamer that can directly record digital TV broadcast contents without digital/analog conversion are increasing. As a currently, commercially available, typical streamer that directly records digital broadcast data MPEG-TS or the like, a video cassette recorder (D-VHS streamer) named D-VHS® is known.

Upon stream-recording digital broadcast data, MPEG-TS data of digital broadcast received by a tuner system (normally, a set-top box called an STB) is input to a D-VHS streamer via an IEEE1394 cable. The streamer executes'required encoding processes, and records the encoded data on a D-VHS tape. Note that IEEE1394 is the interface standard, which specifies exchange of commands and transmission/reception of data.

Upon playing back broadcast data, the D-VHS streamer reads recorded data MPEG-TS data or the like from the recorded D-VHS tape, and sends the read MPEG-TS data to a data expansion unit in the STB via the IEEE1394 cable. In this way, the recorded data is played back.

Since the D-VHS streamer directly records the broadcasted bitstream on a tape, a plurality of programs are multiplexed and recorded on the tape. For this reason, upon playback of the multiplexed recorded programs, the D-VHS streamer sends all data to the STB regardless of whether they are to be played back from the beginning or middle of a program. In this case, the user selects and plays back a desired one of a plurality of multiplexed recorded programs.

Since a tape is used as a recording medium, the D-VHS streamer can make sequential playback but cannot make a random access to the recorded contents. For this reason, it is difficult to quickly jump to a desired position in the desired recorded program and to start playback from that position (difficulty of special playback).

In addition to D-VHS, in recent years, STBs that use hard disc drives HDD are put on the marker as a digital broadcast streamer. This STB saves stream data in an HDD and realizes excellent random access performance. However, in this apparatus, the user cannot easily exchange the HDD. For this reason, such apparatus is not suited to preserve a large volume of recorded data as a library over a long term.

As a prevailing solution to the problems (difficulty of random access/difficulty of special playback) of D-VHS, and that (difficulty of media exchange) of the HDD, a currently, commercially available streamer that uses large-capacity disc media such as a DVD-RAM and the like may be used.

As an example of the "streamer using the DVD-RAM," "Program recording and reproducing system" is disclosed in Japanese Patent Application KOKAI Publication No. 2002-84469 (abstract, and claim 1).

The "program recording and reproducing system" disclosed in the above publication is designed to record a broadcast signal received by receiving means, and broadcast identification information for identifying the received broadcast signal from plural broadcast signals, that is, the broadcast identification information specified by the channel number and other information, by corresponding to each other.

A specific example of this streamer standard (although not opened to the public) includes a DVD stream recording standard (version 1.0) drafted February 2002. However, any product conforming to this standard is not put on sale yet.

This streamer standard aims at scrambled contents and also broadcast contents of various worldwide broadcast stations. For this reason, a minimum playback unit in video contents is defined by a data amount with reference to ECC blocks. For this reason, upon making special playback, even when data is read out from a target address, I-picture data that can be played back is not found, and the playback start position may shift considerably. That is, it is very difficult for this standard to attain special playback.

The streamer standard has contents unsuitable for special playback. However, in the above document, special playback is facilitated by matching the head of a data unit (VOBU/SOBU) with that of I-picture data (paragraph 0117) or recording the head position of each I-picture data in a management area (paragraph 0118).

The streamer standard packetizes and records irrespective of contents to be recorded. For this reason, upon playback, the arrival time of packets that store the recorded contents can be detected, but the playback time of the recorded contents cannot be directly detected. Hence, it is not easy for the user to designate the playback start position on a time basis, and playback operations such as time search and the like are inconvenient.

As a disc recorder standard free from the above inconvenience of time search and the like, the DVD video recording (DVD-VR) standard is known, and many products based on this DVD video recording standard are currently commercially available. This video recording standard adopts time map information. With this time map information which is not available in the streamer standard, it is easy for the user to designate the playback start position on a time basis.

However, the video recording standard is not compatible to stream recording of digital TV broadcast. In order to record digital broadcast contents using a recorder based on the video recording standard, an analog video signal that has temporarily undergone D/A conversion is sent from the STB to the analog video input of the recorder and is MPEG-encoded in the recorder again, and the encoded data is digitally recorded on a DVD-RAM disc or the like. Therefore, the existing video recording standard cannot meet needs of users who want to air-check digital TV broadcast contents (especially, Hi-Vision programs) while maintaining their quality.

Moreover, digital broadcast is provided in various systems (for example, ARIB or Association of Radio Industries and Businesses, ATSC or Advanced Television Systems Committee, and DVB or Digital Video Broadcasting). Although the stream recording can conform to all the broadcasting systems, contents of various systems coexist in one disk, playback process is complicated and its management is annoying.

The present invention is directed to provide a mechanism conforming to various broadcasting systems, and easy in management for playback even if recorded contents of various broadcasting systems coexist in one information recording medium.

According to an embodiment of the present invention, an information recording medium records a digital stream signal conforming to a predetermined digital broadcasting system and comprises a management region and a data region. The data region records data of the digital stream signal by separating into a plurality of object files in each data broadcasting system, and the management region records object management information in each of the plurality of object files.

An information recording apparatus according to an embodiment of the present invention comprises a detecting unit which detects a type of the broadcasting system, and an object file grouping unit which stores the object files by each broadcasting system according to the result of detection by the detecting unit.

An information playback apparatus according to an embodiment of the present invention comprises a detecting unit which detects a type of the broadcasting system, and an object management table structure changing unit which changes a structure of an object management table conforming to the broadcasting system according to the result of detection by the detecting unit.

An information recording method according to an embodiment of the present invention comprises detecting a type of the broadcasting system, and storing the object files by each broadcasting system according to the result of detection.

An information playback method according to an embodiment of the present invention comprises detecting a type of a broadcasting system of an object file to be played back, and determining the object file according to the result of detection.

This summary of the invention does not necessarily describe all necessary features so that the invention may also be a sub-combination of these described features.

The invention can be more fully understood from the following detailed description when taken in conjunction with the accompanying drawings, in which:
FIGS. 1A to 1I are views for explaining the data structure according to an embodiment of the present invention;
FIG. 2 is a view for explaining the relationship among a playback management information layer, object management information layer, and object layer in the data structure according to the embodiment of the present invention;
FIGS.,3A and 3B are views explaining a method of storing a navigation management information file in the data structure according to the embodiment of the invention;
FIG. 4 is a view for explaining an example of the configuration of a field RTR_VMGI/EHDVR_MGI of one management information RTR_VMG/EHDVR_MG recorded on AV data management information recording area 130 shown in FIG. 1D;
FIG. 5 is a view for explaining an example of the configuration of a field ESFIT of one management information RTR_VMG/EHDVR_MG recorded on AV data management information recording area 130 shown in FIG. 1D;
FIG. 6 is a view for explaining an example of the configuration of fields ESFIT_GI and ESFI of one management information RTR_VMG/EHDVR_MG recorded on AV data management information recording area 130 shown in FIG. 1D;
FIG. 7 is a view for explaining an example of the configuration of fields ESOBI_VSTI and ESOBI_ASTI of one management information RTR_VMG/EHDVR_MG recorded on AV data management information recording area 130 shown in FIG. 1D;
FIG. 8 is a view explaining an example of the configuration of fields ESFI_GI and ESOBI in the filed ESFIT of the management information shown in FIG. 4;
FIG. 9 is a view explaining an example of the configuration of field ESOB_GI shown in FIG. 8;
FIG. 10 is a view explaining an example of the configuration of field ESOB_GI shown in FIG. 8 (in particular, ESOB elementary stream ES, ES group, MAP_GI and ES_MAPI);
FIG. 11 is a view explaining an example of the configuration of field ES_MAP_GI shown in FIG. 10;
FIG. 12 is a view explaining an example of the configuration of field ES_MAP_GI shown in FIG. 10, in particular, field ESOBU_ENT;
FIG. 13 is a view explaining an example of the configuration of a management information recording region RTR_ESMG, in particular, contents of program chain information ORG_PGCI;
FIG. 14 is a view explaining an example of the configuration of the management information recording region RTR_ESMG, in particular, contents of play list information or user definition PGC information table;
FIG. 15 is a view explaining an example of the configuration of the program chain information shown in FIGS. 13 and 14, in particular, contents of program chain general information PGCI_GI, program information PGI, and cell information CI;
FIG. 16 is a view explaining an example of the configuration of a data unit ESOBU for stream object shown in FIG. 1E or 2;
FIGS. 17A to 17G are views explaining an example of the configuration of packet arrival time ATS, validity information DCI_CCI_SS, display control information DCI, copy generation management information or copy control information CCI, incremental packet arrival time IAPAT, and PCR position information PCR_LB number, etc. contained in the packet group header shown in FIG. 16;
FIG. 18 is a block diagram for explaining an example of an apparatus for recording and playing back AV information including digital TV broadcast program and the like on and from an information recording medium (optical disc, hard disc, or the like) using the data structure according to the embodiment of the present invention;
FIG. 19 is a flow chart (overall operation process flow) for explaining an example of the overall operation of the apparatus shown in FIG. 18;
FIG. 20 is a flowchart explaining an example of contents of editing process ST28 shown in FIG. 19;
FIG. 21 is a flow chart (recording flow) for explaining an example of a recording operation (part 1) of the apparatus shown in FIG. 18;
FIG. 22 is a flow chart (recording flow) for explaining an example of a recording operation (part 2) of the apparatus shown in FIG. 18;
FIG. 23 is a flow chart (interrupt process flow) for explaining an example of an interrupt process in the operation of the apparatus shown in FIG. 18;
FIG. 24 is a flow chart (buffer fetch process flow) for explaining an example of the contents of a buffer fetch process ST130 shown in FIG. 22;
FIG. 25 is a flowchart explaining a pre-process (part 1) of recording of information into a disk-shaped information storage medium shown in FIG. 1A;
FIG. 26 is a flowchart explaining a pre-process (part 2) of recording of information into a disk-shaped information storage medium shown in FIG. 1A;
FIG. 27 is a flowchart explaining an example of contents of creating process ST120 for stream information VSTI and ASTI shown in FIG. 22;
FIG. 28 is a flowchart explaining an example of contents of creating process for stream file information SFI or ESFI in recording end process ST150 shown in FIG. 22;
FIG. 29 is a flowchart explaining an example of a manner of creating a program including process of setting ID (ST170) to be referred to at the time of playback in the case of permitting coexistence in program and play list unit;
FIG. 30 is a flowchart explaining an example of a manner of creating a program including process of setting ID (ST170) to be referred to at the time of playback in the case of inhibiting coexistence in program chain unit;
FIG. 31 is a flowchart explaining an example of a manner of creating a program including process of setting ID (ST170) to be referred to at the time of playback in the case of permitting coexistence in cell unit;
FIG. 32 is a flowchart explaining an example of playback process (part 1) of the apparatus in FIG. 18 (overall playback operation flow referring to APP_NAME);
FIG. 33 is a flowchart explaining an example of playback process (part 2) of the apparatus in FIG. 18 (overall playback operation flow referring to APP_NAME);
FIG. 34 is a flowchart explaining an example of cell playback process (part 1) of the apparatus in FIG. 18 (cell playback process flow using both ADR_OFS of logic block unit and packet unit);
FIG. 35 is a flowchart explaining an example of cell playback process (part 2) of the apparatus in FIG. 18 (cell playback process flow using both ADR_OFS of logic block unit and packet unit);
FIG. 36 is a view for explaining an example of the data structure of a program map table PMT that can be used by the apparatus shown in FIG. 18;
FIG. 37 is a view showing an example of the contents of a digital copy control descriptor that can be used by the PMT shown in FIG. 36 and the like (service description table SDT, event information table EIT, and the like);
FIG. 38 is a view for explaining an application example of digital copy control to video data;
FIG. 39 is a view for explaining an application example of digital copy control to audio data;
FIG. 40 is a view explaining a data structure example of an event information table EIT usable in the apparatus in FIG. 18;
FIG. 41 is a view explaining an example of contents of a component group descriptor;
FIG. 42 is a view showing an example of the contents of a component descriptor that can be used by the PMT shown in FIG. 36 and the like (event information table EIT shown in FIG. 40 and the like);
FIG. 43 is a view for explaining an example of the contents of component types shown in FIG. 42;
FIG. 44 is a view explaining an example of contents of a registration descriptor;
FIG. 45 is a view explaining an example of contents of a short-format event descriptor;
FIG. 46 is a flowchart explaining an example of overall data transfer operation (part 1) of the apparatus in FIG. 18 (overall transfer operation flow referring to APP_NAME);
FIG. 47 is a flowchart explaining an example of overall data transfer operation (part 2) of the apparatus in FIG. 18 (overall transfer operation flow referring to APP_NAME);
FIG. 48 is a flowchart explaining a specific example (part 1) of cell transfer process (ST320) shown in FIG. 47 (cell transfer process flow using ADR_OFS of logic block unit and packet unit);
FIG. 49 is a flowchart explaining a specific example (part 2) of cell transfer process (ST320) shown in FIG. 47 (cell transfer process flow using ADR_OFS of logic block unit and packet unit);
FIG. 50 is a flow chart (process flow upon time search) for explaining an example of a time search process (a search conducted based on a playback time designated by the user) with respect to already recorded stream information of a digital TV broadcast program or the like in the apparatus shown in FIG. 18;
FIG. 51 is a process explaining an example of contents of APP_NAME shown in FIG. 8;
FIG. 52 is a flowchart explaining a process of initializing the disk-shaped information storage medium shown in FIGS. 1A to 1H (initializing process flow);
FIGS. 53A to 53H are views for explaining another example of the configuration of a data unit ESOBU for the stream object ESOB;
FIGS. 54A to 54D are views for explaining another example of the configuration of management information EHDVR_MG recorded on AV data management information recording area 130 shown in FIG. 1;
FIG. 55 exemplifies contents of the extended video manager information management table EVMGI_MAT shown in FIG. 54C;
FIG. 56 exemplifies contents of the extended play list search pointer EPL_SRP shown in FIG. 54D;
FIG. 57 exemplifies contents of the play list resume marker information EPL_RSM_MRKI shown in FIG. 56;
FIGS. 58A to 58E exemplify contents of the extended movie AV file information table EM_AVFIT shown in FIG. 54B;
FIG. 59 exemplifies contents of the extended movie video object general information EM_VOB_GI shown in FIG. 58D;
FIG. 60 exemplifies contents of the extended video object time map general information EVOB_TMAP_GI shown in FIG. 58E;
FIGS. 61A to 61E exemplify contents of the extended still picture AV file information table ES_AVFIT shown in FIG. 54B;
FIGS. 62A to 62F exemplify contents of the extended stream file information table ESTR_FIT shown in FIG. 54B;
FIGS. 63A to 63G exemplify contents of the extended stream object information ESOBI shown in FIG. 62E;
FIG. 64 exemplifies contents of the extended stream object information general information ESOBI_GI shown in FIG. 63C;
FIG. 65 exemplifies contents of the extended stream object type ESOB_TY shown in FIG. 64;
FIG. 66 exemplifies contents of the copy control ' information CP_CTRL_INFO shown in FIG. 64;
FIG. 67 exemplifies contents of extended stream object elementary stream information ESOB_ESI for video ES shown in FIG. 64;
FIG. 68 exemplifies contents of extended stream object elementary stream information ESOB_ESI for audio ES shown in FIG. 64;
FIG. 69 exemplifies contents of extended stream object elementary stream information ESOB_ESI for other ES shown in FIG. 64;
FIG. 70 exemplifies contents of stream type information ES_TY shown in each of FIGS. 67 to 69;
FIG. 71 exemplifies contents of the video attribute information V_ATR shown in FIG. 67;
FIG. 72 exemplifies contents of the audio attribute information A_ATR shown in FIG. 68;
FIG. 73 exemplifies contents of the grouping information general information GPI_GI shown in FIG. 63G;
FIG. 74 exemplifies contents of the elementary stream packet identifier ES_PID shown in FIG. 63G;
FIG. 75 exemplifies contents of the extended stream object time map general information ESOB_TMAP_GI shown in FIG. 63B;
FIG. 76 exemplifies contents of the extended elementary stream time map general information ES_TMAP_GI shown in FIG. 63B;
FIGS. 77A to 77F exemplify contents of the extended program chain information EPGCI or EORG_PGCI shown in FIG. 54B;
FIG. 78 exemplifies contents of the extended program chain general information EPGC_GI shown in FIG. 77B;
FIG. 79 exemplifies contents of the extended program information EPGI shown in FIG. 77B;
FIG. 80 exemplifies contents of the program resume marker information PG_RSM_MRKI shown in FIG. 79;
FIGS. 81A to 81F exemplify contents of the extended video time map information table EVTMAPIT shown in FIG. 54B; and
FIGS. 82A to 82I exemplify contents of the extended stream time map information table ESTMAPIT shown in FIG. 54B.

Embodiments of an information recording medium, an information recording method, an information recording apparatus, an information playback method and an information playback apparatus of the present invention will now be described in detail hereinafter with reference to the accompanying drawings.

In digital television broadcast and wired broadcast using the Internet or the like, compressed moving pictures are broadcast (distributed). A common basic format, that is, a transport stream TS is divided into a packet management data portion and a payload. The payload contains the data to be played back in a scrambled state. According to one of digital broadcasting systems, ARIB (Association of Radio Industries and Businesses), program association table PAT, program map table PMT, and service information SI are not scrambled. It is designed to create various items of management information by using the description of PMT and SI (service description table SDT, event information table EIT, bouquet association table BAT).

Object of playback of digital broadcast contents includes MPEG video data, Dolby AC3(R) audio data, MPEG audio data, and data broadcast data. Not relating to a direct object of playback, PAT, PMT, SI and other information (broadcast information) necessary for playback are contained in the digital broadcast contents. Further, PAT includes packet identification information PID of PMT in each program, and PID of video data and audio data is recorded in PMT.

An ordinary procedure of playback in set-top box STB or the like is, for example, as follows. By the information of electronic program guide EPG or the like, the user determines a desired program, then PAT is read in at start time of desired program, the PID of the PMT belonging to the desired program is determined on the basis of this data, the desired PMT is read out according to the PID, and the PID of the contained video or audio/video packet to be played back is determined. Based on the PMT and SI, the attribute of video and/or audio is read out, and set in each decoder, and the video and/or audio data is taken out and played back according to the PID. Herein, the PAT, PMT, SI and others are used also in the midst of playback, they are transmitted in every several hundred ms.

When recording the data in disk media such as DVD-RAM, preferably, the broadcast data is directly recorded as digital data. Different from the existing VR (video recording) format, the embodiment of the invention proposes extended stream recording ESR as a format for recording the stream directly. This ESR is merging of the existing stream recording SR and the existing video recording VR, and it is applicable to stream recording of digital broadcast while making the use of existing VR resources.

Embodiments of the invention conforming to this ESR format will be described in detail below while referring to the accompanying drawings.

FIGS. 1A to 1I are views for explaining the data structure according to an embodiment of the present invention. As disc-shaped information recording medium 100 (FIG. 1A), recordable optical discs such as a DVD-RAM, DVD-RW, DVD-R, and the like, and recordable magnetic discs such as a hard disc and the like are available. The following explanation will be given taking an optical disc such as a DVD-RAM or the like as an example.

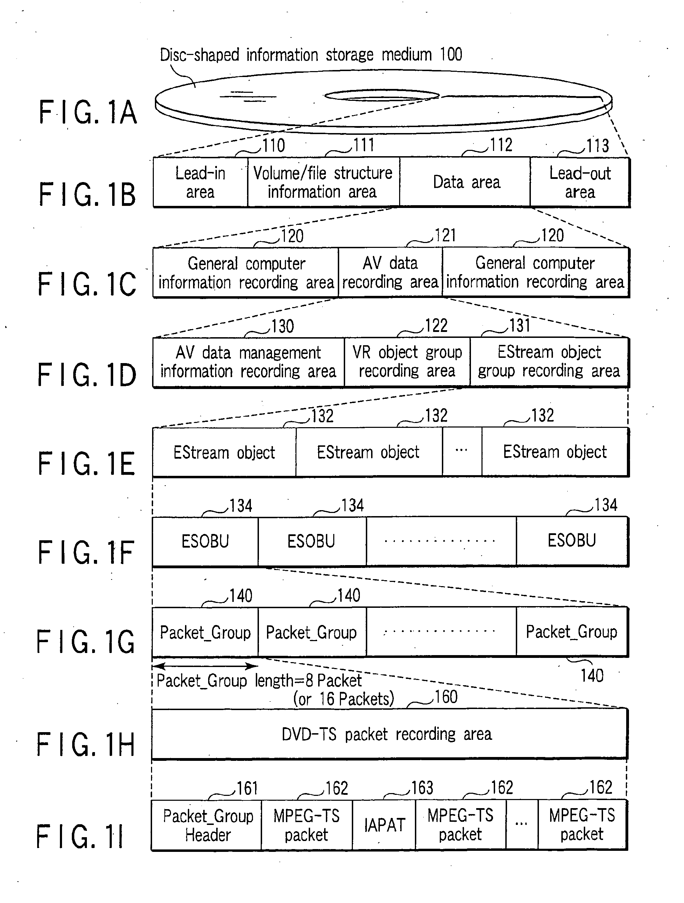

Disc 100 has lead-in area 110, volume/file structure information area 111, data area 112, and lead-out area 113 from its inner periphery side toward the outer periphery side (FIG. 1B). Volume/file structure information area 111 stores a file system. The file system includes information indicating the recording locations of files. Recorded contents are stored in data area 112 (FIG. 1C).

Data area 112 is divided into areas 120 that record general computer data, and area 121 that records AV data. AV data recording area 121 includes AV data management information area 130 that stores a file (VMG/ESMG file) used to manage AV data, VR object group recording area 122 that records object data VOBS files (VRO files) complying with the video recording standard, and EStream object group recording area 131 that records stream objects (ESOBS: Extend Stream Object Stream) compatible to digital broadcast (FIG. 1D). That is, in this embodiment, stream objects of digital broadcast are recorded as EStream objects (ESOBS) 132 as files independent from VR objects (FIG. 1E).

Each ESOBS 131 is made up of one or more EStream Objects (ESOBs) 132. Each EStream object (ESOB) 132 is made up of one or more data units (ESOBU: Extend Stream Object Unit) 134 each of which serves as an access unit to disc 100 (FIG. 1F). Each data unit (ESOBU) 134 is made up of one or more pack groups Packet_Group, each of which includes a group of a plurality of TS packets (FIG. 1G).

In this embodiment, each packet group 140 includes a group of eight LBs (logical Blocks). If one LB size is 2 kbytes, the size of each packet group 140 is 16 kbytes. This size is equal to the ECC block size in the video recording standard. If the ECC block size is 32 kbytes, each packet group 140 can include 16 LBs corresponding to 32 kbytes. If the ECC block size is 64 kbytes, each packet group 140 can include 32 LBs corresponding to 64 kbytes.

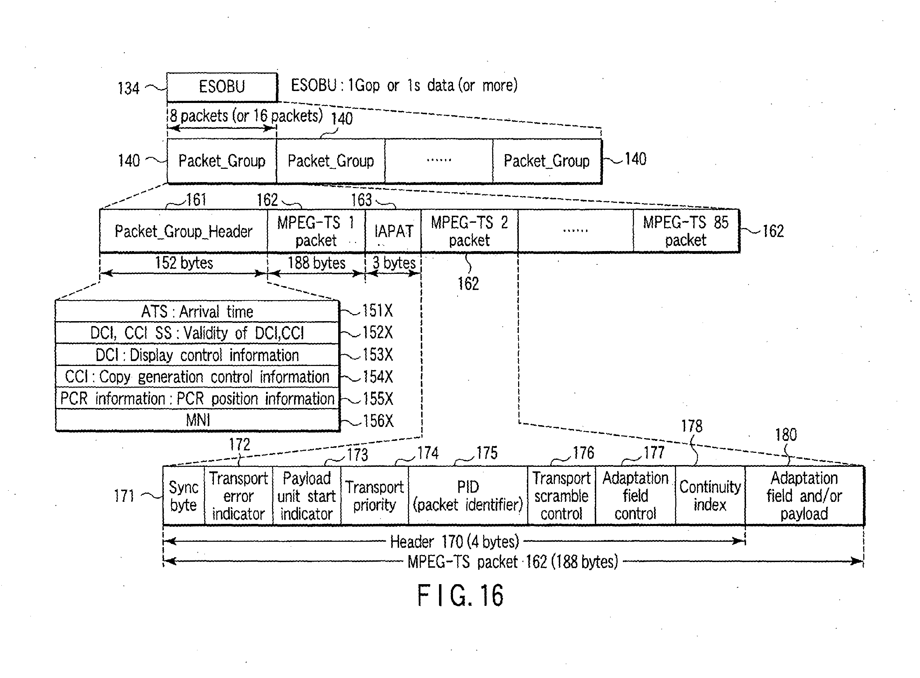

Each packet group 140 forms packet recording area (DVD-TS packet recording area) 160 in stream recording proposed by the present invention (FIG. 1H). The DVD-TS packet recording area 160 can be formed of packet group header 161, a plurality of (e.g., 85) MPEG-TS packets 162, and a plurality of (e.g., 84) pieces of packet arrival time difference information (IAPAT: Incremental Packet Arrival Time) (FIG. 1I). The contents of packet group 140 will be described in detail later with reference to FIG. 16.

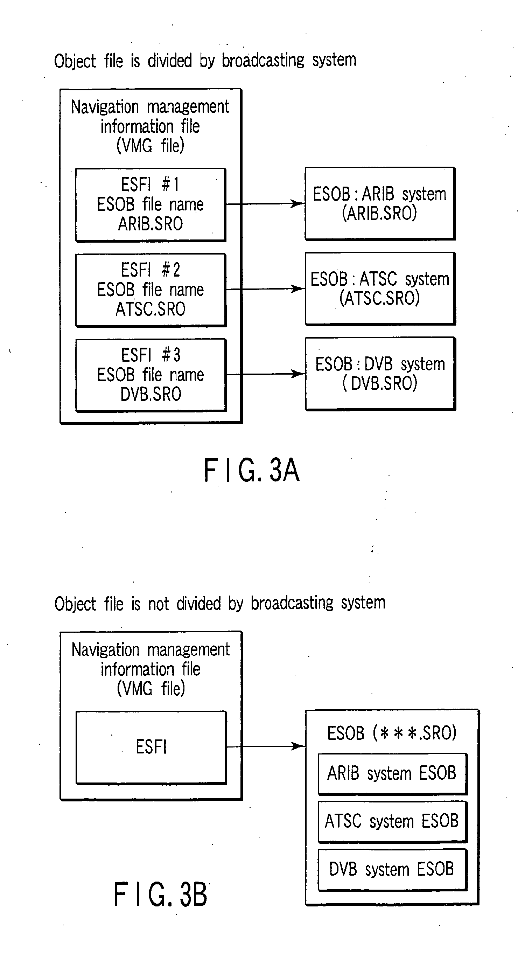

Herein, the DVD-Video (ROM Video) has VIDEO-TS, and the DVD-RTR (record-playback DVD) has DVD-RTAV, and thus a recording file directory is different for each format. In the extended stream recording ESR for digital broadcast, similarly, a recording file is recorded in a directory (not shown) of, for example, DVD-HDR. That is, the object of digital broadcast is recording in a separate file from VR object. Further, two systems may be considered for recording as the separate file in each digital broadcast system as shown in FIG. 3A, or recording all in one object file regardless of digital broadcast system (not separating object file in each digital broadcast system) as shown in FIG. 3B.

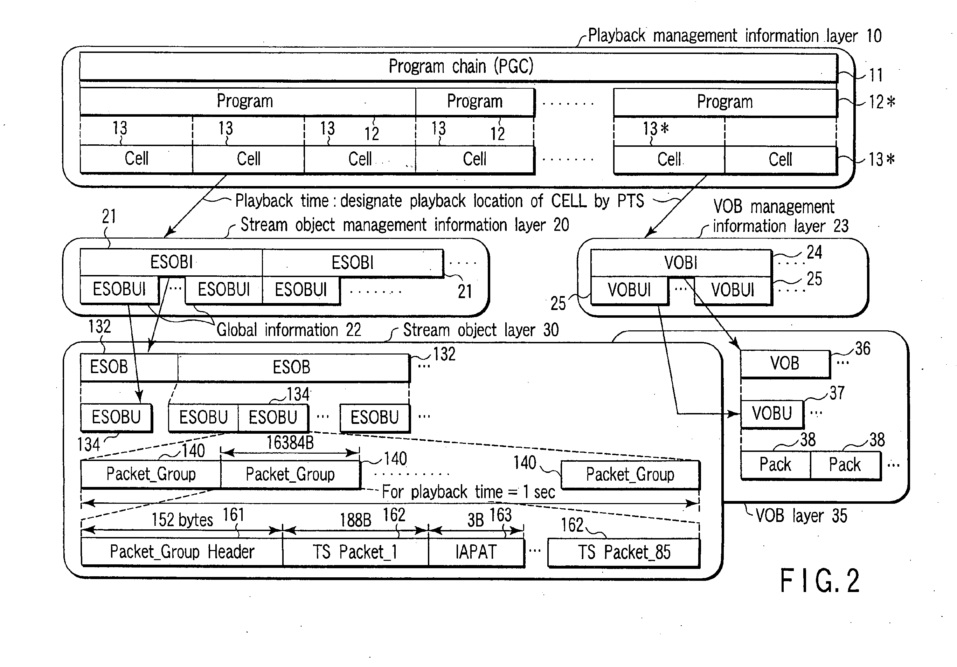

FIG. 2 is a view for explaining the relationship among a playback management information layer, object management information layer, and object layer in the data structure according to the embodiment of the present invention. Management information (VMG/ESMG file) recorded on AV data management information recording area 130 in FIG. 1D has playback management information layer 10 used to manage the playback sequences of both the recorded contents based on the video recording standard and the stream recording standard based on the present invention.

That is, a group of one or more cells 13 each of which serves as a playback unit of stream-recorded objects forms program 12, and a group of one or more cells 13* each of which serves as a playback unit of video-recorded objects forms program 12*. A sequence (playback sequence) of these programs 12 and 12* is managed by management information PGCI of program chain (PGC) 11.

Even when the user wants to start playback from the middle of either cell 13 of the stream recording or cell 13* of the video recording, he or she can designate the playback location using a playback time PTS.

That is, when playback is to start from the middle of cell 13 of the stream recording using the playback time PTS, stream object (ESOB) 132 in stream object layer 30 is designated via stream object information ESOBI 21 in stream object management information layer 20, and stream object unit ESOBU 134 in stream object layer 30 is designated via stream object unit information ESOBUI 22 in stream object management information layer 20. When the ESOB 132 and its ESOBU 134 are designated, the playback start location is specified. The ESOBUI in this case may be restated as global information 22.

This ESOBU 134 is formed of one or more packet groups 140. The ESOBU 134 corresponds to, e.g., 1 or 2 GOP data. Or it ranges from the beginning of one I picture to the beginning of I picture of integer items ahead. If no GOP delimiter is found, the ESOBU 134 is delimited in units corresponding to a data amount for a maximum of 1 sec as a playback time. In this way, overflow of each information field is prevented.

Each packet group 140 may be formed of 8 LBs (16384 bytes), and has packet group header 161 at its head position. Packet group header 161 is followed by a plurality of transport stream packets (TS_Packet) 162 and a plurality of pieces of packet arrival time difference information (IAPAT) 163. These TS packets 162 store stream recording recorded contents.

On the other hand, when playback is to start from the middle of cell 13* of the video recording using the playback time PTS, video object VOB 36 in video object layer 35 is designated via video object information VOBI 24 in video object (VOB) management information layer 23, and video object unit (VOBU) 37 in video object layer 35 is designated via video object unit information (VOBUI) 25 in video object management information layer 23. When the VOB 36 and its VOBU 37 are designated, the playback start location is specified. The VOBU 37 may be formed of a plurality of packets 38, which store video recording recorded contents.

As will be described in detail later, when playback is to start from the middle of cell 13 of the stream recording, the playback start location can be designated using a time in units of the number of fields by ESOBU_PB_TM (not shown). On the other hand, when the playback is to start from the middle of cell 13* of the video recording, the playback start location can be designated by VOBU_PB_TM (not shown) in time map information TMAPI specified by the video recording standard.

The contents of FIG. 2 can be summarized as follows. That is, stream recording management data PCGI can be recorded in a file common to video recording, and stream recording can be controlled common to video recording. Also, stream recording and video recording can be linked for respective cells, and the playback location in each of stream recording and video recording can be designated by a playback time.

Irrespective of the recording method (stream or video recording), after a given broadcast program (program) is recorded on disc 100, special playback requirements (e.g., the user wants to start playback (time search) from a desired time or to make fast-forwarding (FF)/fast-rewinding (FR) in a desired program) are often generated. To meet such requirements, special management information is required to manage recorded data.

That is, the object of digital broadcast is recorded as the stream of the extend stream object set (ESOBS) 132 in a separate file from the VR object. As shown in FIG. 2, management data of ESOBS is recorded in a common VMG file to VR, and is controlled commonly to VR and linked in cell unit, and the playback location is specified by the playback time unit.

The ESOBS 131 is composed of one or more extended stream objects (ESOBs) 132, and the ESOB 132 corresponds, for example, to one program. The ESOB 132 is composed of one or more data units (ESOBUs) 134, and the ESOBU 134 corresponds to object data for 1 second, one or two GOP data units, or one or more I pictures. However, if the transfer rate is low, one GOP may not be sent within 1 second (in the VR, the data unit can be set freely because of internal encoding, but in the case of digital broadcast, since the broadcasting station is the encoding side, and it may not be known which data may be transferred).

On the other hand, when the transfer rate is high, I pictures may be transferred frequently. In such a case, the data unit (ESOBU) 134 is frequently divided, and the management information of the data unit (ESOBU) 134 increases, so that the overall management information may be hypertrophic. Accordingly, the data unit (ESOBU) 134 may be appropriately divided, for example, by 0.4 seconds to 1 second (the minimum limit of 0.4 seconds is applied in other than the final data unit ESOBU of extended stream object ESOB), or by one GOP, or by one or more I pictures.

One data unit (ESOBU) 134 is composed of one or more packet groups 140, and the packet group 140 is composed of eight LBs (one LB = 1 sector: 2048 bytes). The packet group 140 is composed of a packet group header 161, TS packets 162 (85 items), and IAPAT (incremental packet arrival time) 163 (84 items).

Arrival time of each TS packet is, as for the first TS packet in the packet group, the arrival time of the arrival time stamp ATS in the packet group header. As for the second TS packet, the arrival time is expressed by adding IAPAT to this ATS. As for the third and subsequent TS packets, the arrival time is expressed by adding IAPAT to one arrival time before. Thus, as for the arrival time of the second and subsequent TS packets, by cumulatively expressing by the differential information of IAPAT, the IAPAT can be expressed in a relatively small quantity of data (3 bytes), and the entire data quantity is saved substantially (as compared with the case of expressing the arrival time of all TS packets by the ATS).

As explained specifically in FIG. 16, the packet group header 161 includes arrival time (ATS) 151X of the first TS packet in the packet group, display control information (DCI) 153X, copy control information (CCI) 154X, DCI/CCI validity information 152X, manufacturer's information MNFI, presentation time stamp PTS, etc. A navigation management information file (VMG file) may be managed in two methods as shown in FIG. 3A, that is, by dividing the extended stream object (ESOB) file in each broadcasting system (ARIB.SRO file, ATSC.SRO file, DVD.SRO file), or by managing by one object file ***.SRO as shown in FIG. 3B. In the case of FIG. 3B, management information is processed so as to be managed separately in each system.

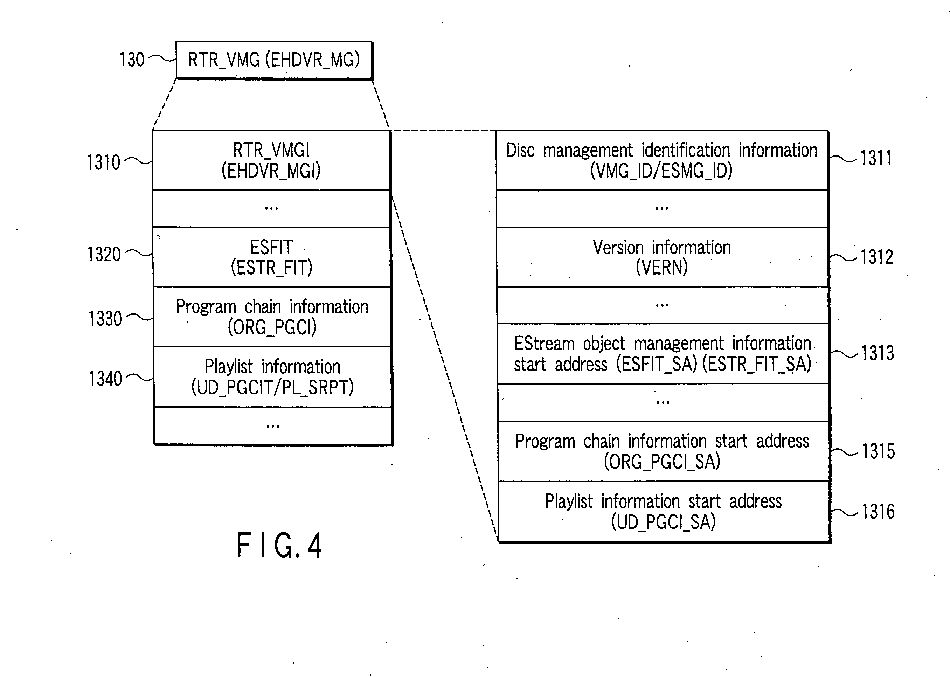

Management information will be explained below by referring to FIGS. 4 to 17.

FIG. 4 is a view for explaining an example of the configuration of a field RTR_VMGI of one management information RTR_VMG recorded on AV data management information recording area 130 shown in FIG. 1D.

Note that stream recording in this embodiment will be abbreviated as ESR (Extended Stream Recording), and video recording will be abbreviated as VR (Video Recording). Then, management information of ESR data is saved in the RTR_VMG 130, and is managed in the same way as VR data, as shown in FIG. 4.

RTR_VMG 130 includes video manager information (RTR_VMGI) 1310, stream file information table (ESFIT: Extend Stream File Information Table) 1320, original program chain information (ORG_PGCI) 1330, and play list information (PL_SRPT: or user-defined program information table: UD_PGCIT) 1340.

Note that the play list and user-defined program chain have substantially equivalent meanings although they have different names, and are synonymous with a play list and user-defined program chain used in the video recording standard. Hence, in the following description, play list related information (PL_SRP and the like) and user-defined program chain related information (UD_PGCIT_SRP and the like) are included as needed.

The RTR_VMGI 1310 includes disc management identification information (VMG_ID/ESMG_ID) 1311, version information (VERN) 1312, EStream object management information start address (ESFIT_SA) 1313, program chain information start address (ORG_PGCI_SA) 1315, and play list information start address (UD_PGCIT_SA) 1316. ESR stream management information is saved in the ESFIT 1320.

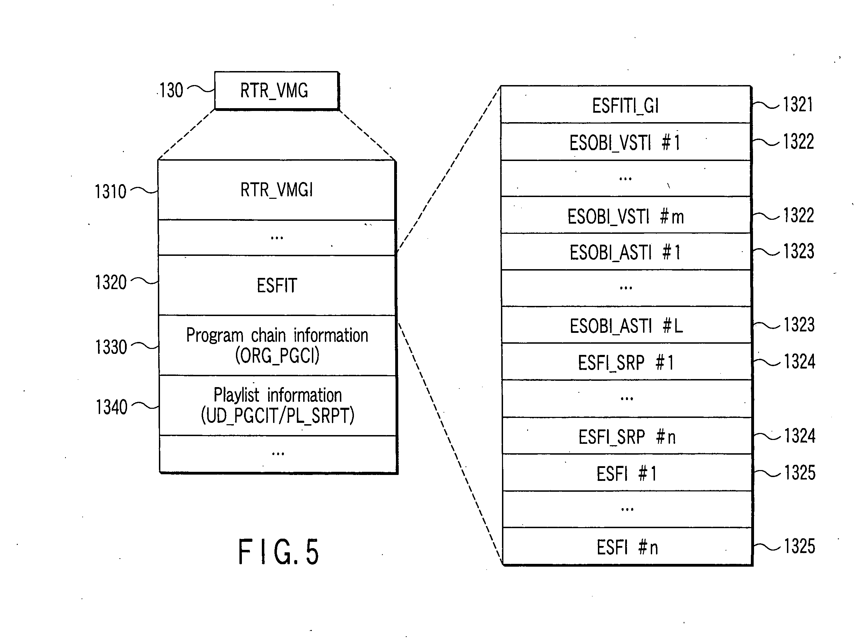

FIG. 5 is a view explaining an example of a configuration of ESFIT 1320 in FIG. 4. This ESFIT 1320 includes stream file information table information general information (ESFITI_GI) 1321, one or more ESOB stream information video status information (ESSOBI_VSTI #1 to #m) 1322, one or more ESOB stream information audio status information (ESOBI_ASTI #1 to #L) 1323, one or more stream file information search pointer (ESFI_SRP) 1324, and one or more extended stream file information (ESFI) 1325. The ESFIT_GI 1321 may be also composed of the number of stream objects ESOBs, number of VSTIs, number of ASTIs, or end address of ESFIT.

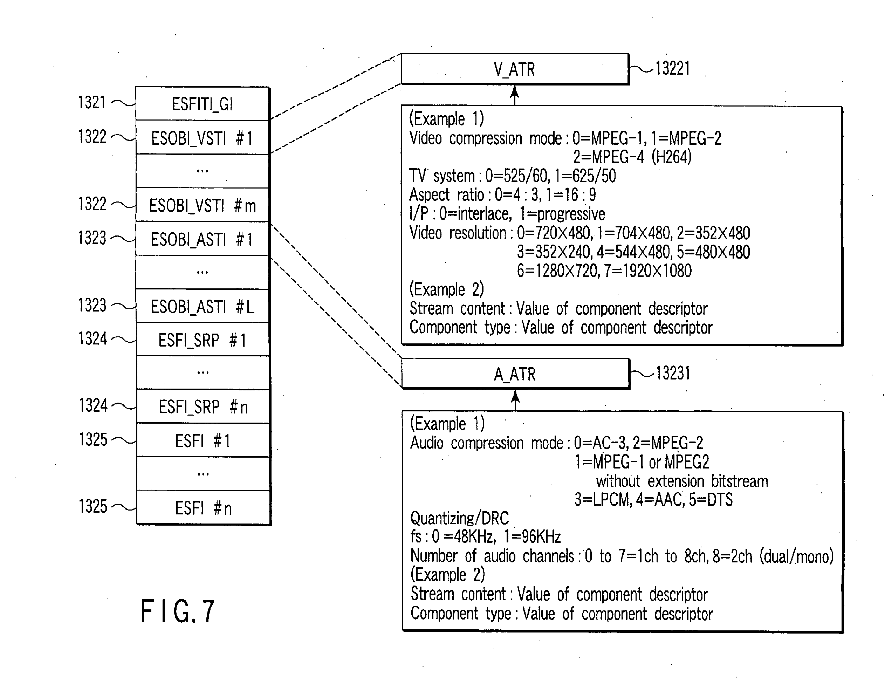

The video status information VSTI and audio status information ASTI are stream attribute information in the stream object ESOB, and the video attribute information can be expressed as VSTI, and audio attribute information can be expressed as ASTI. In the VR standard, stream information STI is composed of one STI by grouping video and audio as one set, but in the case of digital broadcast, a plurality of video and/or audio signals may be included in the broadcast signal, the STI may not be always expressed as a set of video and audio as in the VR standard. Hence the total STI information size can be saved by managing video and audio by different attribute information. The detail of video attribute information V_ATR and audio attribute information A_ATR is described later by referring to FIG. 7.

In the embodiment of the invention, a data structure may be also composed by combining management information VMG of VR and management information ESMG of ESR. Although not shown in the drawing, a movie AV file information table M_AVFIT may be followed by the stream file information table ESFIT, and the ESFIT may be followed by original program chain information ORG PGCI, user definition PGC information table UD_PGCIT, text data manager TXTDT_MG, and manufacturer's information table MNFIT. By such data structure of management information (close to the video recording VR standard), the existing control software resources developed for the recorders conforming to the existing VR standard can be utilized effectively (only by slight modification).

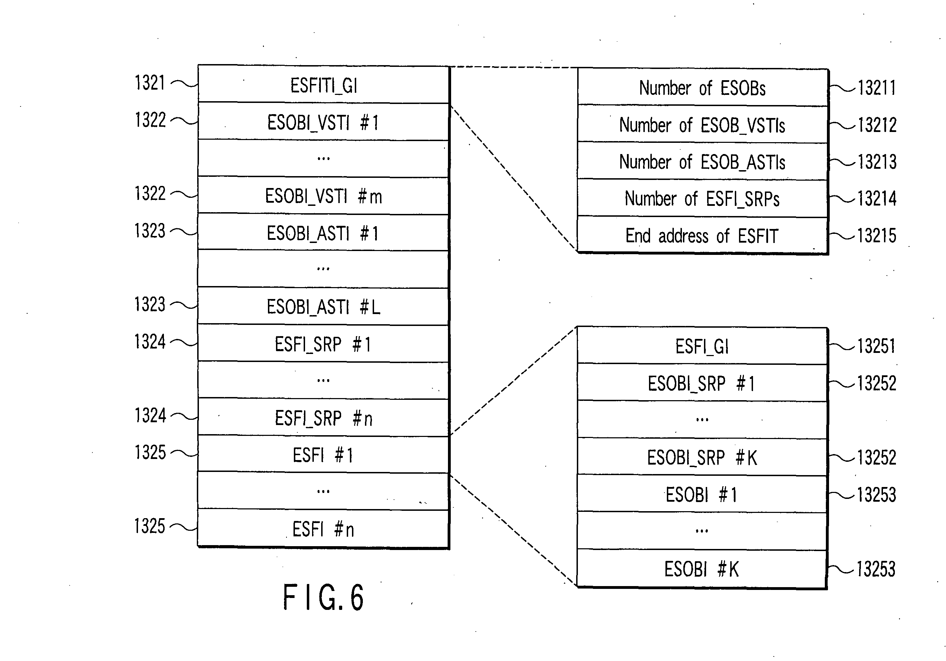

FIG. 6 is a view explaining an example of the configuration of the ESFITI_GI 1321 and ESFI 1325 in FIG. 5.

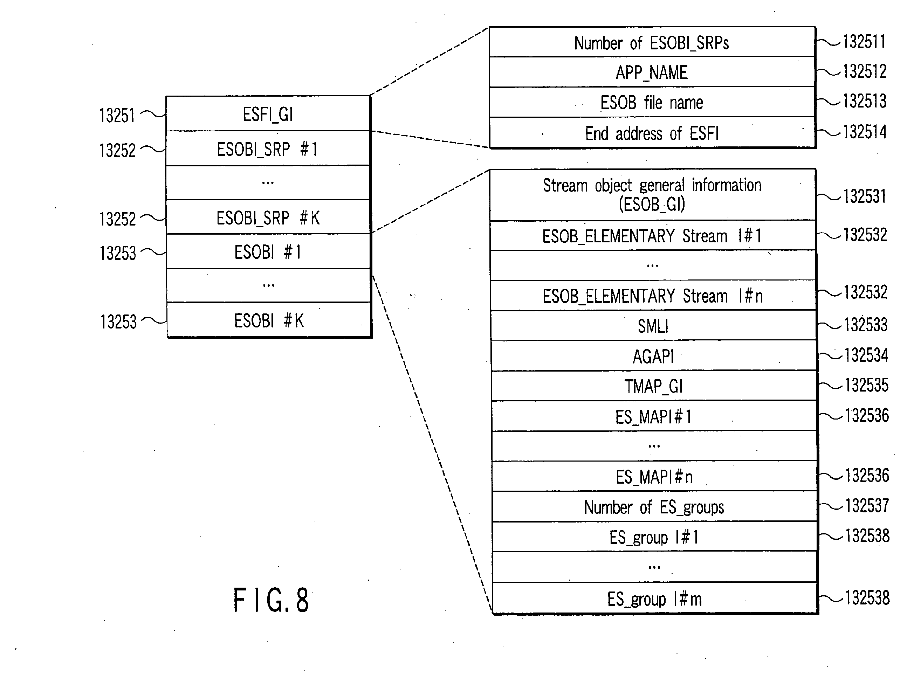

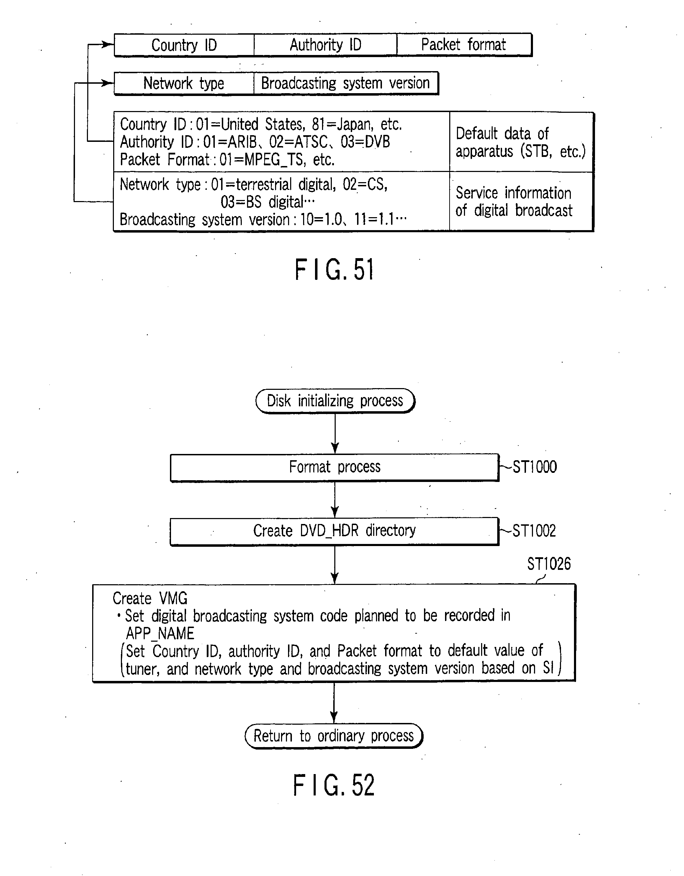

The ESFI 1325 forms a different table for each broadcasting system, each ESFI 1325 is composed of ESFI_GI 13251, and ESOBI search pointers 13252 and ESOBI 13253, and information APP_NAME (FIG. 51) showing the application name is set in ESFI_GI as shown in FIG. 8.

The ESFITI_GI 1321 includes information 13211 showing the number of stream objects ESOBs, information 13212 showing the number of ESOB_VSTIs, information 13213 showing the number of ESOB_ASTIs, information 13214 showing the number of ESFI_SRPs; and information 13215 showing the end address of ESFITs.

The ESFI 1325 includes general information ESFI_GI 13251, one or more stream object information items (ESOBI #1 to #k) 13253, and one or more search pointers (ESOBI_SRP #1 to #k) 13252 corresponding to them (ESOBI #1 to #k).

FIG. 7 is a view explaining an example of the configuration of video attribute information (V_ATR) 13221 included in the stream information (ESOBI_VSTI) 1322, and contents of audio attribute information (A_ATR) 13231 included in the stream information (ESOBI_ASTI) 1323 shown in FIG. 6.

As the attribute information (V_ATR) 13221 of the ESOBI_VSTI 1322, two types may be considered, and example 1 is basically same as VR standard in bit composition, and further includes an identification flag of I/P (interlace/ progressive) and resolution information of 1280 x 720 and 1920 x 1080 to be applicable to HD (high definition). Example 2 is composed so as to make use of SI (service information). That is, without processing data on the SI, it is designed to be set in the V_ATR, and the value of the component descriptor is directly used in setting of the stream content and component type.

The attribute information A_ATR 13231 of the ESOBI_ASTI 1323 is similar to the V_ATR, and example 1 is basically same as VR in bit composition, and additionally to be applicable to HD, sampling frequency 96 kHz is set, and AAC (Advanced Audio Coding) and DTS (Digital Theater Systems@) are added as a compression mode, and in example 2, the value of the component descriptor is directly set in the A_ATR. The V_ATR 13221 includes information showing a video compression mode (MPEG-1, MPEG-2, MPEG-4, etc.), information showing a TV system (NTSC or PAL, SD or HD, etc.), information showing an aspect ratio, information showing a video resolution, and scan identification information I/P of interlace/ progressive.

Herein, information "0" showing the video compression mode corresponds to MPEG-1, "1" to MPEG-2, and "2" to MPEG-3. Information "0" showing the TV system corresponds to NTSC system of 525 scanning lines and 60 frames per second, and "1" to PAL system of 625 scanning lines and 50 frames per second. Information "0" showing the aspect ratio corresponds to aspect ratio of 4:3, and "1" to aspect ratio of 16:8. Information "0" showing the identification information I/P corresponds to progressive, and "1" to interlace. Information "0" showing the video resolution corresponds to horizontal x vertical resolution of 720 x 480 lines, "1" to horizontal x vertical resolution of 704 x 480 lines, "2" to horizontal x vertical resolution of 352 x 480 lines, "3" to horizontal x vertical resolution of 352 x 240 lines, "4" to horizontal x vertical resolution of 544 x 480 lines, "5" to horizontal x vertical resolution of 480 x 480 lines, "6" to horizontal x vertical resolution of 1280 x 720 lines, and "7" to horizontal x vertical resolution of 1920 x 1080 lines. Herein, the progressive scan of 720 x 480 lines, or the interlace or progressive scan of 1920 x 1080 lines corresponds to the HD resolution equivalent to Hi-Vision. Other scans are equivalent to SD solution.

In the ESOBI_ASTI 1323, same as in video, the A_ATR 13231 includes information showing an audio compression mode (AC-3 or MPEG-1 or MPEG-2 without extended bit stream or ordinary MPEG-2, or LPCM or AAC or DTS, etc.), information showing a quantizing/DCR system, and information showing the number of audio channels.

Herein, information "0" showing the audio compression mode corresponds to AC-3, "1" to MPEG-1 or MPEG-2 without extended bit stream, "2" to MPEG-2, "3" to LPCM, "4" to AAC, and "5" to DTS. Information "0" showing the quantizing/DRC system corresponds to sampling frequency of fs = 48 kHz, and "1" to sampling frequency of fs = 96 kHz. Numerals "0" to "7" of audio channel correspond to ch1 to ch8, and "8" indicates two channels of dual and monaural modes.

FIG. 8 is a view explaining an example of the configuration of the ESFI_GI 13251 and ESOBI 13253 in FIG. 6.

The ESFI_GI 13251 includes information 132511 showing the number of stream object information search pointers ESSOBI_SRPs, information 132512 showing the application name APP_NAME, information 132513 showing the ESOB file name, and information 132514 showing the end address of ESFI.

The ESOBI 13253 includes stream object general information (ESOB_GI) 132531, one or more items of ESOB elementary stream information (#1 to #n) 132532, information 132533 showing seamless information SMLI, information 132534 showing audio gap information AGAPI, information 132535 showing time map general information TMAP_GI, information 132536 showing elementary stream map information ES_MAPI (#1 to #n), information 132537 showing the number of ES groups, and information 132538 showing the ES group information (#1 to #n).

Herein, the storing position of the application name APP_NAME 132511 is not limited to the ESFI_GI 13251. When using a common APP_NAME in the entire disk, it may be stored in the ESFI_GI and/or a VMGI_MAT (management information in part of the RTR_VMGI 1310 in FIG. 4).

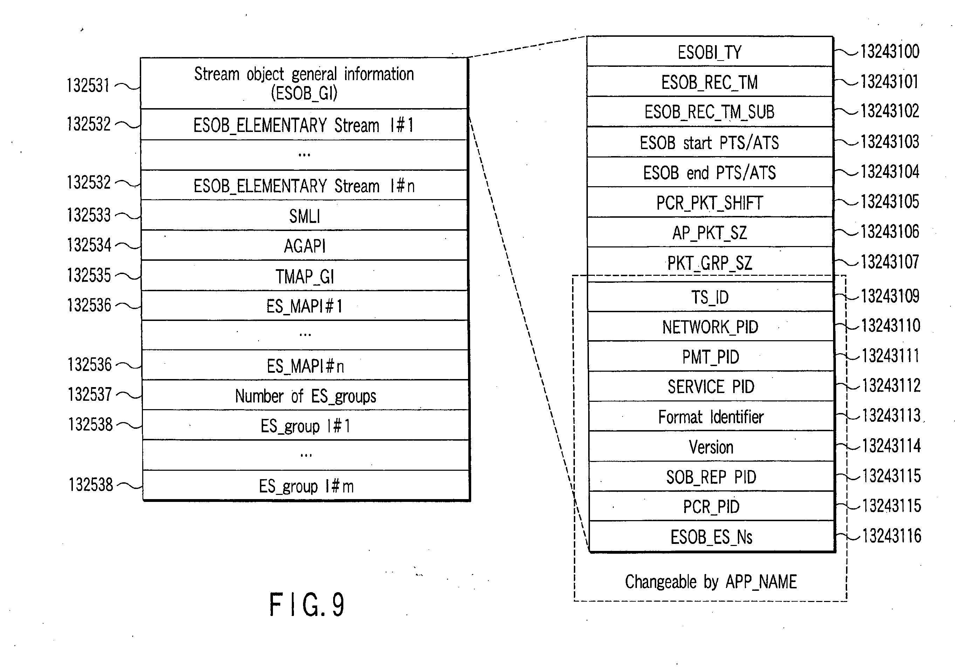

FIG. 9 is a view explaining an example of the configuration of the ESOBI 132531 (in particular, ESOB_GI 132531) shown in FIG. 8.

The stream object general information (ESOB_GI) 132531 includes ESOBI type (ESOBI_TY) 13243100, stream object (ESOB) record start time (ESBO_REC_TM) 13243101, stream object (ESOB) record time subunit (ESBO_REC_TM_SUB) 13243102, stream object (ESOB) start PTS (start time) or ATS (arrival time) 13243103, and stream object (ESOB) end PTS or ATS 13243104.

The ESOB_GI 132531 further includes PCR packet shift (PCR_PKT_SHIFT) 13243105, packet size AP_PKT_SZ (188 bytes in the case of present TS packet) 13243106, packet group size PKT_GRP_SZ (size equivalent to 85 bytes in the case of present TS packet) 13243107, transport stream identifier (TS_ID) 13243109, network packet identifier (NETWORK_PID) 13243110, PMT packet identifier (PMT_PID) 13243111, service packet identifier (SERVICE_PID) 13243112, format identifier 13243113, version (to set the value of registration descriptor showing type of data in the case of external input, or the data type specific to the tuner in the case of internal tuner) 13243114, representative packet identifier SOB_REP_PID of SOB (PID of stream representing the SOB to be played back, or component group number; in the case of PID, record start time of ESOB_GI, used when creating PTS or ATS upon start or end of stream object ESOB) 13243115, PCR packet identifier (PCR_PID) 13243115, and the number of ESOB element streams (ESOB_ES_Ns) 13243116.

When the application name APP_NAME differs in each stream object (ESOB) (if there are plural application names (APP_NAMEs), that is, when recording plural broadcasting systems), it may be considered that the component element differs in each stream object (ESOB) in part of ESOBI composition (transport stream identifier (TS_ID) 13243109, network packet identifier (NETWORK_PID) 13243110, PMT packet identifier (PMT_PID) 132343111, service packet identifier (SERVICE_PID) 132343112, format identifier 132343113, version 132343114, SOB representative packet identifier (SOB_REP_PID) 132343115, PCR packet identifier (PCR_PID) 132343115, and the number of ESOB elementary streams (EESOB_ES_Ns) 132343116).

The application name APP_NAME is composed of country ID (code for identifying a nation: for example, international telephone code "01" for the United States, "81" for Japan, etc.), authority ID (broadcasting system: "01" for ARIB, "02" for ATSC, "03" for DVB), packet format (stream packet format: "01" for MPEG_TS, etc.), network type (type of network: "01" for terrestrial digital, "02" for CS, "03" for BS digital, etc.), and broadcasting system version ("10" for 1.0, "11" for 1.1, etc.). Of them, the country ID, authority ID, and packet format must be provided with default values in the apparatus (STB, etc.), but otherwise the country ID, authority ID, and packet format may be composed from received data. When the broadcast system is input from another apparatus by digital input (1394 I/F), it may be changed to the original system of the apparatus depending on the system at the time of broadcasting (when changed to original partial TS), and the data may be recorded and transmitted accordingly. In such a case, the identifier of the apparatus may be provided depending on the network type.

The object data of the stream object ESOB may be a usable broadcasting system. In such a case, a plurality of ESFIs may be provided for each system, and a file name of the object may be given for the ESFI_GI in each ESFI, and the file name may be determined when corresponding to plural systems or by default in each broadcasting system, and only the system name APP_NAME may be recorded. A specific example of contents of APP_NAME including the information for identifying plural systems (authority ID) is described later by referring to FIG. 51.

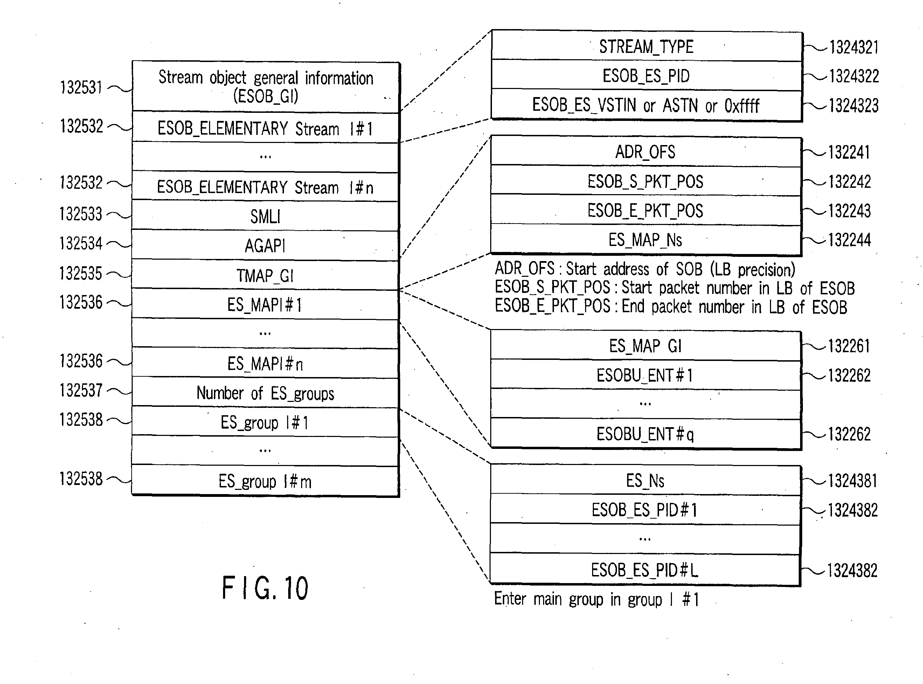

FIG. 10 is a view explaining an example of the configuration of ESOB_GI 132531 shown in FIG. 8 (in particular, ESOB elementary stream (ES) I 132532, ES group I 132538, MAP_GI 132535 and ES_MAPI 132536).

In FIG. 10, the ESOB_ESI 132532 includes stream type (STREAM_TYPE) 1324321, stream PID (ESOB_ES_PID) 1324322, and the number of items of stream information 1324323. The number of items of stream information 1324323 is VSTI number in the case of video (ESOB_ES_VSTIN), ASTI number in the case of audio (ESOB_ES_ASTIN), and 0×ffff otherwise. Herein, as the stream type 1324321, the type written in the PMT can be used.

The group information of elementary stream (ES_group I) 132538 includes the number of elementary streams (ES-Ns) 1324381, and PID of the ESSOB_ES (ESOB_ES_PID) 1324382. It is composed such that the main group is included in the first ES_group #1.

The MAP_GI 132535 includes address offset (ADR_OFS) showing the start address at the beginning of SOB (LB unit of logical block precision) 132241, ESOB_S_PKT_POS (start packet number in LB of ESOB) 132242, ESOB_E_PKT_POS (end packet number in LB of stream object ESOB) 132243, and the number of ES_MAPs (ES_MAP_Ns) 132244. The ESOB_S_PKT_POS and ESOB_E_PKT_POS can be handled as packet number information of the stream object ESOB.

The ES_MAPI 132536 includes general information of elementary stream ES_MAP_GI 132261 and ESOB entry information (ESOB_ENT) 132262.

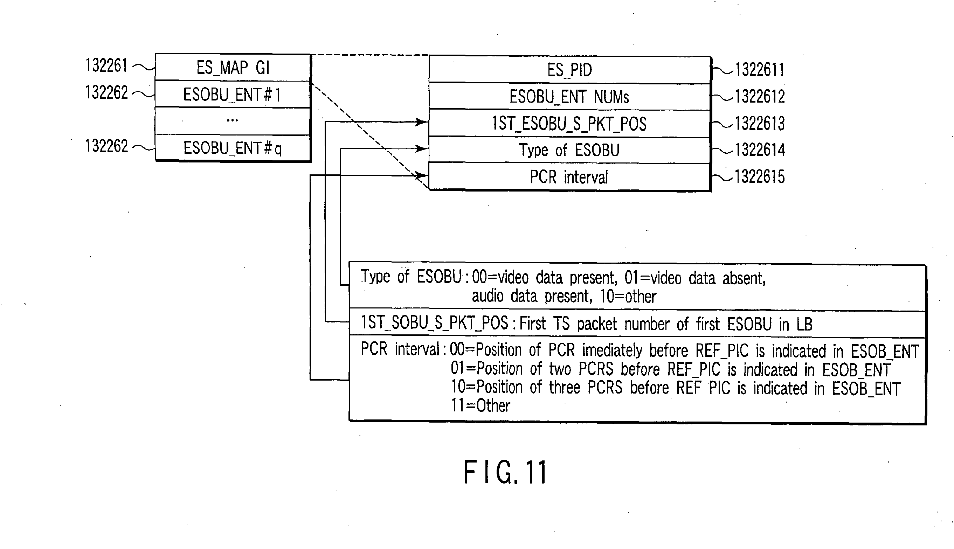

FIG. 11 is a view explaining an example of the configuration of the ES_MAP_GI 132261 shown in FIG. 10.

The ES_MAP_GI 132261 includes ES_PID (PID of the elementary stream ES) 1322611, number of ESOB entries 13223612, IST_ESOBU_S_PKT_POS (TS packet number from the beginning in the packet group of the first TS packet in the first ESOBU in the LB) 1322613, ESOBU type 1322614, and PCR interval shown in ESOBU 1322615.

Three cases of ESOBU are considered, a case of video data, a case of audio data without video data, and a case of other information only, and in the example in FIG. 11, types of ESOBU are indicated as "00," "01," and "10," respectively.

When the PCR interval is "00," the PCR position immediately before (one PCR before) the reference picture REF-PIC (I picture) is indicated in the ESOB_ENT, when it is "01," the PCR position of 2 PCR before the REF-PIC is indicated in the ESOB_ENT, when it is "10," the PCR position of 3 PCR before the REF-PIC is indicated in the ESOB_ENT, and when it is "11," another state is indicated.

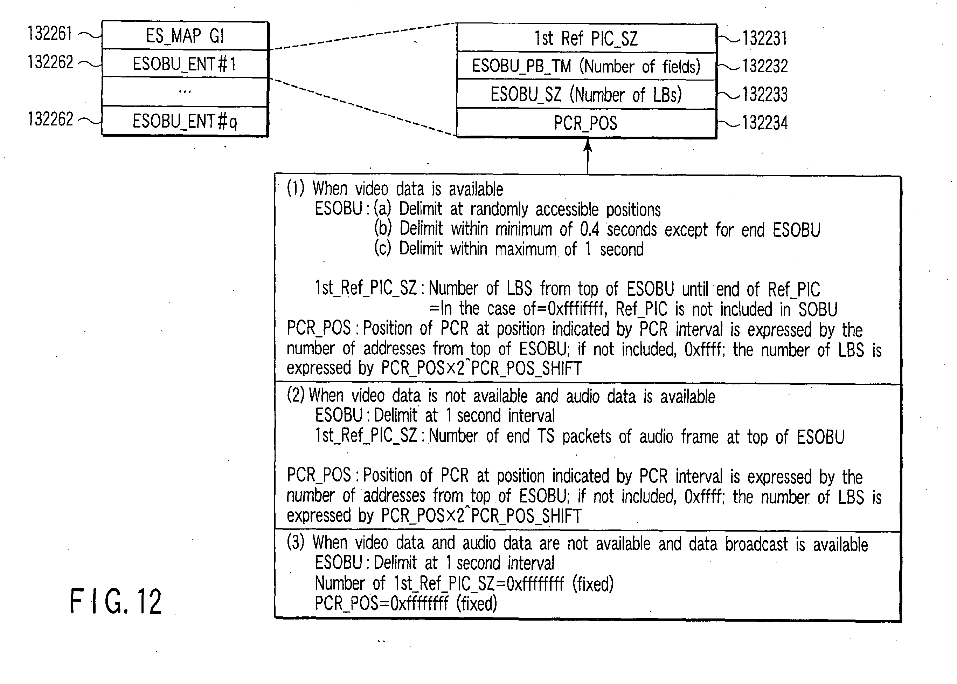

FIG. 12 is a view explaining an example of the configuration of the ESOBU_ENT 132262 shown in FIG. 11.

There are three types of the ESOBU entry information (ESOBU_ENT) 132262 according to the types of ESOBU ("00," "01," "10") shown in FIG. 11.

In the case of video data, the ESOBU_ENT 132261 includes 1st_Ref_PIC_SZ (LB unit) 132231 which is the final address information from the beginning of ESOBU of the first reference picture (I picture, etc.) in the entry, ESOBU playback time (number of fields) ESOBU_PB_TM 132232, ESOBU size (LB unit) ESOBU_SZ 132233, and PCR position (PCR_PS) 132234. Herein, PCR_POS shows the PCR position at the position indicated by PCR interval by the number of addresses from the ESOBU beginning. If no PCR is available, 0×ffff is given.

In the presence of PCR, the number of logic blocks of this PCR position (LB number) can be expressed as:$\text{PCR_POS × 2^PCR_POSSHIFT, or} \text{PCR_POS × 2exp(PCR_POS_SHIFT) (1)}$

Herein, PCR is ahead of the location of the reference picture, and is a position of several units of PCR indicated by the PCR intervals.

As shown in formula (1), by using the exponent of "2" together in expression of the PCR position, a long address can be expressed by a relatively small number of bits of information "PCR_POS_SHIFT."

In the case of audio data without video data, the ESOBU_ENT 132262 includes 1st_Ref_PIC_SZ of the final address information (same as above) from the beginning of ESOBU of the first audio frame in the entry, ESOBU playback time (number of fields) ESOBU_PB_TM, ESOBU size (same as above) ESOBU_SZ, and PCR_POS. In the case of other information only, since entry information is not composed, the ESOBU_ENT 132262 is filled completely with, for example, FF.

### Summing up:

### <1> In the case of video data

ESOBU is (a) divided at a random accessible position (beginning of GOP or beginning of I picture), (b) delimited at the playback time of minimum 0.4 seconds in other than the final ESOBU (in the corresponding SOB), or (c) delimited at the playback time of maximum 1 second.

1st_Ref_PIC_SZ is the number of logic blocks (LB number) from the beginning of the ESOBU to the end of REF_PIC (I picture). If there is no Ref_PIC in the ESOBU (or Ref_PIC is not found), 1st_Ref_PIC_SZ is, for example, 0xffffffff.

PCR_POS refers to the PCR position at the position indicated by PCR intervals, expressed by the number of addresses from the beginning of ESOBU, and it is expressed in the unit of number of logic blocks (LB number) in formula (1). If no PCR is available in the ESOBU, PCR_POS is, for example, 0×ffff.

### <2> In the case of audio data without video data

ESOBU is delimited at the playback time of, for example, 1 second.

1st_Ref_PIC_SZ is, for example, expressed by the number of final TS packets of the audio frame at the beginning of the ESOBU.

PCR_POS refers to the PCR position at the position indicated by PCR intervals, expressed by the number of addresses from the beginning of ESOBU, and it is expressed in the unit of number of logic blocks (LB number) in formul'a (1). If no PCR is available in the ESOBU, PCR_POS is, for example, 0×ffff.

### <3> In the case of data broadcast without video data or audio data

ESOBU is delimited at the playback time of, for example, 1 second.

1st_Ref_PIC_SZ is fixed, for example, at 0×ffffffff.

PCR_POS is fixed, for example, at 0×ffffffff.

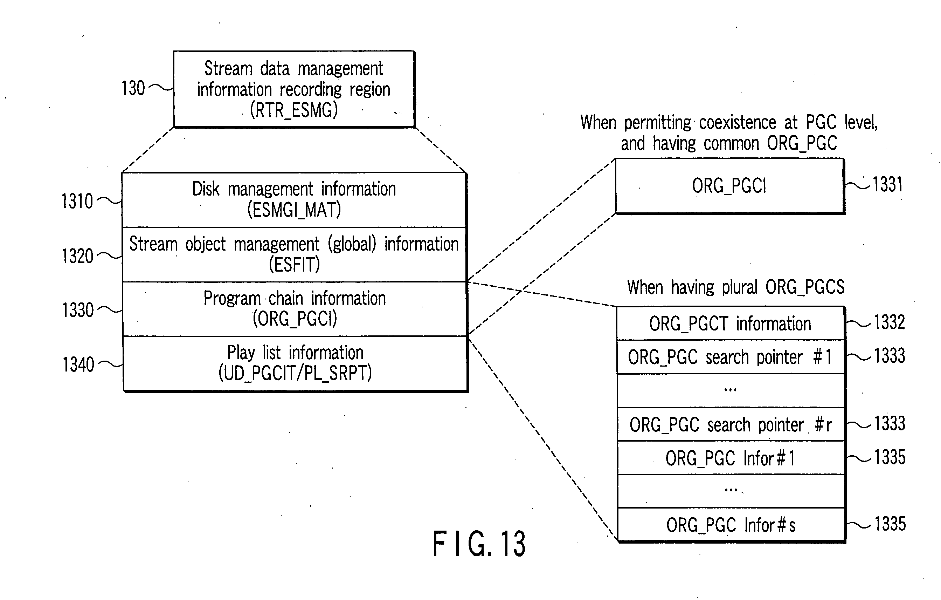

FIG. 13 is a view explaining an example of the configuration of one of other management information (stream data management information RTR_ESMG) to be recorded in the AV data management information recording region 130 shown in FIG. 1. That is, the stream data management information recording region 130 which is part of the AV data management information recording region 130 includes disk management information (ESMGI_MAT) 1310, stream object management information (ESFIT; global information) 1320, program chain information (ORG_PGCI) 1330, and play list information (UD_PGCIT/ PL_SRPT) 1340.

Playback information is PGC information, same as in the ordinary VR format, and original information ORG_PGC is automatically created by the apparatus during recording time, and is set in the recording sequence, and the user definition information UD_PGC is created in the sequence of playback added freely by the user, and hence it is called the play list. These two formats are common in the PGC level, and the PGC format is shown in FIG. 13.

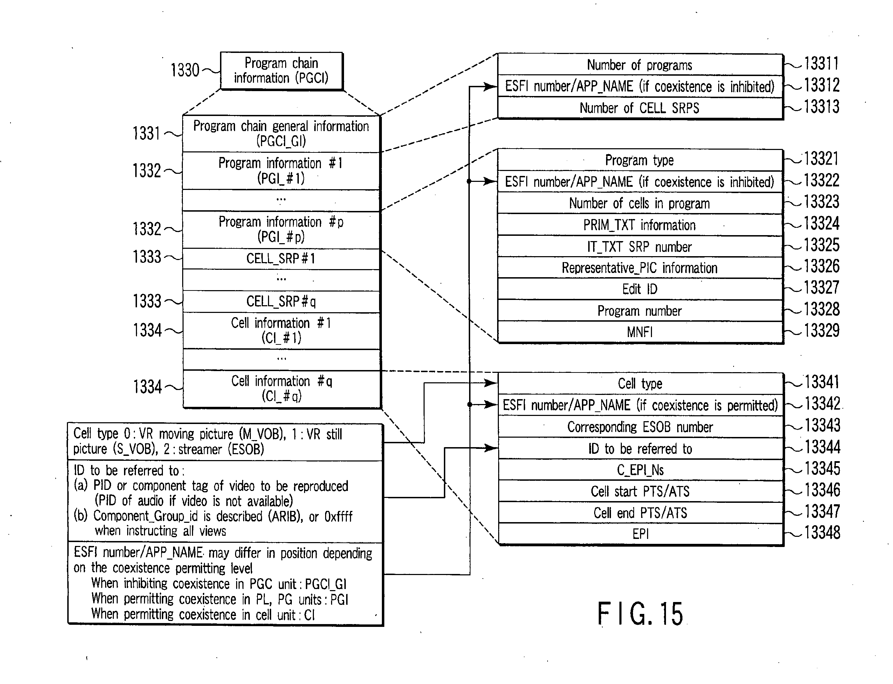

The program chain information (ORG_PGCI) 1330 permits coexistence at the PGC level, and when possessing common information ORG_PGC, it is composed of program chain information (ORG_PGCI) 1331. If inhibiting coexistence, and having a plurality of ORG_PGCs, it is composed of program chain table information (ORG_PGCT) 1332, one or more items of program chain information (ORG_PGC Infor #1 to #s) 1335, and one or more program chain search pointers (ORG_PGC search pointer #1 to #r) 1333. Data structure of the ORG_PGCI 1330 is similar to that of the video recording standard, but its content (cell information CI) is different (this point is discussed in FIG. 15).

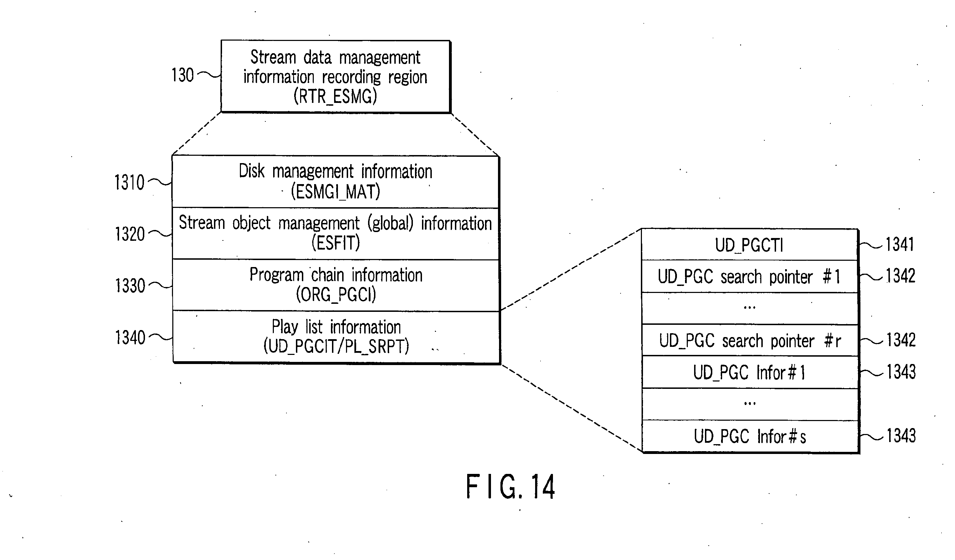

FIG. 14 is a view explaining an example of the configuration of the play list information (or user definition PGC information table) 1340 shown in FIG. 13.

The user definition PGC information table (UD_PGCIT/PL_SRPT) 1340 includes user definition PGC information table (UD_PGCITI) 1341, one or more user definition PGC search pointers 1342, and one or more items of user definition PGC information 1343.

FIG. 15 is a view explaining an example of the configuration of component elements of the program chain information (ORG_PGCI) 1330 shown in FIG. 13.

If the broadcasting system is different, the decoder setting must be changed, or connection may be disabled, and therefore in the play list, coexistence of plural types of stream objects ESOBs may be inhibited. In this case (when inhibiting coexistence in play list unit, but permitting coexistence between play lists), program chain information ORG_PGC is needed in every system, and a plurality of ORG_PGCs exist, so that the playback apparatus plays back only applicable ORG_PGC. In such a case, the ESFI number or APP_NAME must be set in the program chain general information (PGCI_GI) 1331. On the other hand, when coexistence in the program chain is permitted, it is set at the position corresponding to the permitted level. When permitting coexistence in program unit or play list unit, the ESFI number or APP_NAME must be set in the program information (PGI) 1332, or when permitting coexistence in cell unit, it must be set in the cell information (CI) 1334. The ESFI number or APP_NAME to be set may be also additionally provided with the file name of the ESOBS or the like.

The program chain general information (PGCI_GI) 1331 includes the number of programs (PG_Ns) 13311, stream file information (ESFI) number or APP_NAME (when coexistence is inhibited) 13312, and the number of cells in program chain (Cell_SRP_Ns) 13313.

Each program information (PGI) 1332 includes program type (PG_TY) 13321, stream file information (ESFI) number or APP_NAME (when coexistence is inhibited) 13312, the number of cells in program (Cell_Ns) 13323, and program contents information (primary text information (PRM_TXIT) 13324, item text search pointer number (IT_TXT_SRPN) 13325, representative image information (REP_PICTI) 13326, editor ID 13327, program number 13328, and manufacturer's information (MNFI) 13329).

Each cell information (CI) 1334 includes cell type (C_TY) 13341, stream file information (ESFI) number or APP_NAME (when coexistence is inhibited) 13342, corresponding ESOB number 13343, reference ID 13344, the number of cell EPIs 13345, cell start PTS/ATS (playback time stamp/ESOBU arrival time) 13346, cell end PTS/ATS 13347, and EPI 13348.

In the cell information, the type of ESOB is added to the cell type, and by designating the ESOB number, the playback start time and end time are specified. Herein, the playback start time and end time can be expressed in two types of PTS and ATS. The ID to be referred to can be defined by setting the PID (or component tag value) of the stream representing the stream to be played back, or by setting the ID of the component group in the case of multiview TV or the like. In the case of 0xffff, it can be shown by multidisplay on a sub screen, or displaying the prior set group (or main group of default) by priority, and changing over later (during playback).

Further, by adding the manufacturer's ID of the apparatus used in editing to the PGI 1332, the information showing which manufacturer's apparatus is used in editing is added. As a result, the status of use of MNI information used in each manufacturer is known, and if the region of the apparatus is then modified by other manufacturer, it is known that the reliability of the information in this MNI is lost, and after editing by other manufacture, it is shown necessary to create newly.

A specific ID number (program number 13328) is added to the PGI 1332, so that the program can be specified by a number not varied if an intermediate program is deleted. Herein, the cell type 13341 includes the following examples:
C_TY = "0"...VR moving picture (M_VOB);
C_TY = "1"...VR still picture (S_VOB); and
C_TY = "2"...streamer (ESOB).

The ID to be referred to includes the following examples:
(a) PID of video to be played back or component tag (PID of audio if no video is available); and
(b) Description of Component_Group_id (ARIB), or 0xffff when specifying all views.

ESFI number/APP_NAME may differ in place depending on the level for permitting coexistence.

When coexistence is inhibited in PGC: PGCI_GI;

When coexistence is permitted in PL, PG: PGI; and

When coexistence is permitted in cell: CI.

FIG. 16 is a view explaining an example of the configuration of the data unit (ESOBU) 134 for stream object shown in FIG. 1 or 2.

One ESOBU 134 is composed of one or more packet groups 140, and each packet group 140 is composed of, for example, eight packets (1 packet = 1 sector: 2048 bytes).

Each packet group 140 includes packet group header (152 bytes) 161, one or more (85 herein) MPEG-TS packets (188 bytes) 162, and one or more (84 herein) items of IAPAT (Incremental Packet Arrival Time; 3 bytes) 163.

The packet group header 161 includes packet arrival time (ATS) 151X, information showing validity of DCI and CCI described below (DCI_CCI_SS) 152X, display control information (DCI) 153X, copy control information (CCI) 154X, program clock reference information (PCRI) 155X, and manufacturer's information (MNI or MNFI) 156X. In another embodiment, the packet group header 161 may further include presentation time stamp (PTS).

Each MPEG-TS packet 162 includes a header 170 of 4 bytes and adaptation field and/or payload 180. The header 170 includes a synchronizing byte 171, a transport error indicator 172, a payload unit start indicator 173, a transport priority 174, a packet identifier (PID) 175, a transport scramble controller 176, an adaptation field controller 177, and a continuity indicator 178.

In the system for broadcasting (distributing) compressed moving picture of digital television broadcast, Internet, or other wired broadcast, the common basic format of TS stream (FIG. 16) is divided into the packet management data portion 170 and payload 180.

The payload 180 contains the data to be played back in scrambled state. According to the digital broadcast standard ARIB, PAT (program association table), PMT (program map table), and SI (service information) are not scrambled. Further, various management information can be created by using the PMT and SI (service description table, event information table, bouquet association table).

Objects of playback include MPEG video data, Dolby AC3 (R) audio data, MPEG audio data, and data broadcast data. Although not directly related to objects of playback, information necessary for playback includes PAT, PMT, SI and other information (program information, etc.).

PAT includes PID (packet identification) of PMT of each program, and PID of video data or audio data is recorded in the PMT.

Accordingly, as the ordinary playback procedure of the STB (set-top box), the following operation is possible. When the user determines the program from the information of EPG (electronic program guide), the PAT is read in when starting a desired program, and the PID of the PMT to which the desired program belongs is determined on the basis of the data. According to the PID, the intended PMT is read out, and the PID of the video or audio packet to be played back contained therein is determined. By the PMT or SI, the attribute of video or audio data is read out, and set in each decoder, and the video and audio data are picked up according to the PID and played back. Herein, the PAT, PMT, SI and others are used also in the midst of playback, and are hence transmitted in every several hundreds ms.

When recording such data in disk media such as DVD-RAM, preferably, the broadcast data should be directly recorded as digital data.

When recording plural streams simultaneously, the number of streams to be recorded is set in the SOBI, the PMT corresponding to each stream is stored, map information for special playback (map group information) is provided in each stream, and the stream number to be played back (channel number or the PID of PMT) is recorded in the cell information.

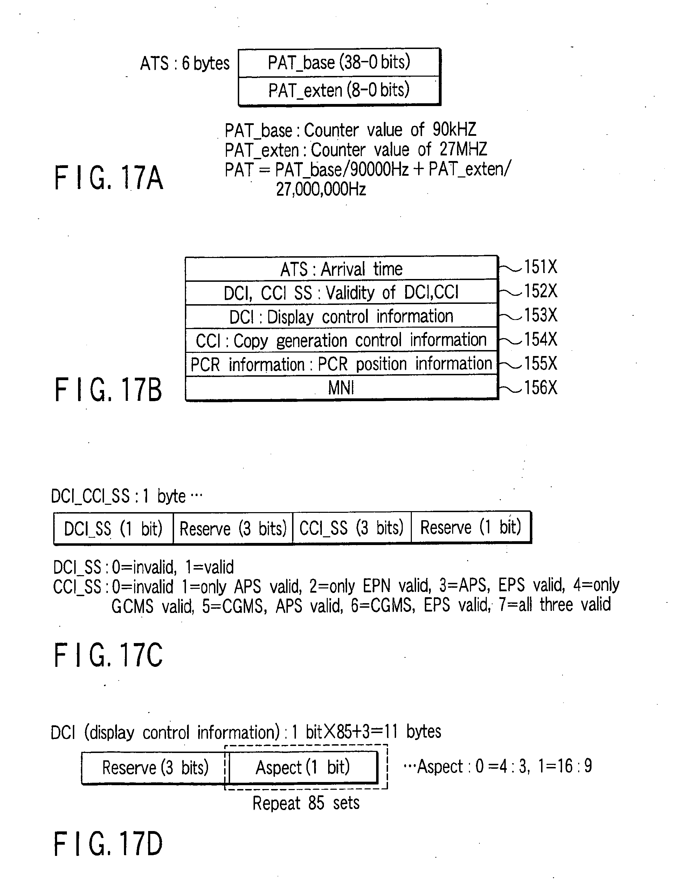

FIG. 17A shows an example of the configuration of the packet arrival time ATS contained in the packet group header shown in FIG. 16. Herein, for example, 6 bytes are assigned for the ATS 151X, PAT_base (for example, counter value of 90 kHz) is expressed by its 38 to 0 bits, and PAT_exten (for example, counter value of 27 MHz) is expressed by 8 to 0 bits.

The actual arrival time PAT is expressed as PAT_base/90,000 Hz + PAT_exten/27,000,000 Hz. Hence, the ATS 151X can be expressed finely, for example, in video frame units.

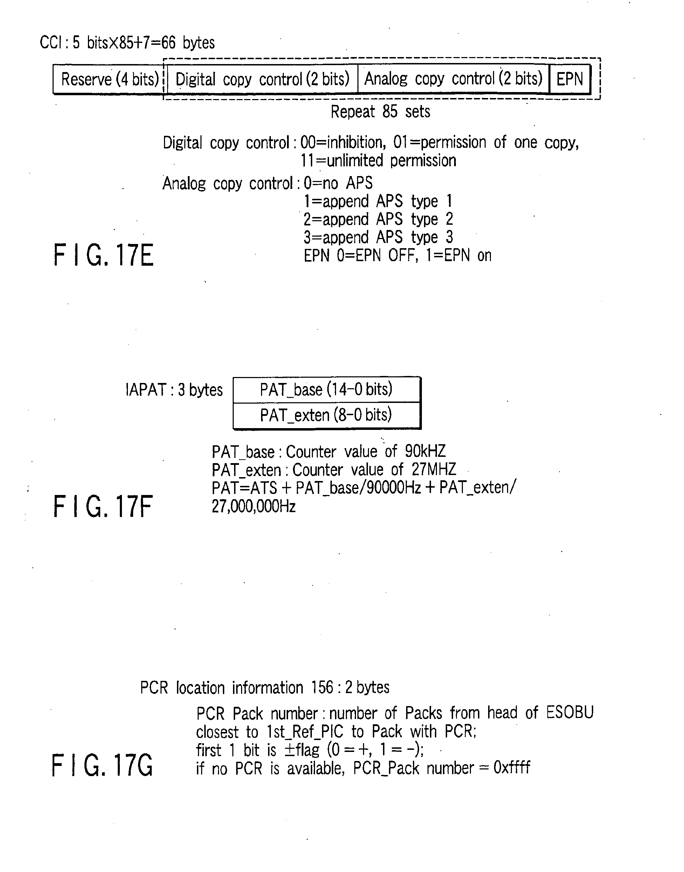

FIG. 17C also shows an example of the configuration of the validity information (DCI_CCI_SS) 152X contained in the packet group header shown in FIG. 16. In this case, DCI_SS of 1 bit shows invalidity by "0" and validity by "1". DCI_SS of 3 bits shows invalidity by "0", and validity of APS only by "1", validity of EPN only by "2", validity of APS and EPN by "3", validity of CGMS only by "4", validity of CGMS and APS by "5", validity of CGMS and EPN by "6", and validity of all three of APS, EPN, CGMS by "7". FIG. 17D also shows an example of the configuration of the display control information (DCI) 153X contained in the packet group header shown in FIG. 16. In this case; 11 bytes are assigned for the DCI 153X. In breakdown, reserve bits (3 bits) are provided at the beginning, and followed by aspect information (1 bit) repeated by 85 times. Herein, the aspect information shows, for example, aspect ratio 4:3 by "0" and aspect ratio 16:9 by "1". FIG. 17E also shows an example of the configuration of copy generation management information (or copy control information CCI) contained in the packet group header shown in FIG. 16. In breakdown, reserve bits (7 bits) are provided at the beginning, and followed by a set of digital copy control information (2 bits), analog copy control information (2 bits) and EPN (1 bit) repeated by 85 times.

Herein, the digital copy control information shows copy inhibition by "00", copy permit once by "01", and copy free by "11". Analog copy control information shows copy free (without analog protection system APS) by "0", copy inhibition (with APS type 1) by "1", copy inhibition (with APS type 2) by "2", and copy inhibition (with APS type 3) by "3". This value of copy control information can be set on the basis of the value recorded in the service information SI in the stream (contents).

EPN of one bit shows EPN off by "0", and EPN on by "1".

FIG. 17F also shows an example of the configuration of incremental packet arrival time (IAPAT) 163 contained after the packet group header in the packet group shown in FIG. 16. Herein, for example, 3 bytes are assigned for the IAPAT 163, PAT_base (for example, counter value of 90 kHz) is expressed by its bits 14 to 0, and PAT_exten (for example, counter value of 27 MHz) is expressed by its bits 8 to 0. The IAPAT 163 is not absolute time, but expresses only increment (change) from the ATS 151X, and therefore the required data quantity of IAPAT is smaller than the data quantity of ATS.

The actual arrival time PAT in the IAPAT 163 is expressed as ATS+PAT_base/90,000 Hz + PAT_exten/27,000,000 Hz. Hence, the IAPAT 163 can be expressed finely, for example, in video frame units. In another format, the difference from the arrival time of one TS packet before may be used (adding PAT_base/90,000 Hz + PAT_exten/27,000,000 Hz to one PAT before, a new PAT is obtained).

Herein, "PAT" in PAT_base and PAT_exten is not program association table, but means packet arrival time.

FIG. 17G also shows composition of PCR position information (PCR_LB number, etc.) 155X contained in the packet group header shown in FIG. 16. Herein, the position information 155X of PCR (program clock reference) is PCR information (PCRI).

The PCR position information 155X is expressed, for example, in 2 bytes. By these 2 bytes, the PCR packet number can be expressed. This PCR packet number can express from the beginning of the ESOBU closest to the beginning reference picture (for example, beginning I picture) 1st_Ref_PIC to a certain logic block in the PCR by the number of LB. One beginning bit is a plus or minus flag (showing, for example, "+ direction" by "0," and "- direction" by "1"). If no PCR is available, the PCR_LB number is, for example, "0xffff".

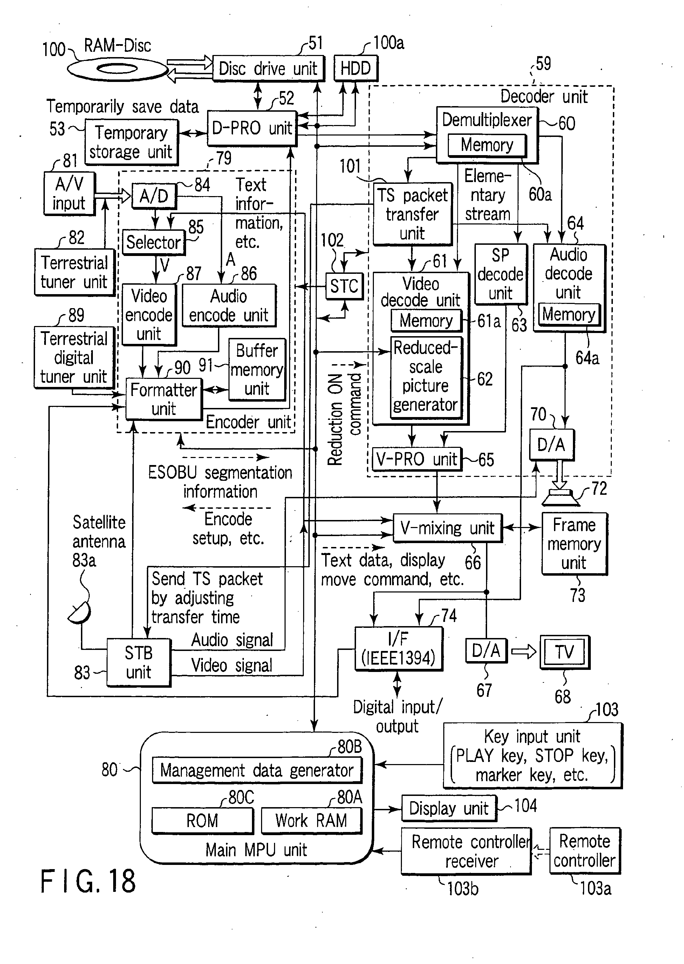

FIG. 18 is a block diagram for explaining an example of the apparatus which records and plays back AV information (digital TV broadcast program or the like) on an information recording medium (optical disc, hard disc, or the like) using the data structure according to the embodiment of the present invention.

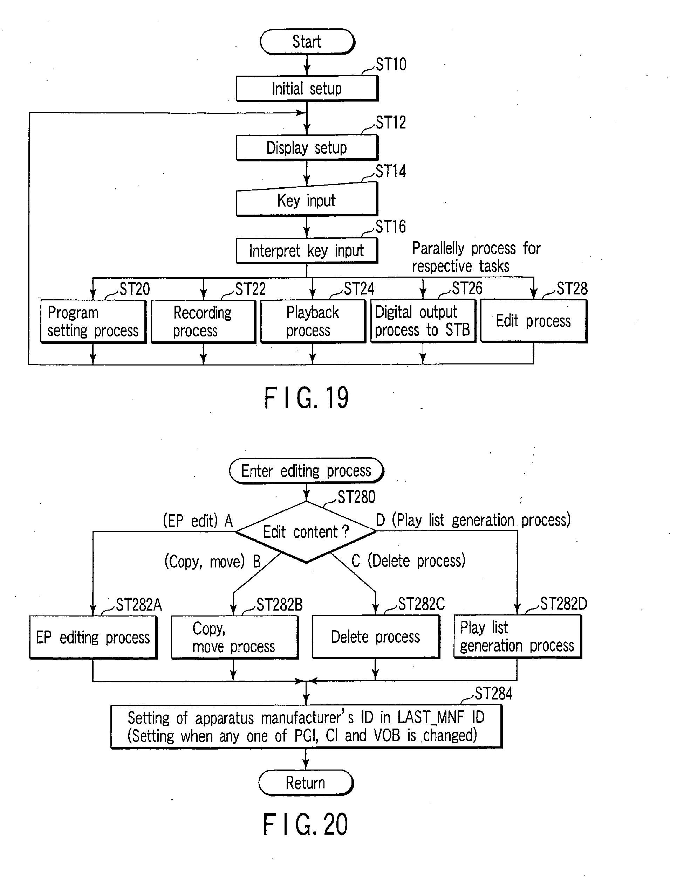

As shown in FIG. 20, this apparatus (digital video recorder/streamer) comprises MPU unit 80, key input unit 103, remote controller receiver 103b for receiving user operation information from remote controller 103a, display unit 104, decoder unit 59, encoder unit 79, system time counter (STC) unit 102, data processor (D-PRO) unit 52, temporary storage unit 53, disc drive unit 51 for recording/playing back information on/from recordable optical disc 100 (e.g., a DVD-RAM or the like), hard disc drive (HDD) 100a, video mixing (V-mixing) unit 66, frame memory unit 73, analog TV D/A converter 67, analog TV tuner unit 82, terrestrial digital tuner unit 89, and STB (Set Top Box) unit 83 connected to satellite antenna 83a. Furthermore this apparatus comprises digital I/F 74 (e.g., IEEE1394) to cope with digital inputs/outputs as a streamer.

Note that the STC unit 102 counts clocks on a 27-MHz basis in correspondence with the PAT_base shown in FIG. 17.

The STB unit 83 decodes received digital broadcast data to generate an AV signal (digital). The STB unit 83 sends the AV signal to the TV 68 via the encoder unit 79, decoder unit 59, and D/A converter 67 in the streamer, thus displaying the contents of the received digital broadcast. Alternatively, the STB unit 83 directly sends the decoded AV signal (digital) to the V-mixing unit 66, and can send an analog AV signal from it to the TV 68 via the D/A converter 67.

The apparatus shown in FIG. 18 forms a recorder comprising both the video and stream recording functions. Hence, the apparatus comprises components (IEEE1394 I/F and the like) which are not required in video recording, and those (AV input A/D converter 84, audio encode unit 86, video encode unit 87, and the like) which are not required in stream recording.

The encoder unit 79 includes A/D converter 84, video encode unit 87, input selector 85 to video encode unit 87, audio encode unit 86, a sub-picture encode unit (as needed although not shown), format unit 90, and buffer memory unit 91.

The decode unit 59 comprises demultiplexer 60 which incorporates memory 60a, video decode unit 61 which incorporates memory 61a and reduced-scale picture (thumbnail or the like) generator 62, sub-picture (SP) decode unit 63, audio decode unit 64 which incorporates memory 64a, TS packet transfer unit 101, video processor (V-PRO) unit 65, and audio D/A converter 70. An analog output (monaural, stereo, or AAC 5.1CH surround) from this D/A converter 70 is input to an AV amplifier or the like (not shown) to drive a required number of loudspeakers 72.

In order to display contents, whose recording is in progress, on the TV 68, stream data to be recorded is sent to the decoder unit 59 simultaneously with the D-PRO unit 52, and can be played back. In this case, the MPU unit 80 makes setups upon playback in the decoder unit 59, which then automatically execute a playback process.

The D-PRO unit 52 forms ECC groups by combining, e.g., every 16 packets, appends ECC data to each group, and sends them to the disc drive unit 51. When the disc drive unit 51 is not ready to record on the disc 100, the D-PRO unit 52 transfers the ECC groups to the temporary storage unit 53 and waits until the disc drive unit 51 is ready to record. When the disc drive unit 51 is ready, the D-PRO unit 52 starts recording. The temporary storage unit 53 may be assured by using a given area of the HDD 100a.

Note that the MPU unit 80 can make read/write access to the D-PRO unit 52 via a dedicated microcomputer bus.

The apparatus shown in FIG. 20 assumes the optical disc 100 such as DVD-RAM/-RW/-R/Blue media (recordable media using blue laser) and the like as primary recording media, and the hard disc drive (HDD) 100a (and/or a large-capacity memory card (not shown) or the like) as its auxiliary storage device.

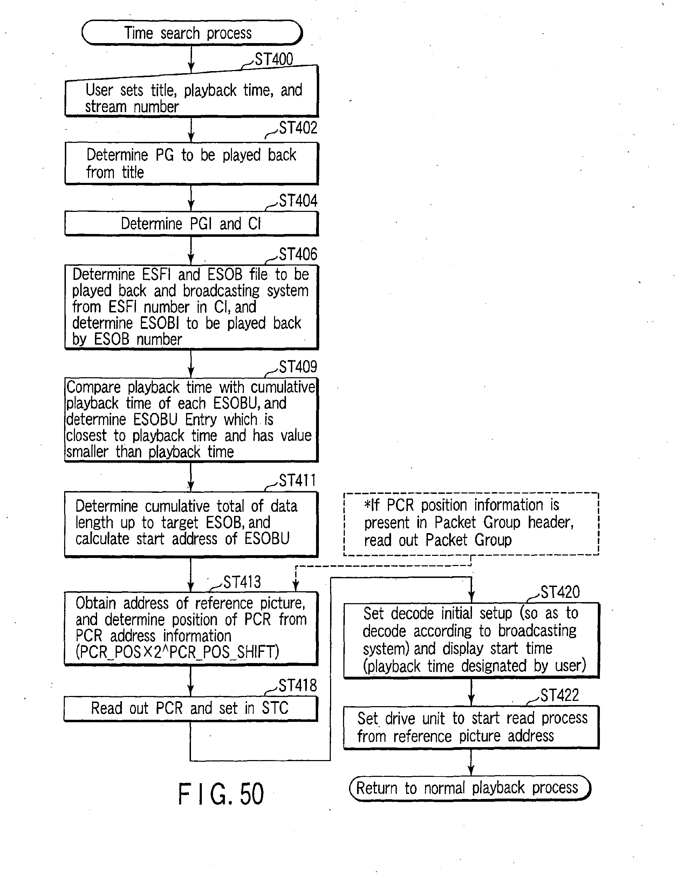

These plurality of types of media can be used as follows. That is, stream recording is done on the HDD 100a using the data structure (format) shown in FIGS. 1A to 17. Of stream recording contents which are recorded on the HDD 100a, programs that the user wants to preserve directly undergo stream recording (direct copy or digital dubbing) on the disc 100 (if copying is not inhibited by the copy control information CCI). In this manner, only desired programs having quality equivalent to original digital broadcast data can be recorded together on the disc 100. Furthermore, since the stream recording contents copied onto the disc 100 exploit the data structure of the embodiment of the present invention, they allow easy special playback processes (to be described later with reference to FIG. 50) such as time search and the like, although these contents are recorded by stream recording.

A practical example of a digital recorder having the aforementioned features (a streamer/video recorder using a combination of a DVD-RAM/-RW/-R/Blue media and HDD) is the apparatus shown in FIG. 18. The digital recorder shown in FIG. 18 is configured to roughly include a tuner unit (82, 83, 89), disc unit (100, 100a), encoder unit 79, decoder unit 59, and a controller 80.

Satellite digital TV broadcast data is delivered from a broadcast station via a communication satellite. The delivered digital data is received and played back by the STB unit 83. This STB 83 expands and plays back scrambled data on the basis of a key code distributed from the broadcast station. At this time, scrambled data from the broadcast station is descrambled. Data is scrambled to prevent users who are not subscribers of the broadcast station from illicitly receiving broadcast programs.

In the STB unit 83, the broadcast digital data is received by a tuner system (not shown). When the received data is directly played back, it is descrambled by a digital expansion unit and is decoded by an MPEG decoder unit. Then, the decoded received data is converted into a TV signal by a video encoder unit, and that TV signal is externally output via the D/A converter 67. In this manner, the digital broadcast program received by the STB unit 83 can be displayed on the analog TV 68.

Terrestrial digital broadcast data is received and processed in substantially the same manner as satellite broadcast data except that it does not go through any communication satellite (and is not scrambled if it is a free broadcast program). That is, terrestrial digital broadcast data is received by the terrestrial digital tuner unit 89, and the decoded TV signal is externally output via the D/A converter 67 when it is directly played back. In this way, a digital broadcast program received by the terrestrial digital tuner unit 89 can be displayed on the analog TV 68.

Terrestrial analog broadcast data is received by the terrestrial tuner unit 82, and the received analog TV signal is externally output when it is directly played back. In this way, an analog broadcast program received by the terrestrial tuner unit 82 can be displayed on the analog TV 68.

An analog video signal input from an external AV input 81 can be directly output to the TV 68. Also, after the analog video signal is temporarily A/D-converted into a digital signal by the A/D converter 84, and that digital signal is then re-converted into an analog video signal by the D/A converter 67, that analog video signal may be output to the external TV 68. In this way, even when an analog VCR playback signal that includes many jitter components is input from the external AV input 81, an analog video signal free from any jitter components (that has undergone digital time-base correction) can be output to the TV 68.

A digital video signal input from a digital I/F (IEEE1394 interface) 74 is output to the external TV 68 via the D/A converter 67. In this way, a digital video signal input to the digital I/F 74 can be displayed on the TV 68.

A bitstream (MPEG-TS) input from satellite digital broadcast, terrestrial digital broadcast, or the digital I/F 74 can undergo stream recording in the stream object group recording area 131 (FIG. 1D) of the disc 100 (and/or the HDD 100a) as the stream object (ESOB) 132 in FIG. 1E.

An analog video signal from terrestrial analog broadcast or the AV input 81 can undergo video recording on the VR object group recording area 122 (FIG. 1D) of the disc 100 (and/or the HDD 100a).

Note that the apparatus may be configured to temporarily A/D-convert an analog video signal from terrestrial analog broadcast or the AV input 81 into a digital signal, and to make stream recording of the digital signal in place of video recording. Conversely, the apparatus may be configured to make video recording of A bitstream (MPEG-TS) input from satellite digital broadcast, terrestrial digital broadcast, or the digital I/F 74 (after it undergoes required format conversion) in place of stream recording.Recording/playback control of stream recording or video recording is done by firmware (control programs and the like corresponding to operations shown in FIGS. 19 to 52 to be described later) stored in a ROM 80C of the main MPU unit 80. The MPU unit 80 has a management data generation unit 80B for stream recording and video recording, generates various kinds of management data (FIGS. 2 to 17 and the like) using a work RAM 80A as a work area, and records the generated management information on the AV data management information recording area 130 in FIG. 1D as needed. The MPU unit 80 plays back management information recorded on the AV data management information recording area 130, and executes various kinds of control (FIGS. 19 to 52) on the basis of the played back management information.

The features of the medium 100 (or 100a) used in the apparatus of FIG. 18 will be briefly summarized below. That is, this medium has the management area 130 and the data area 131. Data is separately recorded on the data area as a plurality of object data (stream object ESOB), and each object data is made up of a group of data units (ESOBU). One data unit ESOBU includes packet groups each of which is formed by converting an MPEG-TS compatible digital broadcast signal into TS packets and packing a plurality of packets (see FIGS. 1I and 14). On the other hand, the management area 130 has PGC information PCGI as information used to manage the playback sequence. This PGC information contains cell information (CI) (see FIG. 15). Furthermore, the management area 130 includes information used to manage object data (stream object ESOB) (see FIG. 6).

The apparatus shown in FIG. 18 can make stream recording on the medium 100 (or 100a) with the above data structure in addition to video recording. In this case, in order to extract program map table PMT and service information SI from a TS packet stream, the MPU unit 80 has a service information extraction unit (not shown; firmware that forms a management data management unit 80B). Also, the MPU unit 80 has an attribute information generation unit (not shown; firmware that forms the management data management unit 80B) that generates attribute information (PCR_LB number and the like) on the basis of information extracted by the service information extraction unit.

In the apparatus in FIG. 18, the signal flow in the recording mode is, for example, as follows. That is, TS packet data received in the STB 83 (or terrestrial digital tuner 89) is divided in packet groups by the formatter 90 and saved in the work (buffer memory 91), and recorded in the disk 100 when a predetermined quantity is collected (when one or integer times portions of CDA are collected). In this operation, when the TS packets are received, they are grouped in every 85 packets, and a packet group header is created.

The analog signal input from the terrestrial tuner 82 or line input is converted into a digital signal by the A/D converter 84. This digital signal is supplied into the encoders 86, 87. The video signal is fed into the video encoder 87, the audio signal into the audio encoder 86, and text data such as text broadcast into a sub-picture (SP) encoder (not shown). The video signal is compressed by MPEG, the audio signal is compressed by AC3 or MPEG, and the text data is compressed by run-length process.

When compressed data is formed into blocks from the encoders, data is formed in each block of 2048 bytes, and put into the formatter 90. In the formatter 90, each packet is formed into blocks, and further multiplexed, and sent into the D-PRO unit 52. In the D-PRO unit 52, ECC blocks are formed in every 16 (or 32) blocks, and recorded into the disk 100 by the disk drive unit 51 together with error correction data.

In this case, if the drive unit 51 is busy during seek or track jump, the data is once put into the HDD buffer 53 to wait until the RAM drive is ready. Further, in the formatter 90, each segment information is created during recording, and is periodically sent into the MPU 80 (GOP beginning interrupt, etc.). Segment information includes the number of LBs of VOBU (ESOBU), the end address of the I picture from the beginning of VOBU (ESOBU), and playback time of VOBU (ESOBU).

In the data flow in the playback mode, data is read out from the disk 100 by the drive unit 51, error is corrected in the D-PRO unit 52, and data is fed into the decoders 61, 63, 64. The MPU 80 determines whether the input data is VR data or ESR data (based on the cell type), and the type is set in the decoder before playback. In the case of ESR data, the MPU 80 determines PMD_ID to be played back depending on the cell information CI to be played back, determines the PID of each item to be played back (video, audio, etc.) depending on the corresponding PMT, and sets in the decoder. The decoder, on the basis of this PID, sends each TS packet to each decoder by the separator 60. Further, sending to the TS packet transfer unit 101, the TS packet is transmitted to the STB 83 (1394 I/F 74) according to the arrival time. Each decoder decodes, converts into the analog signal by the D/A converter 67, and displays in the TV monitor 68.

In the case of VR data, the separator 60 sends to each decoder according to the fixed ID. Each decoder decodes, converts into the analog signal by the D/A converter 67, and displays in the TV monitor 68.

FIG. 19 is a flowchart explaining an example of overall operation of the apparatus shown in FIG. 18 (overall operation process flow). For example, when the power source of the apparatus shown in FIG. 18 is turned on, the MPU 80 sets initially (to the state before shipping from factor or after setting by the user) (step ST10), sets display (step ST12), and waits for user's manipulation. When the user presses a key on the key input unit 103 or remote controller 103a (step ST14), the MPU 80 interprets the contents of the key input (step ST16). Depending on the result of key input interpretation, the following data processes are executed appropriately.

If the key input is for timer setting for recording, program setting process starts (step ST20). If the key input is for start of recording, recording process starts (step ST22). If the key input is for start of playback, playback process starts (step ST24). If the key input is for digital output to the STB 83, digital output process starts (step ST26). If the key input is for editing, editing process starts (step ST28).

Processes in steps ST20, ST22, ST24, ST26 and ST28 are executed parallel appropriately in each task. For example, during playback process (step ST24), digital output to the STB 83 is processed (step ST26) at the same time. During recording without timer (step ST22), new program can be set (step ST20) at the same time. Further, making use of advantage of disk recording capable of high speed access, during recording process (step ST22), playback process (step ST24) and digital output process (step ST26) can be executed at the same time. While recording into the HDD 100a, editing process (step ST28) can be also executed.

FIG. 20 is a flowchart explaining an example of contents of the editing process (ST28) shown in FIG. 19 (editing operation process flow). Once in editing process, four processes "A" to "D" can be started depending on the contents of editing (step ST280). After entry point (EP) editing process (step ST282A), copy/move process (step ST282B), delete process (step ST282C), or play list creating process (step ST282D), the manufacturer's ID of the apparatus used in such operation is set in the editor ID (LAST_MNF_ID) 13327 in the program information (PGI) 1332 in FIG. 15 (step ST284). This editor ID is set (or updated) according to the ID information of the apparatus used in operation every time any one of the program information PGI, cell information CI, and stream object ESOB (or VOB) is changed.

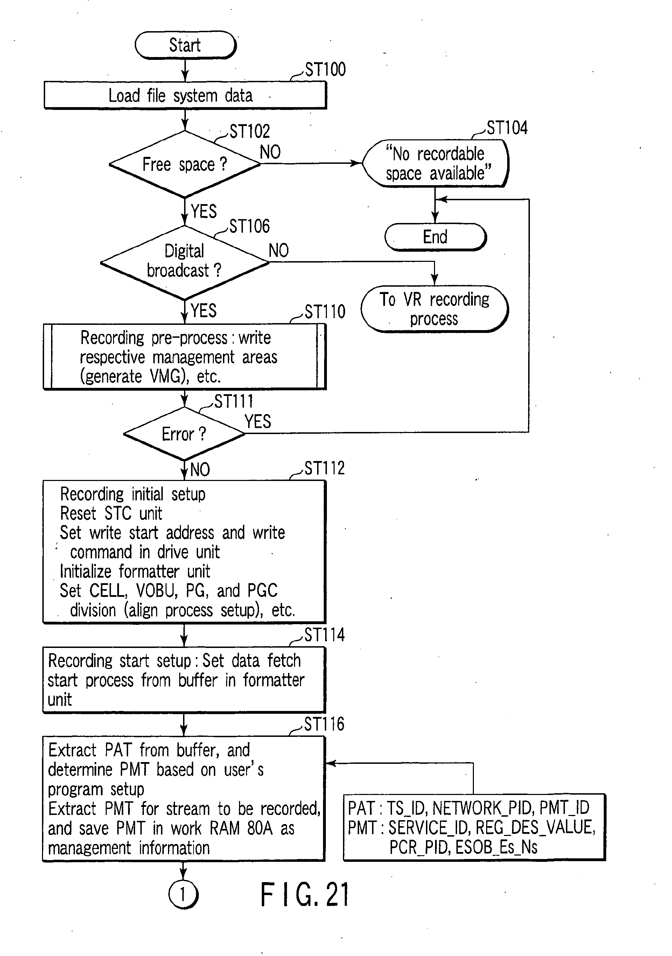

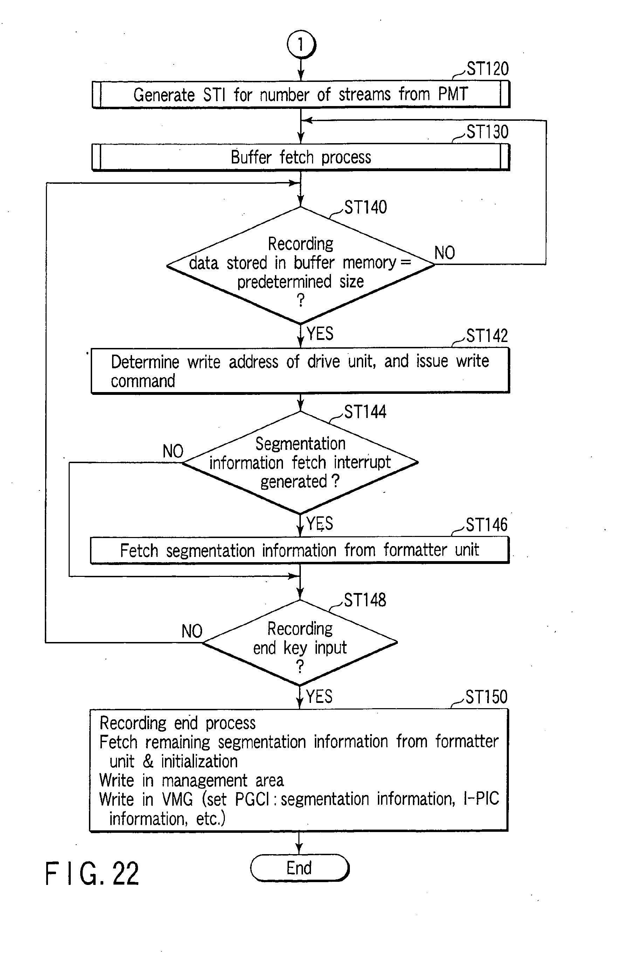

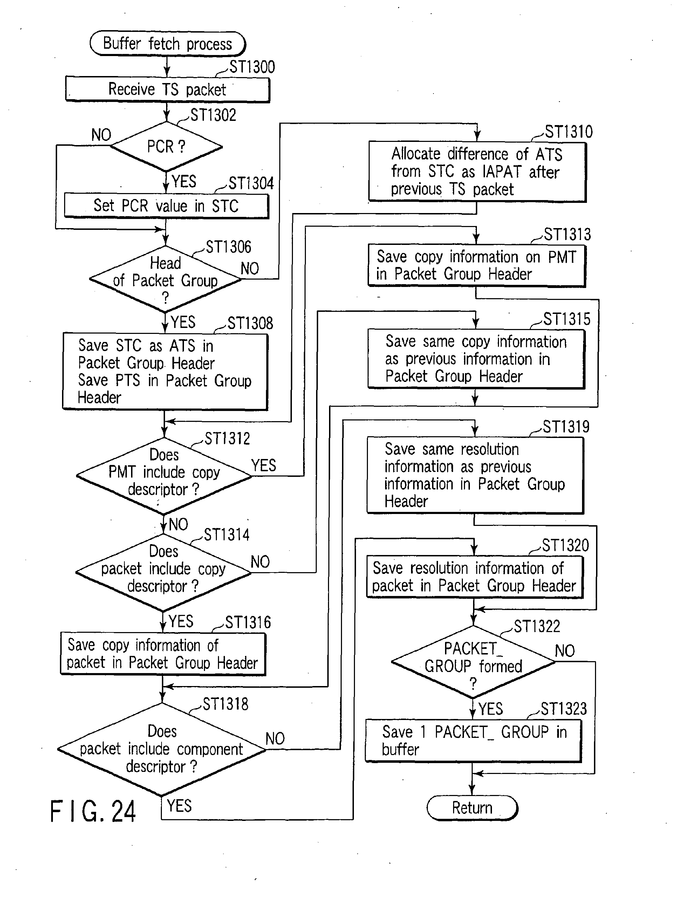

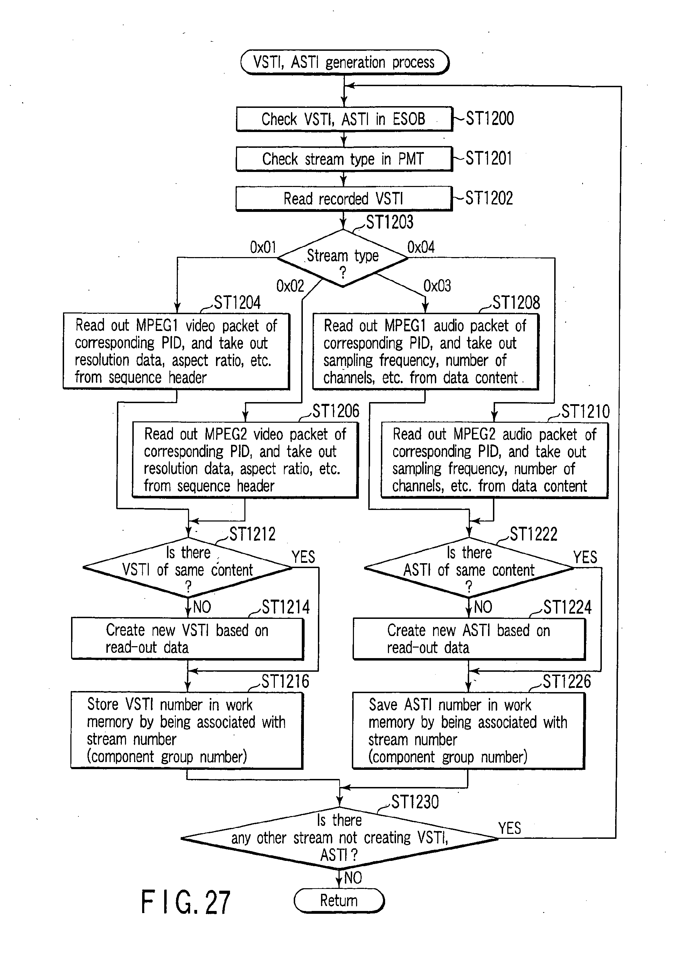

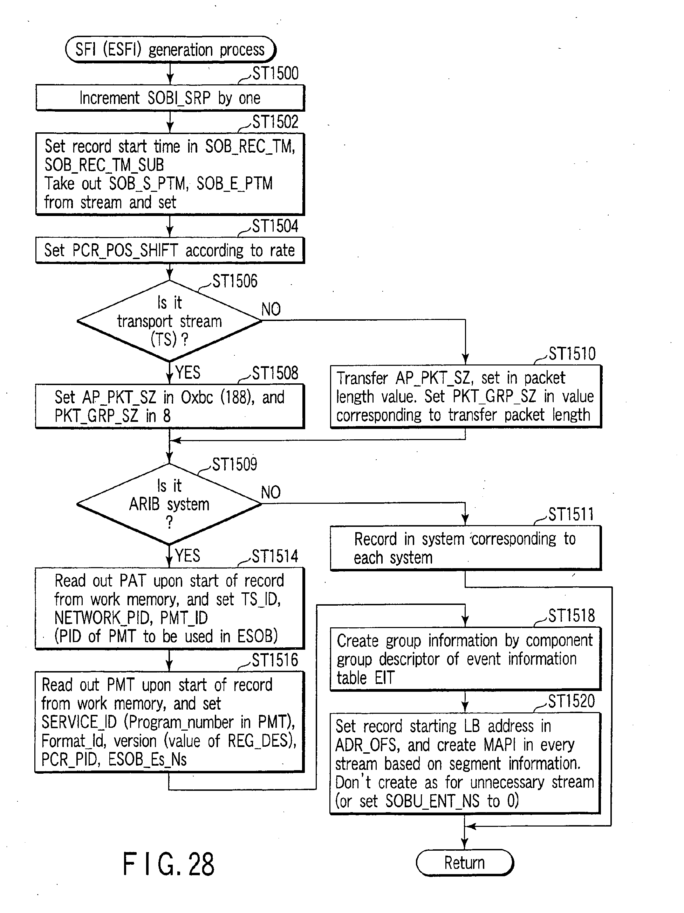

FIGS. 21 and 22 are flow charts (recording flow) for explaining an example of the recording operation ST22 in FIG. 19 of the apparatus shown in FIG. 18.
<01> Upon reception of a recording command from the key input unit 103, the MPU unit 80 loads the management data from the disc drive unit 51 (step ST100) and determines an area to be written. At this time, the MPU unit 80 checks the file system to determine whether or not recording can be proceeded (if a recordable space remains on the disc 100 or HDD 100a). If recording cannot be proceeded (No in step ST102), a message that advises accordingly is displayed for the user (step ST104), thus aborting the recording process.
   If recording can be proceeded (Yes in step ST102), the MPU unit 80 checks if recording to be made is stream recording of a digital broadcast signal or video recording of an analog broadcast signal (or video recording of an analog signal obtained by D/A-converting a digital broadcast signal). If recording to be made is not stream recording of a digital broadcast signal (No in step ST106), a recording process based on the video recording standard starts. If recording to be made is stream recording of a digital broadcast signal (Yes in step ST106), a recording start position is determined based on the management data loaded in step ST100.
<02> The contents of the management area are set to write data in the determined area, and the write start address of video data is set in the disc drive unit 51, thus preparing for data recording (step ST110).
   If an error occurs while creating the management information VMG (Yes in step ST111), the process is over. When the management information VMG is created without error (No in step ST111), the process goes to the next step of initial setting for recording (step ST112).
<03> As part of initial setups for recording, the time of the STC unit 102 is reset (step ST112). Note that the STC unit 102 is a system timer, and recording/playback is done (for respective frames) with reference to the count value of this timer.
<04> The PAT (included in an MPEG-TS stream from the STB unit 83) of a program to be recorded is loaded to determine the PID required to fetch the PMT of the target program. Then, the target PMT is loaded to determine the PIDs of data (video, audio) to be decoded (to be recorded). At this time, the PAT and PMT are saved in the work RAM 80A of the MPU unit 80, and are written in the management information (step ST116). The VMG file data is written in the file system, and required information (FIG. 4) is written in the VMGI.
   Herein, the PAT may include information such as TS_ID, NETWORK_PID, PMT_ID, etc., while the PMT may include information such as SERVICE_ID, REG_DES_VALUE (value of Registration_Descriptor), PCR_PID, ESOB_ES_Ns, etc.
<05> As part of initial setups for recording, recording setups of respective units are made (step ST112). At this time, a segmentation setup of data and reception setup of TS packets are made in the formatter unit 90. Also, the PID of data to be recorded is set to record only a target video stream. Also, the buffer memory unit 91 is set to start holding of TS packets.
   As part of recording start setups, a buffer data fetch start process from the buffer memory unit 91 is set in the formatter unit 90 (step ST114). Then, the formatter unit 90 starts a buffer fetch process (to be described later with reference to FIG. 24).
<06> The STI (ESOBI_VSTI and ESOBI_ASTI in FIG. 7) is generated based on the PMT (step ST120 in FIG. 22; details of this step will be described later using FIG. 27). Next, a storage process in the buffer memory unit 91 starts (step ST130).
<07> If data stored in the buffer memory unit 91 reaches a predetermined size (for one continuous data area CDA) (Yes in step ST140), a predetermined ECC process (which generates an ECC block for 8 sectors/16 kbytes or for 32 sectors/64 kbytes) is done via the D-PRO unit 52, thus recording the data on the disc (step ST142).
<08> During recording, segmentation information is saved in the work RAM 80A of the MPU unit 80 (step ST146) periodically (before the buffer RAM 91 of the formatter unit 90 becomes full of data; Yes in step ST144). The segmentation information to be saved is that of ESOBU data, i.e., the start address or packet length of each ESOBU, the end address of I-picture data, the ESOBU arrival time ATS, or the like may be saved.
<09> The remaining space of disc 100 (or 100a) during recording is determined. If the remaining space becomes equal to or smaller than a predetermined value (e.g., 150 Mbytes), a small remaining space process may be executed (not shown). As the small remaining space process, a process for erasing, if erasable unerased data (temporarily erased data thrown into a trash box file) remain on the disc, these data to increase the remaining space is known. Alternatively, as the small remaining space process, a process for increasing a recordable duration by lowering the recording rate (or by switching MPEG-2 recording to MPEG-1 recording) if the physical remaining space remains the same is also known. Also, when dummy packs used in after recording are recorded on the disc 100, a process for aborting recording of these dummy packs may be executed as part of the small remaining space process. Alternatively, a process for continuing relay recording on an unrecorded area of the HDD 100a when the remaining space of disc 100 becomes small may be executed as part of the small remaining space process.
<10> It is determined if recording is to end (if the user has pressed a recording end key or if no recordable space remains). If recording is to end (Yes in step ST148), remaining segmentation information is fetched from formatter unit 90, and is added to work RAM 91. These data are recorded in management data (VMGI), and remaining information is recorded in the file system (step ST150). In this step ST150, stream file information (SFI or ESFI) described in FIG. 28 is also created.
<11> If recording is not to end (No in step ST148), the flow returns to step ST140 to continue the data fetch process (step ST130) and write process (step ST142).

Herein, to display on the TV monitor 68, data is simultaneously sent to the decoder 59 and D-PRO unit 52, and played back. In this case, the MPU 80 sets playback in the decoder 59, and then the decoder 59 plays back automatically.

The D-PRO unit 52 compiles an ECC group by collecting every 16 packs, and sends to the drive unit 51 together with the ECC. However, if the drive unit 51 is not ready for recording, the data is transferred to the temporary storage unit 53 to wait until it is ready to record data, and when becoming ready, recording is started. Herein, the temporary storage unit 53 is preferred to be a memory of large capacity in order to store data for several minutes or more by high speed access. However, since the MPU 80 reads and writes the file management region, it is possible to read and write in the D-PRO unit 52 through the MPU bus.

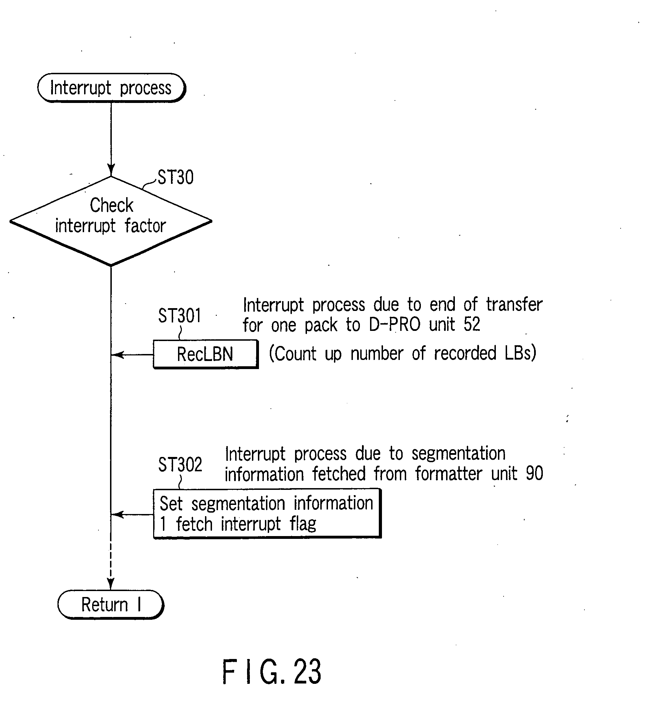

FIG. 23 is a flow chart (interrupt process flow) for explaining an example of an interrupt process in the operation of the apparatus shown in FIG. 18. In the interrupt process in the control operation of the MPU unit 80, an interrupt factor is determined (step ST30). If the interrupt factor indicates that an interrupt is generated due to "completion of transfer for one pack (or packet) to the D-PRO unit 52", the number of video recording logical blocks LBs is incremented by 1 (step ST301). If the interrupt factor indicates that an interrupt is generated due to "fetching of segmentation information from the formatter unit 90", a fetch interrupt flag (not shown) of segmentation information 1 is set (step ST302).

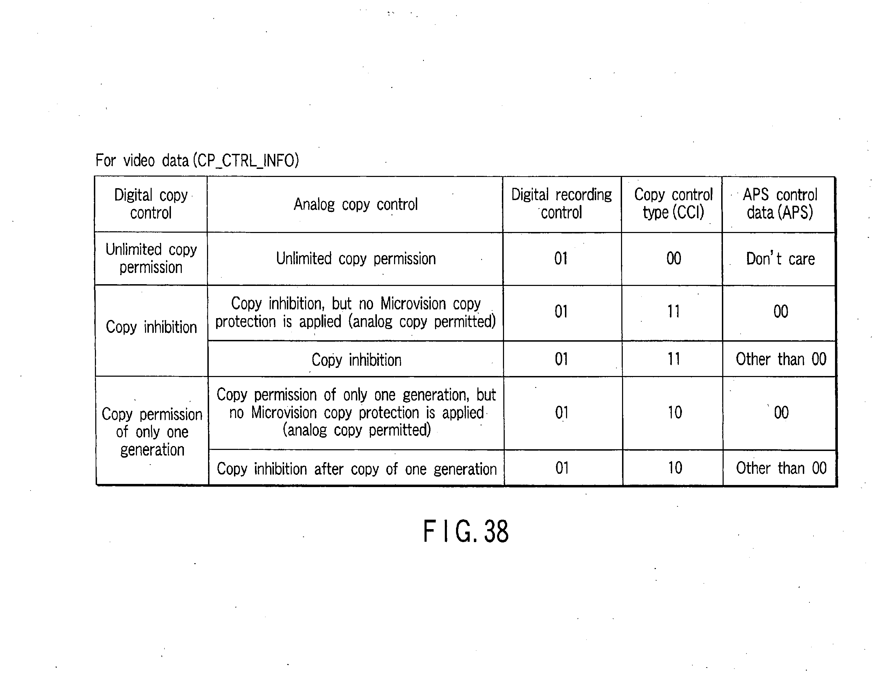

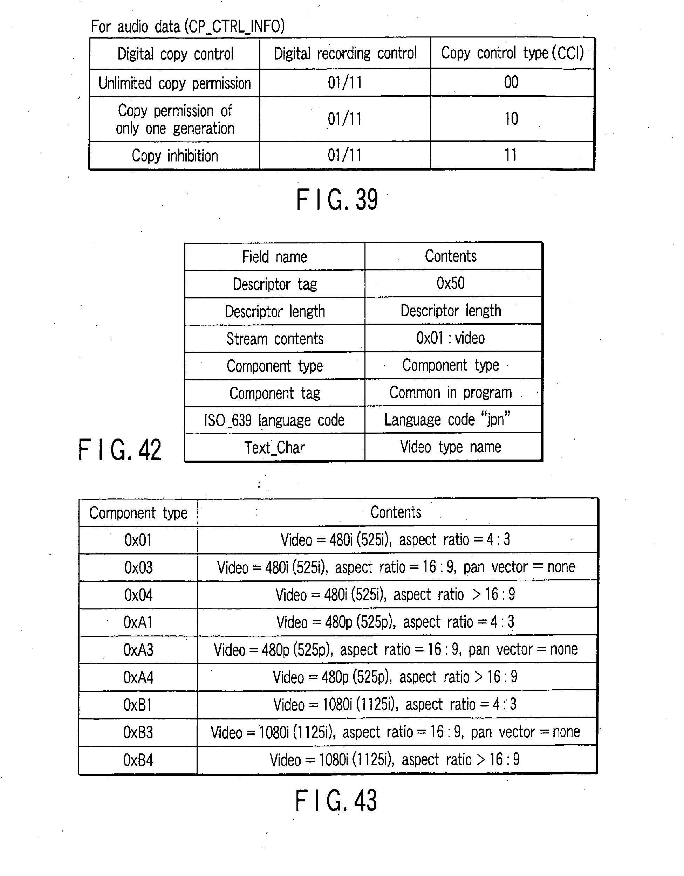

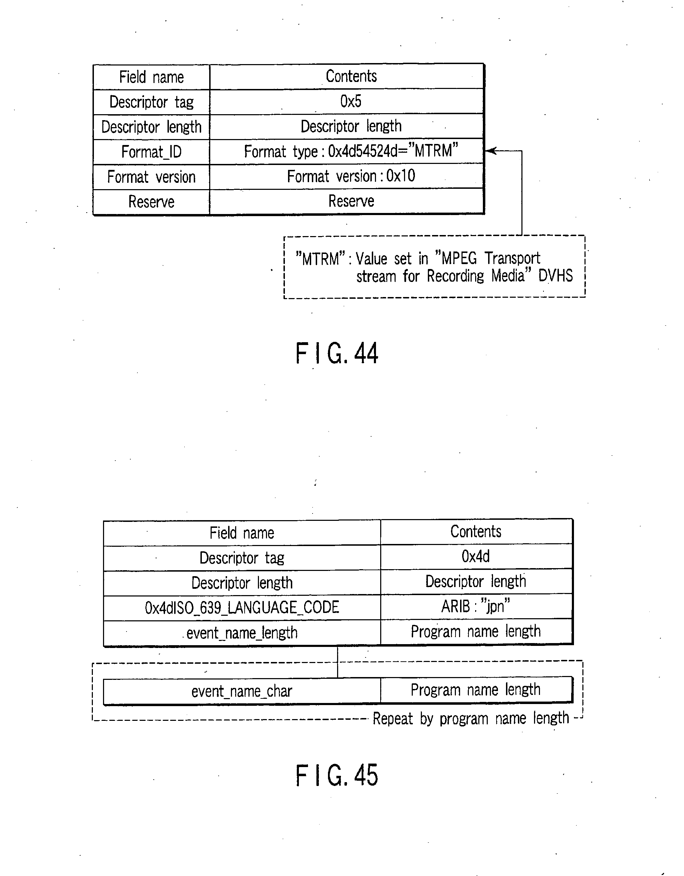

FIG. 24 is a flow chart (buffer fetch process flow) for explaining an example of the contents of the buffer fetch process (ST130) shown in FIG. 22.
<01> A TS packet is received in the STB 83 (or terrestrial digital tuner 89) (step ST1300).
<02> If the fetched TS packet includes a PCR (Yes in step ST1302), the STC unit 102 is corrected (step ST1304).
<03> If the packet of interest corresponds to the head of a packet group (Yes in step ST1306), its arrival time is fetched from the STC unit 102 and is saved as ATS data (step ST1308). If the packet of interest does not correspond to the head of a packet group (No in step ST1306), the difference between the value of the ATS of the head packet and its arrival time (or the difference from the arrival time of one TS packet arriving before) is set as IAPAT data before that TS packet (after the previous TS packet) (step ST1310).
<04> It is determined if the PMT that has been fetched initially and belongs to the current stream includes copy descriptor. If the PMT includes copy descriptor (Yes in step ST1312), the copy control information CCI (FIG. 17) is formed based on that information (FIGS. 38 and 39) and is saved in the packet group header (step ST1313) so as to write all pieces of information in the packet group header.
<05> If the PMT does not include any copy information (No in step ST1312), and if the received TS packet does not include any copy descriptor (No in step ST1314), copy information is formed based on the same information as that of the previous packet (step ST1315). If the received TS packet includes a copy descriptor (Yes in step ST1314), the copy control information CCI (FIG. 17) is formed based on that information and is saved in the packet group header (step ST1316).
<06> It is determined if the TS packet includes a component descriptor (FIG. 43). If the TS packet does not include any component descriptor (No in step ST1318), the same information as that of the previous packet is saved in the packet group header (step ST1319). If the TS packet includes a component descriptor (Yes in step ST1318), resolution information is formed based on the included information (FIG. 43), and is saved in the packet group header (step ST1320).
<07> It is determined whether or not a packet group is formed (more specifically, whether or not 85 TS packets are grouped). If a packet group is not formed yet (No in step ST1322), the control returns to the start of buffer fetch process ST130; otherwise (Yes in step ST1322), group data is temporarily saved in the buffer RAM 91 (step ST1323).

If the head of a picture is included in a group, the PTS is saved with reference to the contents of the TS packet. If the TS packet contains no video data but audio data alone, the CCI is formed in accordance with audio copy information. Furthermore, the availability of each information is detected and is saved in the work RAM 80A. Upon completion of recording, the information saved in the work RAM 80A is recorded on the management information recording area 130 as management information (ST150 in FIG. 22).

Upon playback, the demultiplexer 60 interprets packet data read out from the disc 100 (or HDD 100a) and sends a packet that includes TS packets to the TS packet transfer unit 101. After that, the readout packet data are sent to respective decoders 61, 63 and 64 and undergo corresponding playback processes (video playback, sub-picture playback, audio playback).

Upon transferring TS packets to the STB unit 83 (or to an external digital TV or the like via the IEEE1394 I/F 74), the TS packet transfer unit 101 transfers data of only TS packets at the same time intervals as they arrived.

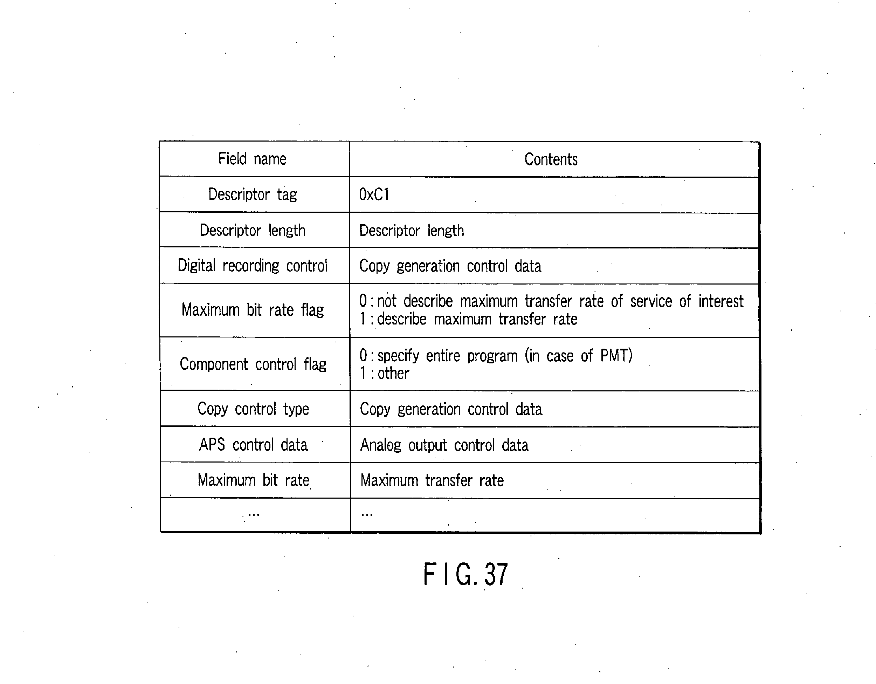

Processing in FIG. 24 may be briefly explained in a different manner as shown below.
<01> In the signal flow of recording, TS packet data received in the STB 83 (or terrestrial digital tuner 89) is compiled in packet group by the formatter 90, and stored in the work memory (buffer memory 91), and when a predetermined quantity is collected (when the portion of one or integer times of CDA is collected), the data is recorded in the disk 100. At this time, when the TS packet is received, every 85 packets are compiled in a group, and a packet header group is created.
<02> If there is PCR in the acquired TS packet, the STC unit 102 is corrected.
<03> At the head of the packet group, its arrival time is acquired from the STC unit 102, and ATS is obtained. If not at the head, the difference of the arrival time from the beginning ATS value (or the difference from ATS of one previous TS packet) is obtained as IAPAT, and is disposed before this TS packet.
<04> Determining whether or not there is copy information in the PMT to which this stream acquired in the first place belongs, if found, copy information (see FIG. 17E) is composed on the basis of this information (FIGS. 37 to 39) in order to write this information in all packet group headers, and the process goes to <06>.
<05> If there is no copy information in the received TS packet, the same information as the previous packet is held, and if there is copy information in the received TS packet, copy information is composed on the basis of this information.
<06> Determining whether or not there is resolution information, if not found, the same information as the previous packet is held, and if resolution information is found, the resolution information is composed on the basis of this information (FIGS. 42 and 43).
<07> Determining whether or not the packet group is finished (determining whether 85 TS packets are grouped or not), if not finished, the process moves to <01>, and if grouping is finished, the group data is temporarily stored in the buffer RAM 91 (buffer memory 91).

Herein, if the head of picture is included in the group, the PTS is saved by referring to the contents of the TS packet. If no video data is available, in the case of audio data only, the copy control information CCI is composed according to the copy information for audio.

When reproducing, <11> the packet data being read out from the disk 100 (or HDD 100a) is analyzed in the separator 60, and <12> the packet containing the TS packet is sent to the TS packet transfer unit 101. Thereafter, <13> this packet data is sent into each decoder, and is played back. <14> When transferring to the STB 83 (or transmitting to the external device such as digital TV), the packet transfer unit 101 transfers only the TS packet of the data at the same time interval as in arrival. Further, <15> the STB 83 decodes, generates an AV signal, and displays the AV signal in the TV monitor 68 by way of the video encoder in the streamer.

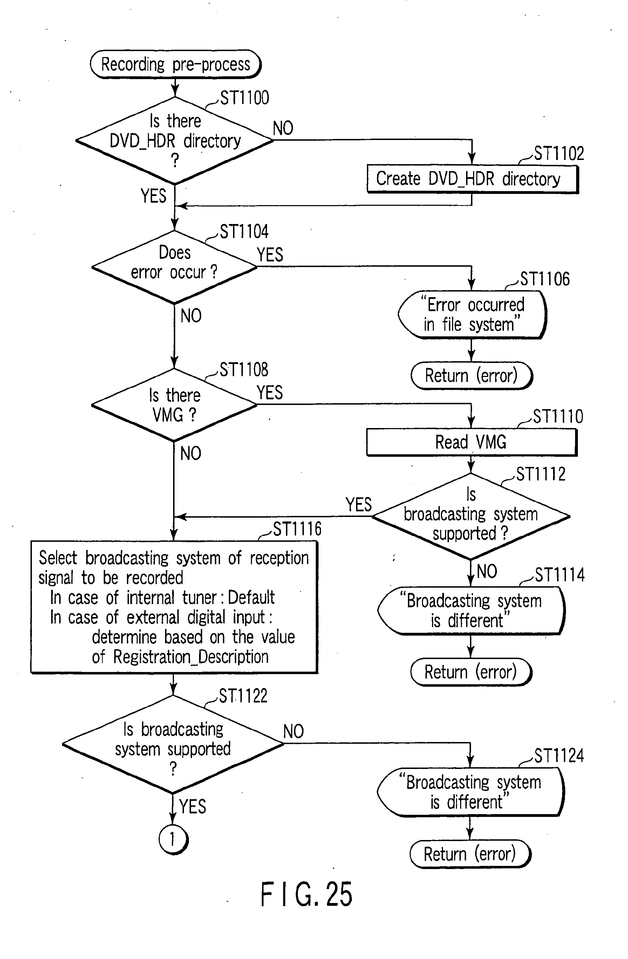

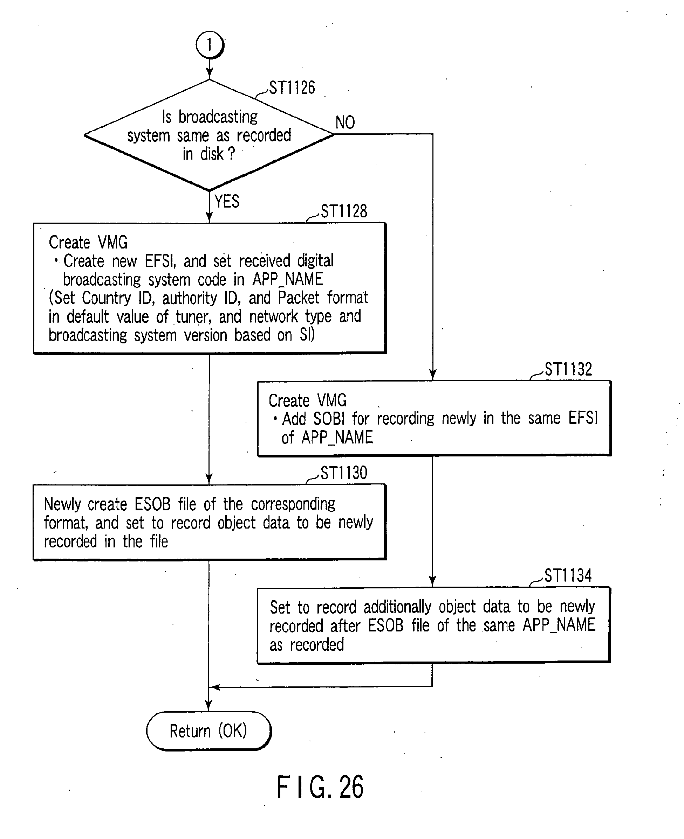

FIGS. 25 and 26 are flowcharts explaining the recording process ST22 shown in FIG. 19 (state before start of recording into the information storing disk medium 100 shown in FIG. 1A) (process flow before recording). An example of this recording prior process is explained below.
(A) Searching a directory of DVD_HDR (a directory for video recording corresponding to new HD, that is, a directory for recording new VR (corresponding to HD) and ESR) (step ST1100), if not found, the directory is created (step ST1102), and if found, the process goes to the next step.
(B) Determining whether or not data is recorded in the directory, if an error occurs in this process (Yes in step ST1104), the notice ("Error has occurred in file system") is displayed (step ST1106), and the process ends with error. In the absence of error (No in step ST1104), presence or absence of the management information VGMI of recorded data is determined (step ST1108). When data is recorded and the VMGI is found (Yes in step ST1108), the VMGI is read into the work RAM 80A (step ST1110), and it is determined whether this apparatus (the apparatus shown in FIG. 18) is supported or not from broadcasting system recorded therein (APP_NAME in FIG. 8, etc.) (step ST1112). If not supported (No in step ST1112), the result ("Broadcasting system is different") is displayed (step ST1114), and the process ends with error.
(C) When there is no management information VMGI of recorded data (No in step ST1108), VMGI is created in the work RAM 80.
(D) The broadcasting system of the data to be recorded is determined (step ST1116). In this check, when the signal to be recorded comes from the internal tuner, it is the default system in the apparatus. If the signal to be recorded is an external digital input, the value of the descriptor Registration_Descriptor sent from digital input is determined, and the recording system is determined (step ST1116).
(E) The broadcasting system of the data to be recorded is determined to be the system supported by this apparatus (apparatus in FIG. 18) or not. If not supported (No in step ST1122), the result ("Broadcasting system is different") is displayed (step ST1124), and the process ends with error.
(F) When supported (Yes in step ST1122), it is determined if there is ESOB file or not in which the broadcasting system of the data recorded in step ST1126 coincides with the broadcasting system recorded in the disk. In this case, if plural recording systems are permitted in the disk, APP_NAME is needed in each ESOBI_GI, but if existence of plural recording systems is inhibited, APP_NAME may be set in the ESFI_GI and/or MVG_MAT (see explanation of FIG. 9). APP_NAME may be either fixed or variable with each ESOB depending on the apparatus. The set value may either the name of ARIB or the like entered by character code, or the ID code (ARIB = "01," DVD = "02," etc.).

If existing, a new EFSI is created in step ST1128, and the digital system code received in the APP_NAME is set (country ID, authority ID, and packet format are set by the tuner default value, and the network type and broadcasting system version by the SI). In step ST1130, an ESOB file of the corresponding format is set newly, and it is set so that the object data to be recorded henceforth should be recorded in this file. If not present, VMG is newly created (step ST1132). That is, SOBI to be recorded this time is added to the same ESFI of the APP_NAME. FIG. 27 is a flowchart explaining an example of contents of the creating process (ST120) of the stream information VSTI and ASTI shown in FIG. 22 (STI setting process flow).

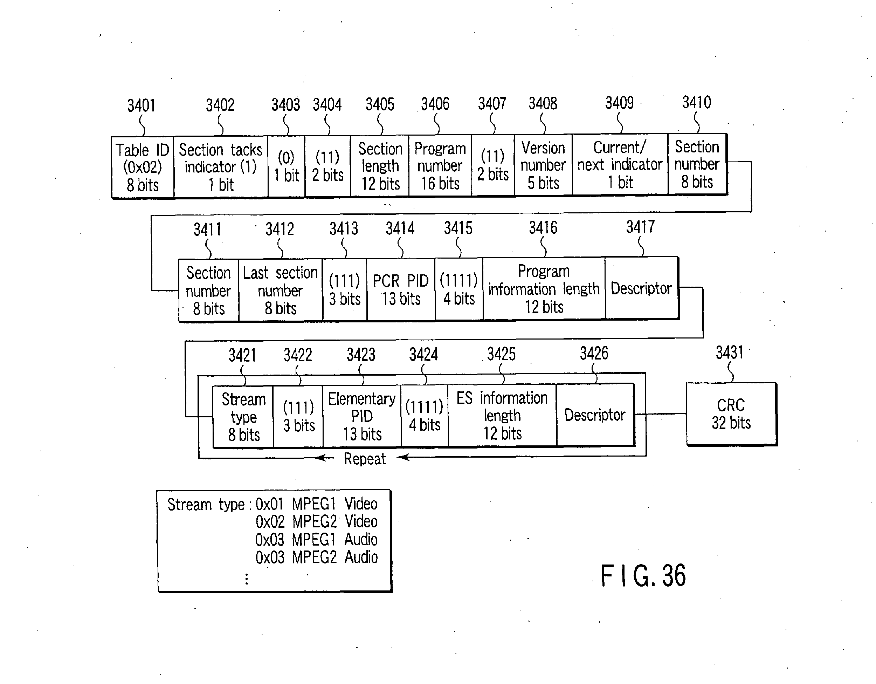

First, the VSTI and ASTI in ESOBI are checked (step ST1200), stream type in the PMT is checked (step ST1201), and VSTI recorded in the disk 100 is read out (step ST1201). In stream recording for recording MPEG-TS, the PMT is contained in the stream to be recorded, and the stream type is described in this PMT (described later by referring to FIG. 36).

From the stream type determined first, four stream types are processed separately (step ST1203). That is, if the stream type is "0x01", the MPEG-1 video packet of the corresponding PID is read out, and from this sequence header, the resolution, aspect ratio and other data are acquired (step ST1204). If the stream type is "0x02", the MPEG-2 video packet of the corresponding PID is read out, and from this sequence header, the resolution, aspect ratio, and other data are acquired (step ST1206). When the stream type is "0x03", the MPEG-1 audio data of the PID is read out, and from this sequence header, the sampling frequency, number of quantizing bits, number of channels, and other data are acquired (step ST1208). When the stream type is "0x04", the MPEG-2 audio packet of the PID is read out, and from this sequence header, the sampling frequency, number of quantizing bits, number of channels, and other data are acquired (step ST1210).

When the stream type is "0x01" or "0x02", after acquiring data such as resolution and aspect ratio of the video, it is determined if the VSTI of the same content is present in the VSTI determined at ST1200 (step ST1212). If the same content is not found (No in step ST1212), a new VSTI is created on the basis of the previously read-out data (step ST1214). If the same content is found (Yes in step ST1212), the number is set in the corresponding ESOB_ES_VSTIN or ASTIN 1324323 (FIG. 10), and the VSTI remains unchanged. The VSTI number obtained herein is related (linked) to the stream number (component group number), and stored in the work RAM 80A (step ST1216).

On the other hand, when the stream type is "0x03" or "0x04", after acquiring data such as sampling frequency and number of channels of the audio, it is determined if the ASTI of the same content is present in the ASTI determined at ST1200 (step ST1222). If the same content is not found (No in step ST1222), a new ASTI is created on the basis of the previously read-out data (step ST1224). If the same content is found (Yes in step ST1222), the number is set in the corresponding ESOB_ES_VSTIN or ASTIN 1324323 (FIG. 10), and the ASTI remains unchanged. The ASTI number obtained herein is related (linked) to the stream number (component group number), and stored in the work RAM 80A (step ST1216).

The foregoing process is repeated if there is other stream not creating VTSI and/or ASTI (Yes in step 1230).

When there is no stream not creating VTSI and/or ASTI (No in step 1230), the process in FIG. 27 is over, and return to the process in FIG. 22.

Processing in FIG. 27 may be briefly explained in a different manner as shown below.
(a) The VSTI and ASTI recorded in the disk are stored in the work RAM 80A.
(b) Determining the PMT (FIG. 36), the number of set streams is determined.
(c) Determining the stream type based on the PMT, it is determined if the stream is video or audio, and otherwise the process moves to next stream check.
(d) Stream types are classified into MPEG-1 video, MPEG-2 video, MPEG-1 audio, MPEG-2 audio, etc., the content data is checked according to the type, and the attribute information is read out.
(e) Attribute is compared with the VSTI, ASTI, and if the same attribute information is found, the number is set in the corresponding ESOB_ESI, thereby transferring to next stream check.
(f) On the basis of attribute information, VSTI and/or ASTI is newly set, and the number is set in the corresponding ESOB_ESI, thereby transferring to next stream check.
(g) Process is repeated by the number of set streams.

FIG. 28 is a flowchart explaining an example of contents of creating process of stream information SFI or ESFI in recording end process (ST150) shown in FIG. 22 (stream file information creating process flow).
(a) First, in order to increase one SOBI, its search pointer SOBI_SRP is increased, and recording region of increased management information SOBI and SOBI_SSRP in the disk is preserved (step ST1500).
(b) Recording time is set in the SOB_REC_TM and SOB_REC_TM_SUB (step ST1502). Herein, the clock in the apparatus (the STC unit 102 in FIG. 18) is set/corrected by the TDT (time data table), and always accurate time is obtained.
(c) Start PTM and end PTM are set (step ST1502).
(d) According to record rate, PCR_POS_SHIFT is set (step ST1504).
(e) When the stream type is transport stream (TS stream: broadcasting system of ARIB or DVB) (Yes in step ST1506), "188" is set in the APP_PKT_SZ, and "8" is set in the PKT_GRP_SZ (step ST1508). Otherwise (No in step ST1506), the APP_PKT_SZ and PKT_GRP_SZ are set in values suited to the broadcasting system (step ST15010). More specifically, in step ST1410, the APP_PKKT_SZ is set in the value of transfer packet length, and the PKT_GRP_SZ is set in the value corresponding to the transfer packet length.
(f) In step ST1509, it is determined whether the broadcasting system is ARIB or not. If not ARIB, in step ST1511, the data is recorded by setting in the structure suited to each system, and the process is terminated. In the case of ARIB, record starting PAT is read out from the work memory in step ST1514, and the TS_ID, NETWORK_PID and PMT_ID (PID of PMT used in this stream object ESOB) are set.
(g) From the PMT, the SERVICE_ID (Program_Number in PMT) and PCR_PID are set (step ST1516). Further, as for the FORMAT_ID and VERSION, in the case of internal tuner, it is the default in the apparatus. In the case of external digital input, in the FORMAT_ID and VERSION, the value of the Registration_Descriptor (abbreviated as REG_DES) sent from the digital input is set (step ST1516).
(h) Further, the number of recorded ESs is set. (In the PMT, information and number of all items of broadcast ES are set, all ESs may not be always recorded at the time of recording, and hence the number of recorded ESs is set) (step ST1516).
(i) Component group descriptor in the event information table EIT includes the information showing which ES and which ES should be played back as a set, and the information of the set of ESs is compiled as a group (step ST1518). The component tag information of the group is converted into the PID by the stream descriptor in the PMT, and this information is stored as group information. This EIT information may vary with the broadcasting system.
(j) Logic block address (LB address) starting recording is set in the ADR_OFS, and on the basis of each segment information, MAPI is created in each stream (step ST1520). However, as for undesired stream, MAPI is not created or "0" is set in the SOBU_ENT_Ns.

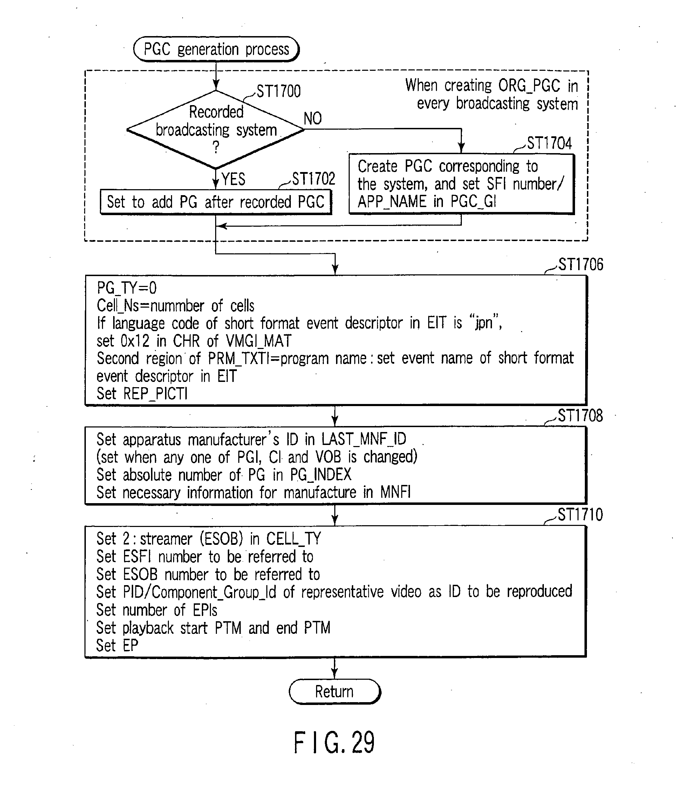

FIG. 29 is a flowchart explaining an example of a manner of creating program including setting process of ID (ST170) to be referred to when reproducing in the case of cell type 13341 in the cell information CI shown in FIG. 15 (the C_TY or CELL_TY being "0") (program creating process flow).

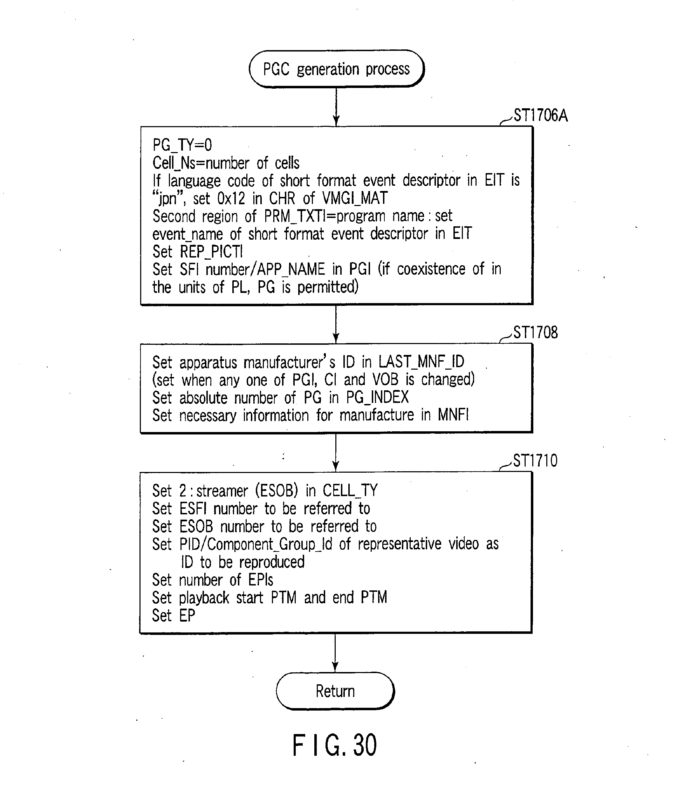

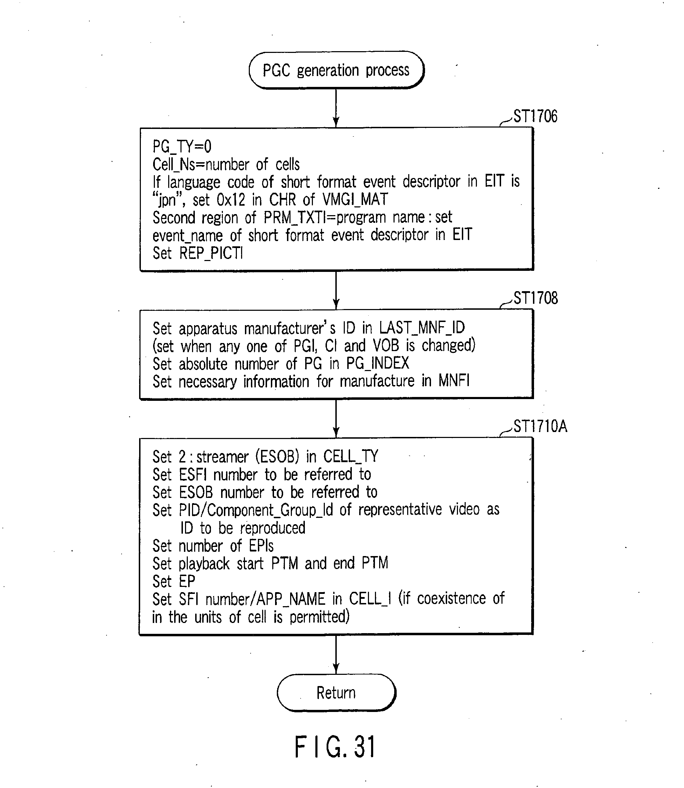

Herein, when data of plural broadcasting systems are recorded in coexistence in one medium, as mentioned above, the coexistence may be permitted or inhibited at various levels, and FIG. 29 shows a case of permitting coexistence in program chain unit. A case of permitting coexistence in program or play list unit is shown in FIG. 30, and a case of permitting coexistence in cell unit is shown in FIG. 31.

For example, by setting the erase permit flag (= "0") in the program type (PG_tY) 13321 included in the program information (PGI) 13322, and the number of cells is set in the cell number (C-Ns) 13323 included in this PGI 13332 (step ST1706).

Herein, in the case of the broadcasting system of ARIB, when Language_code of short format event descriptor in the EIT is "jpn", "0x12" is set in the VMG_MAT, event descriptor event_name (program name) is set in the second region of the PRM_TXTI, and information of representative image is set in the REP_PICTI (step ST1706).

The manufacturer's ID of this apparatus is set in editor ID (LAST_MNF_ID) in the program information (PGI) 1332 in FIG. 15. In this set value, if the PGI, CI, SOB and/or VOB is changed, the manufacturer's ID of the apparatus thus changed is set (step ST1708).

Setting in this LAST_MNF_ID is made in order to identify the manufacturer of the apparatus used in editing or recording in each disk in the last place. By this setting, if a disk recorded by an apparatus of a certain manufacturer is edited later by an apparatus of a different manufacturer, it is easy to remedy if a trouble occurs (such as failure of playback of partial or whole information).

Herein (in step ST1708), an absolute number is set in the PG_INDEX, and it is possible to refer to by the PG unit when referring to by other application software. Further, original information of manufacturer is set in the MNFI.

In the cell type, further, the streamer (information (C_TY = "2") showing the recording object is stream object ESOB) is set (step ST1710). Herein, in step ST1710, further setting the stream information file information (ESFI) number to be referred to, and the stream object (ESOB) number to be referred to, the representative PID or Component_Group_Id of the video as the ID to be played back is set, and the number of EPIs, playback start PTM, playback end PTM, and entry point EP are set.

FIG. 30 is a flowchart explaining an example of a manner of creating program including setting process of ID (ST170) to be referred to when reproducing in the case of inhibiting coexistence in PGC unit (program creating process flow).

Only step ST1706 is different from FIG. 29. In step ST1706A in FIG. 30, for example, erase permit flag (= "0") is set in the program type (PG_TY) 13321 included in the program information (PGI) 1332, and the number of cells is set in the cell number (C_Ns) 13323 included in this PGI 1332, and when the Language_code of short format event descriptor in the EIT is "jpn," "0x12" is set in the CHR of MVG_MAT, and the event descriptor event_name (program name) is set in the second region of PRM_TXTI, and further information of representative image is set in the REP_PICTI, and moreover SFI number/AAAPP_NAME is set in the PGI. Other steps are same as in FIG. 29.

FIG. 31 is a flowchart explaining an example of a manner of creating program including setting process of ID (ST170) to be referred to when reproducing in the case of permitting coexistence in cell unit (program creating process flow).

Only step ST1710 is different from FIG. 29. In step ST1710A in FIG. 31, the streamer (information (C_TY = "2") showing that the recording object is the stream object ESOB) is set in the cell type, and the stream information file information (ESFI) number to be referred to, and the stream object (ESOB) number to be referred to are set, and the representative PID or Component_Group_Id (of the video) as the ID to be played back is set, and the number of EPIs, playback start PTM, playback end PTM, and entry point EP are set, and further SFI number/APP_NAME is set in the cell information CI. Other steps are same as in FIG. 29.

Processing in recording mode (FIG. 21, FIG. 22, FIG. 24 to FIG. 31) may be briefly explained in a different manner as shown below.
<01> First of all, in program setting function, the program to be recorded is determined by using the EPG (electronic program guide), and reception is started to record the determined program.
<02> When the MPU 80 receives a record command from the key input unit 103, management data is read in from the drive unit 51, and writing region is determined (step ST100 in FIG. 21). At this time, the file system is checked, and it is determined whether recording is possible or not, and when possible, the recording position is determined, or if not possible, it is noticed to the user, and the process is stopped.
<03> The determined region is set in the management region so as to be written, and write start address of video data is set in the drive unit 51, and it is ready to record the data (step ST110 in FIG. 21).
<04> The time is reset in the STC unit 102 (step ST112 in FIG. 21). Herein, the STC unit 102 is the timer of the system, and recording or reproducing is executed on the basis of the clock count value of this STC unit 102.
<05> Reading the PAT of the program to be recorded (step ST116 in FIG. 21), the PID is determined for taking in the PMT of the desired program, and the desired PMT is read in, and the PID of the data (video, audio) to be decoded (recorded) is determined. At this time, the PAT and PMT are stored in the work RAM 80A of the MPU 80, and written into the management information. Data of the VMG file is written in the file system, and necessary information is written into the VMGI.
<06> Recording information are set in necessary parts (step ST114 in FIG. 21). At this time, segment setting of data and reception setting of TS packet are set in the formatter 90. Setting the PID of the data to be recorded, it is prepared so that only the desired video stream is recorded. Start of holding of TS packet is set in the buffer 91. The formatter 90 starts buffer fetch process as shown in FIG. 24.
<07> The PTM creates VSTI and ASTI (step ST120 in FIG. 22; process in FIG. 27).
<08> When the data in the buffer 91 is collected by a predetermined amount (portion of one CDA) (Yes in step ST140 in FIG. 22), ECC is processed through the D-PRO unit 52, and data is recorded in the disk 100 (step ST142 in FIG. 22).
<09> Periodically during recording (before the buffer RAM 91 in the formatter 90 is full), segment information is stored in the work RAM 80A of the MPU 80 (step ST146 in FIG. 22). This segment information is the segment information of ESOBU, including the start address of ESOBU, LB length of ESOBU, end address of I picture, arrival time ATS of ESOBU, etc.
<10> Determining the remaining capacity, if less than predetermined, remaining capacity warning process is appropriately executed as explained in FIG. 22.
<11> Determining whether end of recording or not (record end key is pressed or the remaining capacity is used up), when ending (Yes in step ST148 in FIG. 22), the remaining segment information is acquired from the formatter 90, and added to the work RAM 80A, and these data are recorded in the management data VMGI, and further the remaining information is recorded in the file system (step ST150 in FIG. 22; process in FIG. 28).
<12> If not ending (No in step ST148 in FIG. 22), back to step <08>, data is taken in (or played back) continuously.

Herein, to display the data being recording (data being played back) on the TV 68, data is simultaneously sent to the decoder 59 and D-PRO unit 52, and displayed (played back). In this case, the MPU 80 sets playback in the decoder 59, and then the decoder 59 plays back automatically.

The D-PRO unit 52 compiles an ECC group by collecting every 16 LBs or 32 LBs, and sends to the drive unit 51 together with the ECC. However, if the drive unit 51 is not ready for recording, the data is transferred to the temporary storage unit 53 to wait until it is ready to record data, and when becoming ready, recording is started. Herein, the temporary storage unit 53 is preferred to be a memory of large capacity in order to store data for more than several minutes by high speed access. However, since the MPU 80 reads and writes the file management region, it is possible to read and write at high speed in the D-PRO unit 52 through an exclusive microprocessor bus.

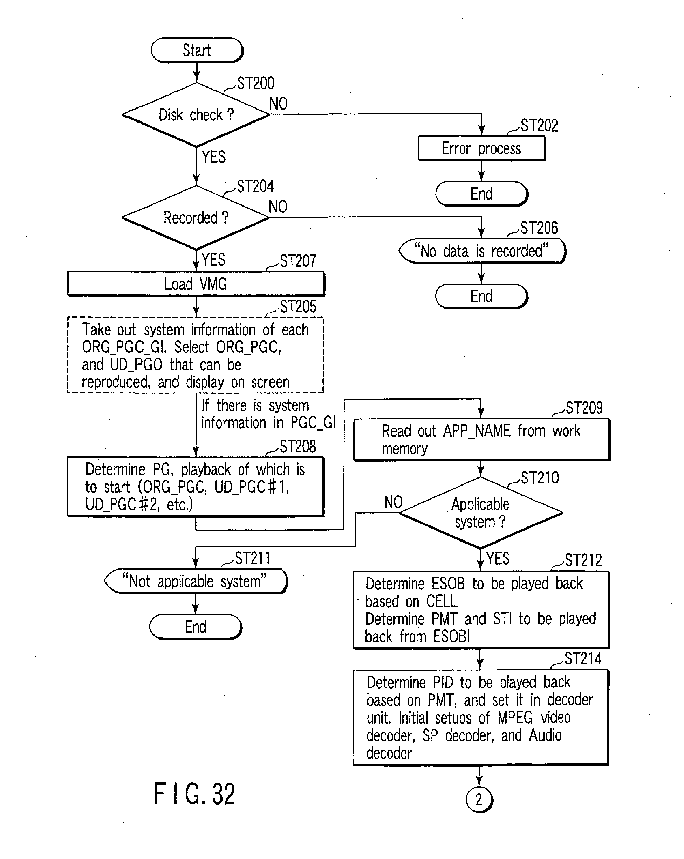

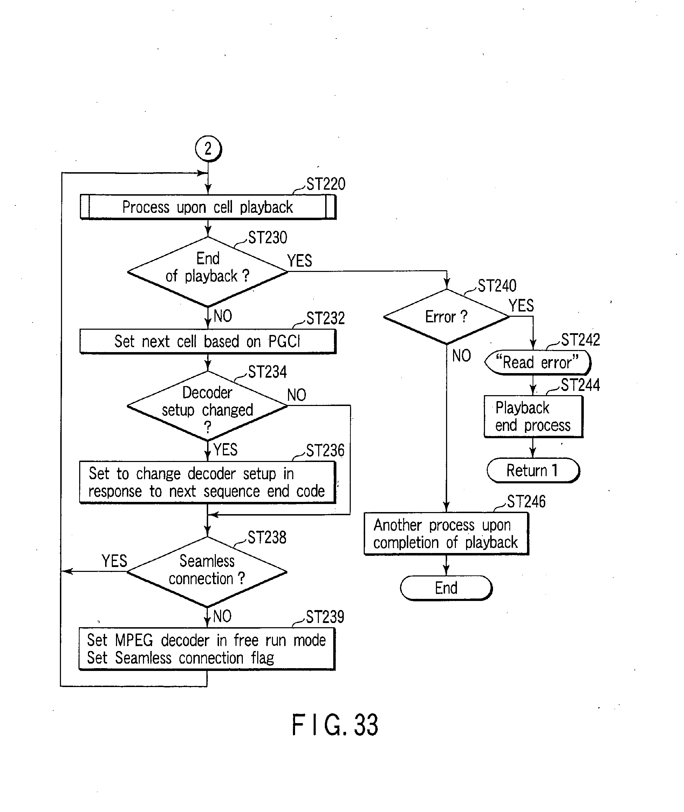

FIG. 32 and FIG. 33 are flowcharts explaining an example of playback process of the apparatus in FIG. 18 (overall playback operation flow referring to the APP_NAME).
<01> Checking the disk (step ST200), it is determined if the disk is rewritable or not (R, RW, RAM). If the disk is not rewritable (No in step ST200), it is informed (step ST202), and the process is over.
<02> In the case of a rewritable disk (Yes in step ST200), the file system of the disk is read out, and it is determined if recorded data is present or not (step ST204). If nothing has been recorded (No in step ST204), "Nothing is recorded" is displayed (step ST206), and the process is over.
<03> If recorded (Yes in step ST204), management information (VMG file) 130 is read in (step ST207), and the system information of each ORG_PGC_GI is taken out. Reproducible ORG_PGC or UD_PGC is selected, and displayed on the screen (step ST205; if system information is provided in PGC_GI). The program and cell to be played back are determined (selected by the user), and file pointer (logic address) for starting playback is determined (step ST208). Herein, when playback in the recording sequence is selected, playback conforms to the ORG_PGCI. When playback by program sequence (procedure determined by the user) is selected, playback starts according to the UD_PGCI (or play list) of the number corresponding to the program to be played back.
<04> Herein, the APP_NAME is read out as specific information setting the value corresponding to the recording broadcasting system, from the management information (for example, the ESOBUI 13523 in FIG. 6) stored in the work RAM 80A (step ST209). If the value set in the APP_NAME does not conform to the system of the playback apparatus (FIG. 18) (No in step ST210), the warning ("System not conforming") is displayed on the monitor screen (step ST211), and the process is over.
   On the other hand, when the value set in the APP_NAME conforms to the system of the playback apparatus (FIG. 18) (Yes in step ST210), start of playback is processed (step ST212).
<05> Decoders are set initially (step ST214).
<06> Cell playback is processed (step ST220). Determining whether end of playback or not (step ST230), and if ending (Yes in step ST230), error is checked (step ST240). If error is found (Yes in step ST240), the result ("Reading error") is displayed (step ST242), and playback end is processed (step ST244). If no error is found (No in step ST240), playback end is processed (step ST246), and the operation is terminated.
<07> If not end of playback (No in step ST230), next cell is determined from the PGCI (step ST232), and it is determined if setting of decoders (61, 64, etc.) has been changed or not (step ST234). If changed (Yes in step ST234), changed attribute is set in the decoder so that decoder setting may be changed in the next sequence end code (step ST236). Linking from the previous cell playback to next cell playback is determined whether seamless connection or not. If not seamless connection (No in step ST238), the MPEG decoder (61, etc.) is set in free run mode, and seamless connection flag is set (step ST239), and the process returns to step ST220. In the case of seamless connection (Yes in step ST238), the process directly returns to step ST220.
<08> During cell playback process (step ST220), determining whether playback is over or not (step ST230), if not ending playback, process in step ST220 continues.

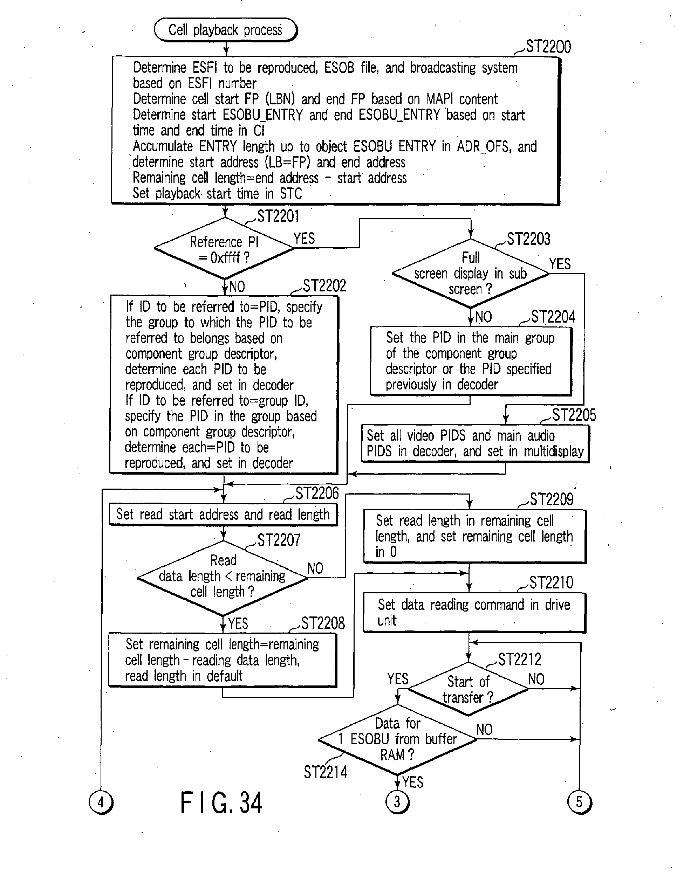

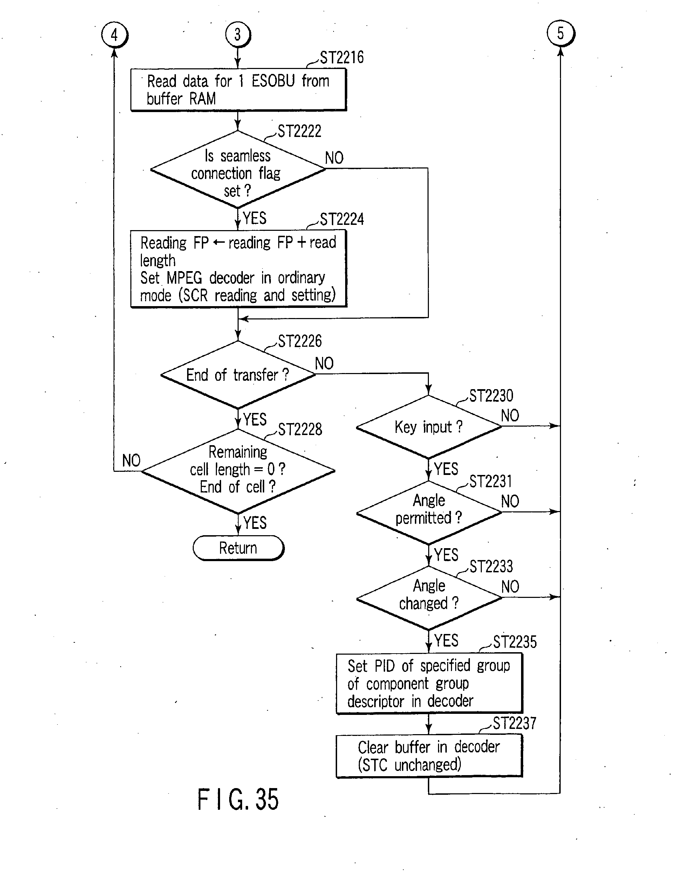

FIG. 34 and FIG. 35 are flowcharts explaining an example of cell playback process (step ST220 in FIG. 33) of the apparatus in FIG. 18 (cell playback process flow using both the ADR_OFS of logic block unit and packet unit).
<01> From the ESFI number, the ESFI, ESOB file to be played back and broadcasting system are determined. From the contents of MAPI, the start file pointer FP of cell (expressed by logic block number LBN) and end FP are determined, and further from the start time and end times in the cell information, ESOBU_ENTRY of start and ESOBU_ENTRY of end are determined, and data length of ENTRY up to the desired ESOBU_ENTRY is accumulated in the ADR_OFS, and start address (LB = FP) and end address are determined '(step ST2200). The remaining cell length is calculated by subtracting the start address from the end address, and the playback start time is set in the STC.
<02> If the ID to refer to is "0xffff" (Yes in step ST2201), two cases may be considered, that is, the display method of multi-angle is displayed simultaneously in the sub screen, or the previously set group is displayed. In the former case (Yes in step ST2203), the PID of all video and the PID of main audio are set in the decoder, and the decoder is set in the sub screen simultaneous display mode (step ST2205). In the latter case (No in step ST2203), the PID of the group set before is set in the decoder (step ST2204). Or if there is no prior setting, the default value or the value of main group is set (step ST2204).
<03> If the ID to refer to is not "0×ffff" (No in step ST2201) and the ID to refer to is PID (step ST2202 first half), from the component group descriptor, the group to which the ES to refer to belongs is specified, and each PID to reproduce is determined, and set in the decoder (step ST2202).
   On the other hand, if the ID to refer to is the group ID (step ST2202 latter half), from the component group descriptor, the PID in the group is specified, and each PID to reproduce is determined, and set in the decoder (step ST2202).
<04> It is set to execute decoding process in the decoder (step ST2202).
<05> Executing reading process during playback, from the start file pointer, reading address and reading size are determined (step ST2206).
<06> Reading unit size to be read and the remaining cell length are compared, if the remaining cell length is longer (Yes in step ST2207), the value calculated by subtracting the reading unit size to be read out from the remaining cell length is set in the remaining cell length (step ST2208). If shorter (No in step ST2207), the reading length is set in the remaining cell length, and the remaining cell length is set in "0" (step ST2209).
<07> The reading length is set in the length of reading unit, and the reading address, reading length and reading command are set in the drive unit 51 (step ST2210).
<08> After start of transfer (Yes in step ST2212), the process waits until one ESOBU portion is collected (step ST2214). When collected (Yes in step sT2214), the process goes to next step ST2216.
<09> Inside the decoder 59, the packet group data being read out is received in the separator 60 (step ST2216), and formed into packet. According to the stream ID and sub stream ID, the video packet data (MPEG video data) is transferred to the video decoder 61, audio packet data is transferred to the audio decoder 64, and sub-picture packet data is transferred to the SP decoder 63. The TS packet transfer unit 101 converts the read packet group data into elementary stream, and sends to the decoders 61 and 64 by internal bus, and processes decoding.
<10> During this transfer process, if seamless connection flag is set (Yes in step ST2222), "the reading file pointer (FP) + reading length" is set in the reading file pointer, the MPEG decoder 61 is set to a normal mode (reading and setting of SCR) and the seamless connection flag is reset (step ST2224). Herein, the reading FP is replaced by the sum of the reading FP and previously set reading length.
<11> During playback, the contents of the STC unit 102 are displayed as playback time. However, if the STB 83 can display the playback time on the basis of the PTS in the video data, it is displayed.
<12> Determining whether the transfer is over or not, if not terminated (No in step ST2226), the process goes to step ST2230.
<13> Determining whether the transfer is over or not, if terminated (Yes in step ST2226), the remaining cell length is determined (step ST2228). If not "00" (No in step ST2228), the process returns to step ST2206, and if "00" (Yes in step ST2228), this process is terminated.
<14> If not ending the transfer (No in step ST2226), key input is determined (step ST2230). When angle playback of multi-angle or the like is permitted (Yes in step ST2231) and when changing the angle (Yes in step ST2233), the PID of the predetermined group of the component group descriptor is set in the decoder (step ST2235). Then, the count value of the STC 102 is unchanged, and only the buffer in the decoder is cleared (step ST2237), and the process returns to step ST2212.

FIG. 36 is a view for explaining an example of the data structure of the program map table PMT which can be used by the apparatus of FIG. 18. In this PMT, 8-bit stream type 3421 allows to identify various streams. For example, if the stream type is "0x01", it indicates an MPEG-1 video stream; if the stream type is "0x02", it indicates an MPEG-2 video stream (in case of Hi-Vision); if the stream type is "0x03", it indicates an MPEG-1 audio stream; and if the stream type is "0x04", it indicates an MPEG-2 audio stream (in case of AAC multi-channel audio).

FIG. 37 is a view showing an example of the contents of a digital copy control descriptor that can be used in the PMT in FIG. 36 and the like (the service description table SDT, event information table EIT, and the like).

In this descriptor, a "descriptor tag" field is set to be, e.g., "0xC1", and a "descriptor length" field indicates the descriptor length. A "digital recording control" field describes "copy generation control data". A "maximum bit rate flag" field describes "whether or not the maximum transfer rate of the service of interest is to be described". If the maximum transfer rate is not described, the flag is set to be, e.g., "0"; otherwise, the flag is set to be, e.g., "1". When "0" is described in a "component control flag" field, for example, the overall program is specified (in case of PMT). If "1" is described in this field, another state is described. A "copy control type" field describes "copy generation control data" (see FIGS. 37 to 39). An "APS control data" field describes "analog output control data". A "maximum bit rate" field describes a "maximum transfer rate" (when the maximum bit rate flag is "1").

FIG. 38 is a view for explaining an application example of digital copy control to video data. Copy control of video data is roughly categorized into three types, i.e., "unlimited copy permission (copy free)", "copy inhibition (copy never or copy no more)", and "copy permission of only one generation (copy once)".

In case of "unlimited copy permission", analog copy control is set to be "unlimited copy permission", digital recording control is set to be, e.g., "01", control type is set to be, e.g., "00", and APS control data is set to be, e.g., "Don't care (ignore)".

In case of "copy inhibition", (1) analog copy control is set to be "copy inhibition (digital copy is inhibited, but analog copy is not inhibited since no copy protection pulses of the Macrovision® system are inserted)", digital recording control is set to be, e.g., "01", control type is set to be, e.g., "11", and APS control data is set to be, e.g., "00".

In case of "copy inhibition", (2) analog copy control is set to be "copy inhibition (both analog copy and digital copy are inhibited)", digital recording control is set to be, e.g., "01", control type is set to be, e.g., "11", and APS control data is set to be, e.g., "other than 00".

In case of "copy permission of only one generation", (3) analog copy control is set to be "copy permission of only one generation (analog copy is permitted since no copy protection pulses are inserted)", digital recording control is set to be, e.g., "01", control type is set to be, e.g., "10", and APS control data is set to be, e.g., "00".

In case of "copy permission of only one generation", (4) analog copy control is set to be "copy permission of only one generation (both analog copy and digital copy of the next and subsequent generation are inhibited)", digital recording control is set to be, e.g., "01", control type is set to be, e.g., "10", and APS control data is set to be, e.g., "00".

FIG. 39 is a view for explaining an application example of digital copy control to audio data. Copy control of audio data is also roughly categorized into three types, i.e., "unlimited copy permission (copy free)", "copy inhibition (copy never or copy no more)", and "copy permission of only one generation (copy once)".

In case of "unlimited copy permission", digital recording control is set to be, e.g., "01/11", and control type is set to be, e.g., "00".

In case of "copy permission of only one generation", digital recording control is set to be, e.g., "01/11", and control type is set to be, e.g., "10".

In case of "copy inhibition", digital recording control is set to be, e.g., "01/11", and control type is set to be, e.g., "11".

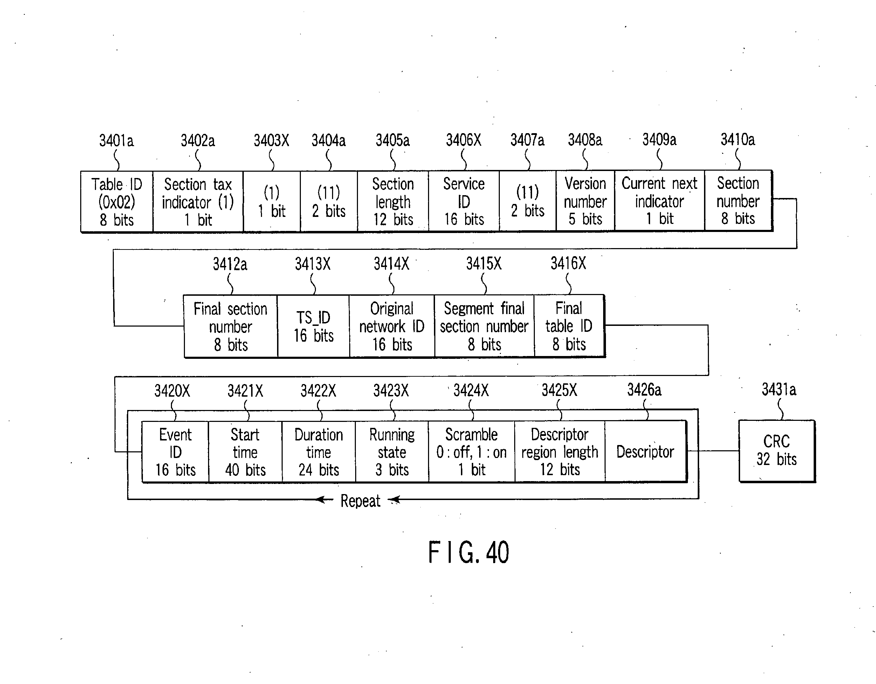

FIG. 40 is a view explaining a data structure example of the event information table EIT usable in the apparatus in FIG. 18. This EIT has a recording field of descriptor 3426a, and the descriptor such as "component group descriptor" can be stored in this field.

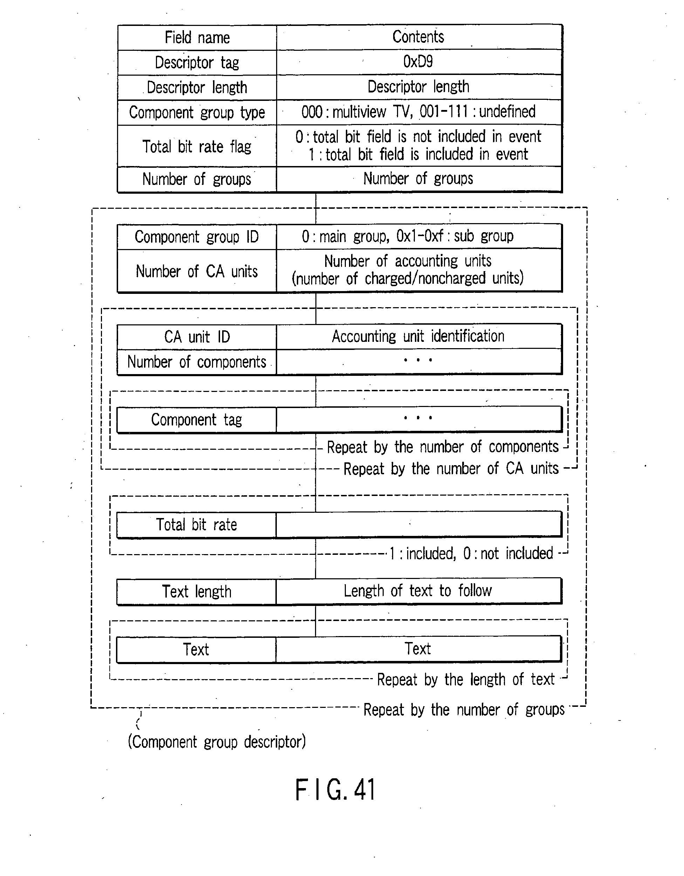

FIG. 41 is a view explaining an example of contents of a component group descriptor. In this descriptor, the "descriptor tag" field is, for example, "0xD9," and the descriptor length is shown in the "descriptor length" field. In the "component group type" field, for example, "000" showing multiview TV is described, or "001" to "111" in undefined state for the use of other purpose may be described. In the "total bit rate flag" field, for example, "0" showing absence of total bit field in the event or "1" showing presence of total bit field in the event is described. In the "group number" field, the number of groups of the component group descriptor is described.

The component group descriptor for the number of groups includes "component group ID" field and "CA unit number" field. In the "component group ID" field, the main group is indicated by ID = "0," and sub groups are indicated by ID = "0x1" to "0xf."

The "CA unit number" field includes "CA unit ID" field for identifying the accounting unit, and "component number" field for showing the number of components, and the "component number" field further includes "component tag" field repeated for the number of components. The "component group ID" field and "CA unit number" field enveloping this "component tag" field are repeated for the number of CA units.

Further, the "component tag" field is present only when the total bit rate flag is "1" (is not present if it is "0"), and when it is present, the subsequent text length is indicated in the "text length" field. In the "text" field down below, the text of the length indicated in the "text length" field is repeated form the length of text.

Summing up the "component group ID" field or "text length" field, it is repeated for the number of groups described in the "group number" field.

FIG. 42 is a view showing an example of the cpntents of a component descriptor that can be used by the PMT shown in FIG. 36 and the like (the event information table EIT and the like).

In this descriptor, a "descriptor tag" field is set to be, e.g., "0×50", and a "descriptor length" field indicates the descriptor length. A "stream contents" field describes, e.g., "0×01" indicating video. A "component type" field describes, e.g., a "type of component". A "component tag" field describes, e.g., a "common tag in a program". An "ISO_639 language code" field describes, e.g., "jpn" indicating a Japanese language code. A "Text_Char" field can describe character strings such as "video", "audio", and the like.

FIG. 43 is a view for explaining an example of the contents of component types shown in FIG. 42. When the component type is "0x01", it indicates, e.g., that "video = 480 interlaced (or 525 interlaced) and aspect ratio = 4 : 3". When the component type is "0x03", it indicates, e.g., that "video = 480 interlaced (or 525 interlaced), aspect ratio = 16 : 9, and pan vector = none". When the component type is "0x04", it indicates, e.g., that "video = 480 interlaced (or 525 interlaced) and aspect ratio > 16 : 9 (e.g., wide screen with cinema scope size)".

When the component type is "0xA1", it indicates, e.g., that "video = 480 progressive (or 525 progressive) and aspect ratio = 4 : 3". When the component type is "0xA3", it indicates, e.g., that "video = 480 progressive (or 525 progressive), aspect ratio = 16 : 9, and pan vector = none". When the component type is "0xA4", it indicates, e.g., that "video = 480 progressive (or 525 progressive) and aspect ratio > 16 : 9 (e.g., wide screen with cinema scope size)".

When the component type is "0xB1", it indicates, e.g., that "video = 1080 interlaced (or 1125 interlaced) and aspect ratio = 4 : 3". When the component type is "0xB3", it indicates, e.g., that "video = 1080 interlaced (or 1125 interlaced), aspect ratio = 16 : 9, and pan vector = none". When the component type is "0xB4", it indicates, e.g., that "video = 1080 interlaced (or 1125 interlaced) and aspect ratio > 16 : 9 (e.g., wide screen with cinema scope size)".

FIG. 44 is a view explaining an example of contents of a registration descriptor.

In this descriptor, the "descriptor tag" field is, for example, "0x5," and the descriptor length is shown in the "descriptor length" field. In the "stream contents" field, for example, "0x01" showing video is described. In the "format ID" field, format type, for example, "0x4d54524d" showing MTRM is described. Herein, the MTRM is short for MPEG transport stream for recording media, and "0x4d54524d" is a value set in the digital video (DHVS). In the "format version" field, for example, "0x10"' is described as format version.

FIG. 45 is a view explaining an example of contents of a short-format event descriptor.

In this descriptor, the "descriptor tag" field is, for example, "0x4d," and the descriptor length is shown in the "descriptor length" field. In the "0x4d ISO_639_LANGUAGE_CODE" field, for example, "ARIB: jpn" is described as the broadcasting system employed in Japan. In the "event_name length" field, for example, "program name length" is described.

In the "event_name length" field, "event_name char" showing the program name is repeated for the portion of the program name length.

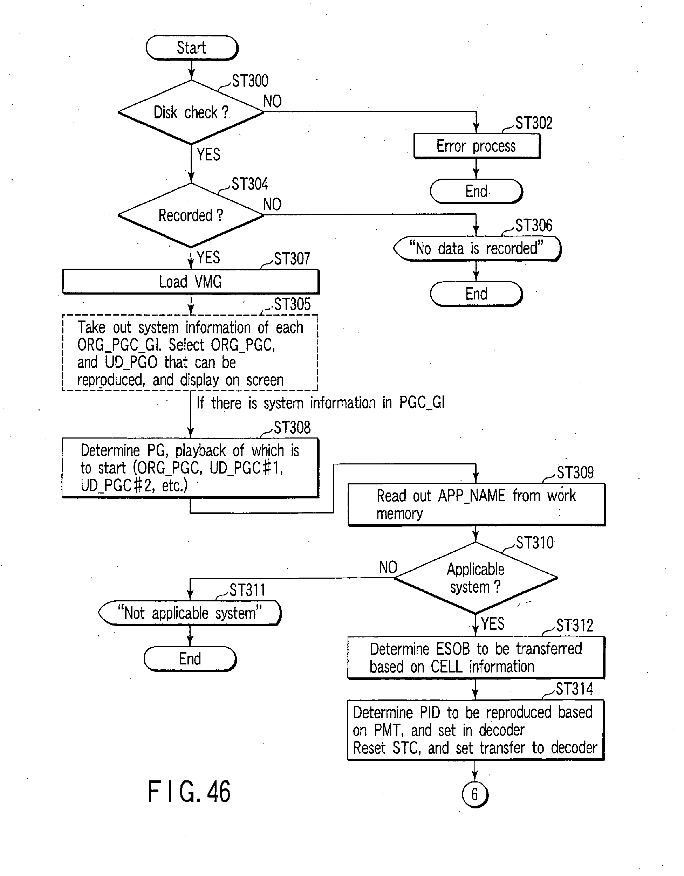

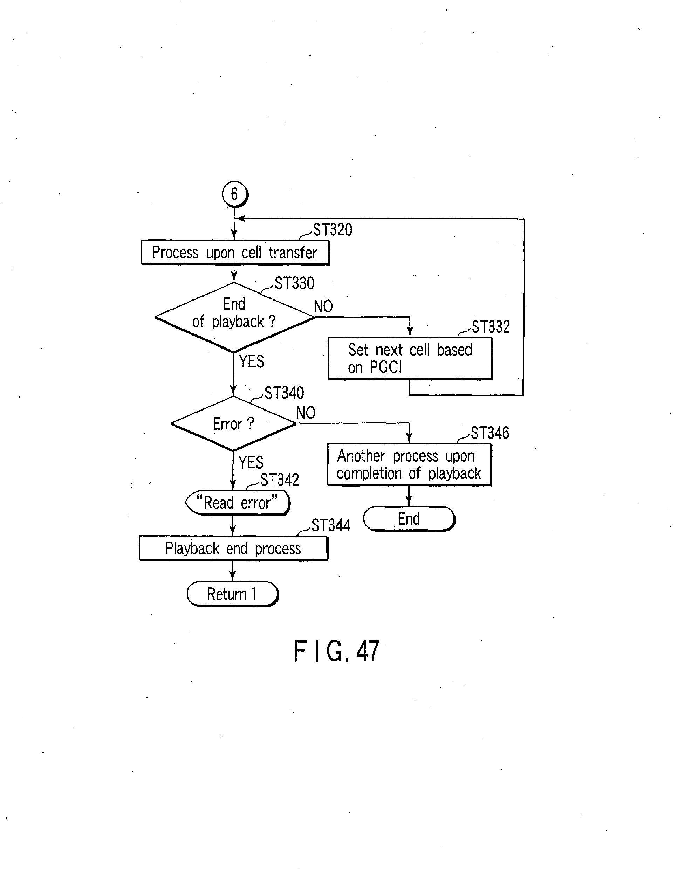

FIG. 46 and FIG. 47 are flowcharts explaining an example of overall data transfer operation of the apparatus in FIG. 18 (overall transfer operation flow referring to the APP_NAME).

Steps ST300 to ST312 in FIG. 46 are same as steps ST200 to ST212 in FIG. 32 (overall playback operation). In step ST314 in FIG. 46, the PID to be played back is determined from the PMT, and set in the decoder 59, and the STC 102 is reset, and transfer information is set in the decoder 59. Then, cell transfer process is started (step ST320). Steps ST320 to ST346 in FIG. 47 are same as steps ST220 to ST246 in FIG. 33 (overall playback operation). In FIG. 47, however, process corresponding to steps ST234 to ST239 in FIG. 33 is not executed.

As evident from comparison between FIGS. 32 to 33, and FIGS. 46 to 47, the process of transferring data to outside is nearly same as ordinary playback process, but the following difference is present inside. That is, in the process in FIGS. 46 to 47, in cell playback process, the TS packet transfer unit 101 calculates the transfer time on the basis of the ATS in the packet group, and transfers the TS packet by the time conforming to the transfer time. Reading the PCR from the PCR position information, the time of the STC 102 is adjusted (STC reset in step ST314), so that the internal clock STC and external clock PCR are synchronized. As a result, in cell playback of data of stream recording, the user can specify the playback point by the time base.

Data process in playback (FIGS. 46 to 47) may be briefly described as follows.
<01> Checking the disk, it is determined if the disk is rewritable or not (R, RW, RAM) (step ST300). If the disk is not rewritable (No in step ST300), it is informed (step ST302), and the process is over.
<02> Reading out the file system of the disk, it is determined if recorded data is present or not, and if nothing has been recorded, "Nothing is recorded" is displayed (step ST306), and the process is over.
<03> Reading in the VMG file (step ST307), the system information of each ORG_PGC_GI is taken out. Reproducible ORG_PGC or UD_PGC is selected, and displayed on the screen (step ST305) (if system information is provided in the PGC_GI). The program and cell to be played back are determined (selected by the user), and a file pointer (logic address) for starting playback is determined (step ST308). Herein, when playback in the recording sequence is selected, playback conforms to the ORG_PGCI, or in the case of playback by every program, playback starts according to the UD_PGC of the number corresponding to the program to be played back.
<04> Reading out the APP_NAME (step ST309), the broadcasting system is determined whether applicable or not (step ST310), and if not applicable (No in step ST310), the warning ("System not conforming") is displayed (step ST311), and the process is over (to transferred to next cell).
<05> Playback start is processed (step ST312).
<06> Decoders are set initially (step ST314).
<07> Cell playback (described later) is processed, and it is determined whether playback is over or not (step ST330). If ending (Yes in step ST330), error is checked (step ST340), and if error is found (Yes in step ST340), it is informed (step ST342), and if no error is found (No in step ST340), playback end is processed (step ST346), and the operation is terminated.
<08> If not end of playback (No in step ST330), next cell is determined from the PGCI (step ST332). At this time, it is determined if setting of decoders has been changed or not, and if changed, changed attribute is set in the decoder so that decoder setting may be changed in the next sequence end code.
<09> Determining whether playback is over or not, if not ending playback, process returns to step ST320.

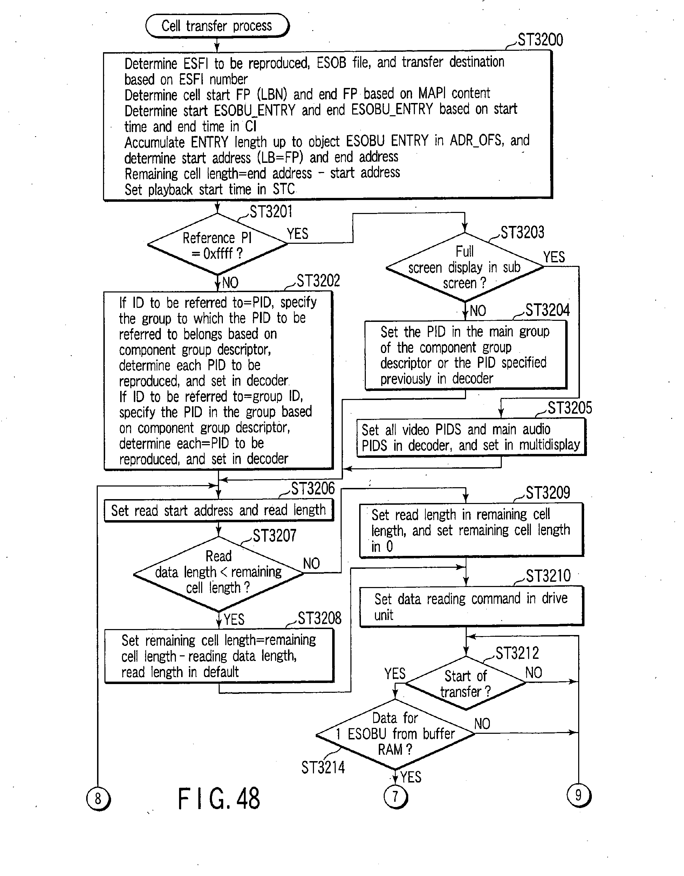

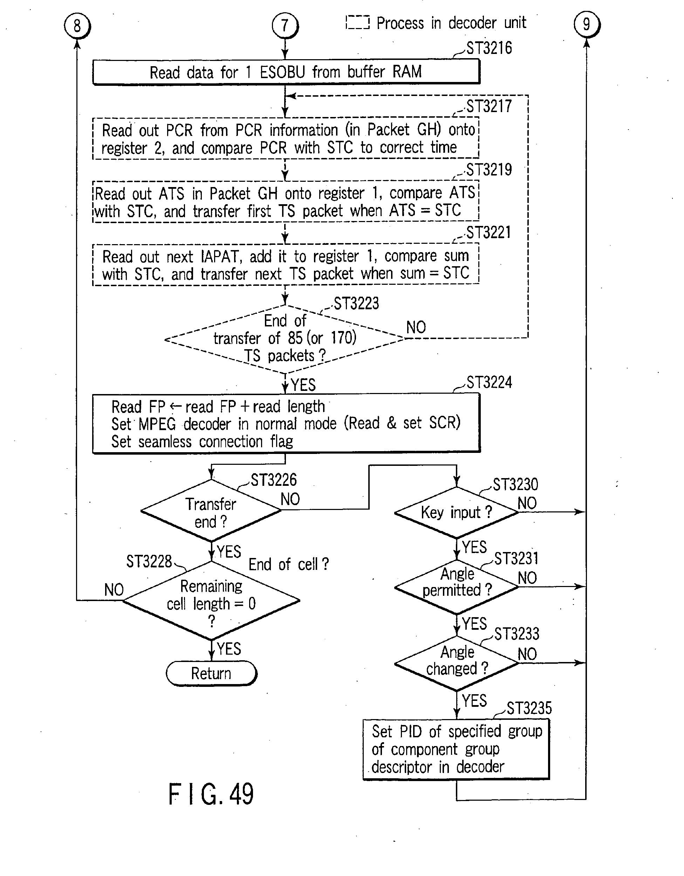

FIG. 48 and FIG. 49 are flowcharts explaining a specific example of cell transfer process (ST320) shown in FIG. 47 (cell transfer process flow using the ADR_OFS of logic'block unit and packet unit).

Steps ST3200 to ST3214 in FIG. 48 are same as steps ST2200 to ST2214 in FIG. 34 (overall playback process). Process in FIG. 49 is same as the process in FIG. 35 (cell playback process) except for steps ST3217 to ST3221 and ST3231 to ST3235.

Steps ST3216 to ST3221 in FIG. 49 are processed in the decoder 59 in FIG. 18. First, by the PCR information of the packet group header 161, the position of PCR is known, and this PCR is read out in the register II (not shown). Comparing the count values of the PCR in the register II and the STC 102, if different, the count value (corresponding to the playback time) of the STC 102 is corrected. Next, the ATS 151X in the packet group header 161 is read out in the register I (not shown). Comparing the count values of the ATS 151X in the register I and the STC 102, when coinciding, a first TS packet is transferred (step ST3217). Next, ATS 151 in packet group header 161 is read out onto register 1 (not shown). The ATS in register 1 is compared with the count value of STC 102. If they match, the first TS packet is transferred (step ST3219). After that, the next IAPAT is read out and is added to the contents of register 1 (not shown). The sum is compared with the count value of STC 102, and when the two values match, the next TS packet is transferred (step ST3221). Reading out the IAPAT and adding to the register I (not shown), the result of sum and the count value of the STC 102 are compared, and when coinciding, a next TS packet is transferred (step ST3221).

Summing up, calculation about the TS packet transfer is operated as follows. That is, the first TS packet of the packet group is transferred when the values of the ATS in the header and the STC are matched. As for the second and subsequent TS packets, the sum of the ATS and IAPAT immediately before this TS packet is compared with the'value of the STC 102, and the next packet is transferred when they are matched.

This process (steps ST3217 to ST3221) is repeated 85 times (No in step ST3223) in the case of the packet group 140 in FIG. 24. When transfer of 85 TS packets is over (Yes in step ST3223), the process goes to next step ST3224 (same process as step ST2224 in FIG. 35). Later process is same as the process in FIG. 35 (except that the process in steps ST3231 to ST3233 in FIG. 49 is the process about angle moving).

Process in cell transfer (when transferring data to outside) (FIGS. 46 to 49) may be briefly described as follows. That is, when transferring data to outside, it is almost same as ordinary playback process, except that the TS transfer unit 101 calculates the transfer time on the basis of the ATS in the packet group in the cell playback process, and transfers the TS packet by the time conforming to this transfer time.

In this calculating method, the first TS packet of the packet group is transferred when the values of the ATS in the header and the STC 102 are matched, and the second or subsequent one is transferred when the sum of one previous ATS and IAPAT immediately before the TS packet coincides with the value of the STC 102. FIG. 50 is a flowchart explaining an example of time search manner in recorded stream information of digital television broadcast program or the like in the apparatus in FIG. 18 (time search process flow).
<01> First, the user selects and determines the desired title, playback start time, and stream number (one if there is only one stream) (step ST400).
<02> According to the information selected by the user (such as the title), the program chain PGC, program PG and cell CELL to be played back are determined (steps ST402 to ST404), and the VMG information VMGI including the corresponding program chain information PGCI, program information PGI, and cell information CI is read out from the management information PGCI.
<03> From the stream file information ESFI in the cell information CI, the stream file information ESFI to be played back, stream object file ESOB, and broadcasting system are determined, and the ESOBI to be played back is determined by the ESOB number (step ST406).
<04> Playback time is compared with cumulative value of playback time of each ESOBU, and information of ESOB entry closest to the playback time and smaller than the playback time is read out (step ST409).
   At this time, the ESOBU playback time (number of frames) is cumulatively added to the time offset TM_OFS, and the ESOBU entry closest to the intended playback time and smaller than the intended playback time is determined.
<05> From the address offset ADR_OFS of the stream object ESOB, the ESOBU size up to the intended ESOB end is cumulatively added, and the address of the ESOBU is determined (step ST411).
<06> Successively, from the address of the reference picture in the intended ESOBU entry information and the intended ESOBU address, the address for starting playback is determined.
<07> From the PCR information, an address of the PCR is determined (this is expressed in PCR_POS x 2^PCR_POS_SHIFT) (step ST413). However, if the PCR information is in the packet group header, the packet group header is read out. The PCR is read out and set in the STC (step ST418).
<08> Decoding initial setting is executed in the decoder 59 (so as to decode according to the broadcasting system) (step ST420), and the display start time is set at the intended playback time.
<09> Instructing the drive unit 51 so as to read out the recorded data from the address determined in step <06>, data reading is started (step ST422).

Once playback is started, the process comes to ordinary playback process (cell playback process).

FIG. 51 is a process explaining an example of contents of the APP_NAME shown in FIG. 8, which is used in VMG creating process (ST1026) in FIG. 52 shown below (disk initializing process). The APP_NAME is composed of country ID (code for identifying a nation: for example, international telephone code "01" for the United States, "81" for Japan, etc.), authority ID (broadcasting system: "01" for ARIB, "02" for ATSC, "03" for DVB), packet format (stream packet format: "01" for MPEG_TS, etc.), network type (type of network: "01" for terrestrial digital, "02" for CS, "03" for BS digital, etc.), and broadcasting system version ("10" for 1.0, "11" for 1.1, etc.). Of them, the country ID, authority ID, and packet format must be provided with default values in the apparatus, but others may be made from received data (service information SI, etc.).

Herein, if the APP_NAME differs in each stream object ESOB, the composition of ESOBI may differ in part (after the TS_ID in FIG. 9) in every stream object ESOB.

FIG. 52 is a flowchart explaining a process of initializing the information storing disk medium 100 shown in FIG. 1A (initializing process flow). In this initializing process, first, the medium 100 (RAM disk or the like) is formatted (step ST1000), and consequently, for file management of the SR object corresponding to the HD, DVD_HDR directory is created in the file system (not shown) (step ST1002). Then, management information RTR_VMG is created (step ST1026). This management information has an area for recording the APP_NAME 132512 in FIG. 8, and digital broadcasting system planned to be recorded or the like is entered in this APP_NAME.

In these various embodiments'described so far, flexible and reliable control operation conforming to the digital broadcast can be realized.

### <Various points depending on embodiments>

<01> By PCR_POS_SHIFT, the shift extent of PCR_POS is changed to be ready for a long distance to the position of PCR (PCR_POS x 2^PCR_POS_SHIFT or PCR_POS x 2exp(PCR_POS_SHIFT) shown in (2) of FIG. 12). This PCR_POS_SHIFT is variable with the recording rate (ST1504 in FIG. 28).
   When this exponential notation method is used in PCR position notation, if the number of bits of the PCR_POST_SHIFT is small, the numerical value of 2exp(PCR_POS_SHIFT) may be large, and a large shift extent may be expressed.
<02> In the case of the MPEG-TS (transport stream), the AP_PKT_SZ is set in "0xbc" (188 bytes), and the PKT_GRP_SZ is set in "8" (8 packets: equivalent to 16k bytes if 1 packet is 2k bytes) (ST1508 in FIG. 28; see data structure in FIG. 16).
   Thus, it is easier to segment the stream composition for decoding.
<03> Information of minimum limit (FIG. 51, etc.) out of the PAT and PMT is provided in the management information VMG (ST1026 in FIG. 52). More specifically, out of the PAT, the TS_ID, NETWORK_PID and PMT_ID (ID of the PMT to be used in this stream object ESOB) are stored in the VMG, and out of the PMT, the SERVICE_ID (Program_number in the PMT) and the PID of each element stream ES are stored in the VMG, and specific stream information STI is created for the video and audio only out of the ES, and set in the VMG.
   As a result, since there is minimum limit of information in the VMG, if the PAT and/or PMT is not present at the location for starting playback, playback can be started.
<04> The PID for composing each group is set from the event information table (EIT in FIG. 40), and the main group is set in the management information (stream file information SFI or ESFI) (ST1518 in FIG. 28). At this time, information of playback sequence (program PG) may be preferably designed to allow designation of group number (Component_Group_Id, etc. at ST1710 in FIG. 29).
   Since this SFI is present, for example, if the recorded content includes multiview information, playback conforming to multiview is possible if the EIT is not present at the playback start location of multiview.
<05> The stream information STI is divided into video and audio, and VSTI and ASTI are prepared (ST1214 and ST1224 in FIG. 27). In digital broadcast, since the variety of video and audio is increased, the STI is also expected to increase in variety.
   If attempted to cover all variety of video and audio by one type of STI alone, the number of types of STI increases tremendously (the number of combinations of video types and audio type is enormous), but by dividing into video STI and audio STI, it is enough to cover the types of VSTI and ASTI individually, and hence a smaller number of STI types can cover various combination types of video and audio.
<06> LAST_MNF_ID (editor 13327 in FIG. 15) is set in the management information (ST284 in FIG. 20).
   For example, when a disk first recorded by a recorder of manufacturer "T" is then edited (or additionally recorded) by a recorder of manufacturer "M," the manufacturer and model of the apparatus used in editing (or additional recording) is known from the LAST_MNF_ID.
<07> The representative PID/group ID is stored in the cell information CI (ST1710 in FIG. 29).
   At the time of playback, by determining the value of stored representative PID/group ID and the PID of the stream for restoring on the basis of the service information SI, playback suited to multiview can be realized.
<08> Address expression of the PCR position is divided into the ADR_OFS 132241 (FIG. 10) of logic block precision (LB unit) and packet precision (packet unit). The object address is expressed by the product of the PCR_POS and the value of power of "PCR_POS_SHIFT" of 2 (FIG. 12).
   Therefore, the address can be managed efficiently (without using so many bits in address management).
<09> Information (FIG. 51) of various digital broadcasting systems is set in the APP_NAME 132512 (FIG. 8) in the management information RTR_VMG (ST1026 in FIG. 52).

Thus, only the content recorded (applicable stream) by the system set in the APP_NAME can be played back (Yes at ST210 in FIG. 32).

### <Other expressions of the invention depending on embodiments>

(A) An information recording medium composed of management region and data region, in which the data region records data being divided into one or more objects, one object is composed of one or more data units, the data unit records video and audio to be played back in 0.4 seconds to 1 second as being divided into plural packets, the management region includes PGC information for managing the playback sequence, the PGC information includes management information managing the program and management information managing the cell, and further includes the management information for managing the object, and moreover the cell management information (CI 1334 in FIG. 15/ID 13344 to be referred to) includes the PID of the stream represented by the stream to be played back (representative PID of ST1710 in FIG. 29).
(B) An information recording medium composed of management region and data region, in which the data region records data being divided into one or more objects, one object is composed of one or more data units, the data unit records video and audio to be played back in 0.4 seconds to 1 second as being divided into plural packets, the management region includes PGC information for managing the playback sequence, the PGC information includes management information managing the program and management information managing the cell, and further includes the management information for managing the object, and moreover the cell management information (CI 1334 in FIG. 15/ID 13344 to be referred to) includes the ID of the group of the stream to be played back (Component_Group_Id of ST1710 in FIG. 29).
(C) The information recording medium of (A) or (B), in which the object management information includes group information (FIG. 41) for determining the combination of playback.
(D) An information recording medium composed of management region and data region, in which the data region records data being divided into one or more objects, one object is composed of one or more data units, the data unit records video and audio to be played back in 0.4 seconds to 1 second as being divided into plural packets, the management region includes the PGC information for managing the playback sequence, the PGC information includes management information managing the program and management information managing the cell, and further includes management information for managing the object, and moreover the general information (ESOB_GI 132531 in FIG. 9) includes information of exponential part of 2 (PCR_POS_SHIFT) of the information showing the address of PCR from the beginning of data unit, and each data unit information (ESOBU_ENT 132262 in FIG. 12) includes PCR position value PCR_POS information 132234.
(E) An information recording medium composed of management region and data region, in which the data region records data being divided into one or more objects, one object is composed of one or more data units, the data unit records video and audio to be played back in 0.4 seconds to 1 second as being divided into plural packets, the management region includes PGC information for managing the playback sequence, the PGC information includes management information managing the program and management information managing the cell, and further includes the management information for managing the object, and moreover the general information (ESOB_GI 132531 in FIG. 9) includes information of exponential part of 2 (PCR_POS_SHIFT) of the information showing the address of PCR from the beginning of data unit, and the unit header (Packet_Group_Header 161 in FIG. 16) of each data unit (ESOB 134 in FIG. 16) includes the value (PCR position information) 155X.
(F) An information recording medium composed of management region and data region, in which the data region records data being divided into one or more objects, one object is composed of one or more data units, the data unit records video and audio to be played back in 0.4 seconds to 1 second as being divided into plural packets, the management region includes PGC information for managing the playback sequence, the PGC information includes management information managing the program and management information managing the cell, and further includes the management information for managing the object, and moreover the object management information (ESOB_GI in FIGS. 9 and 10) includes data length of packet (AP_PKT_SZ) 13243106 contained in the data unit (ESOBU in FIGS. 1F, 2 and 16), and packet number information (ESOB_S_PTK_POS 132242/ESOB_E_PTK_POS 132243 in FIG. 10).
(G) An information recording medium composed of management region and data region, in which the data region records data being divided into one or more objects, one object is composed of one or more data units, the data unit records video and audio to be played back in 0.4 seconds to 1 second as being divided into plural packets, the management region includes PGC information for managing the playback sequence, the PGC information includes management information managing the program and management information managing the cell, and further includes the management information for managing the object, and moreover the object management information (ESOB_GI in FIG. 10) includes information (APP_NAME in FIG. 8) corresponding to the broadcasting system (Authority ID in FIG. 51).
(H) An apparatus using the medium of (G) comprising a system detecting unit (the main MPU 80 in FIG. 18; ST1116 in FIG. 25) for checking the system of data entered from outside, and a determining unit (the main MPU 80 in FIG. 18; ST1122 in FIG. 25) for determining whether system is applicable or not, in which, if not applicable (No at ST1122 in FIG. 25), the decision is displayed and the process is terminated (ST1125 in FIG. 25).
(I) An apparatus using the medium of (G) comprising a system detecting unit (the main MPU 80 in FIG. 18; ST209 in FIG. 32 or ST309 in FIG. 46) for checking the system of data in the medium, and a playback determining unit (the main MPU 80 in FIG. 18; ST210 in FIG. 32 or ST310 in FIG. 46) for determining whether system is applicable for playback or not, in which, if not applicable (No at ST210 in FIG. 32 or No at ST310 in FIG. 46), the decision is displayed and the process is terminated (ST211 in FIG. 32 or ST311 in FIG. 46).

Other examples of the configuration of the data unit ESOBU will be described.

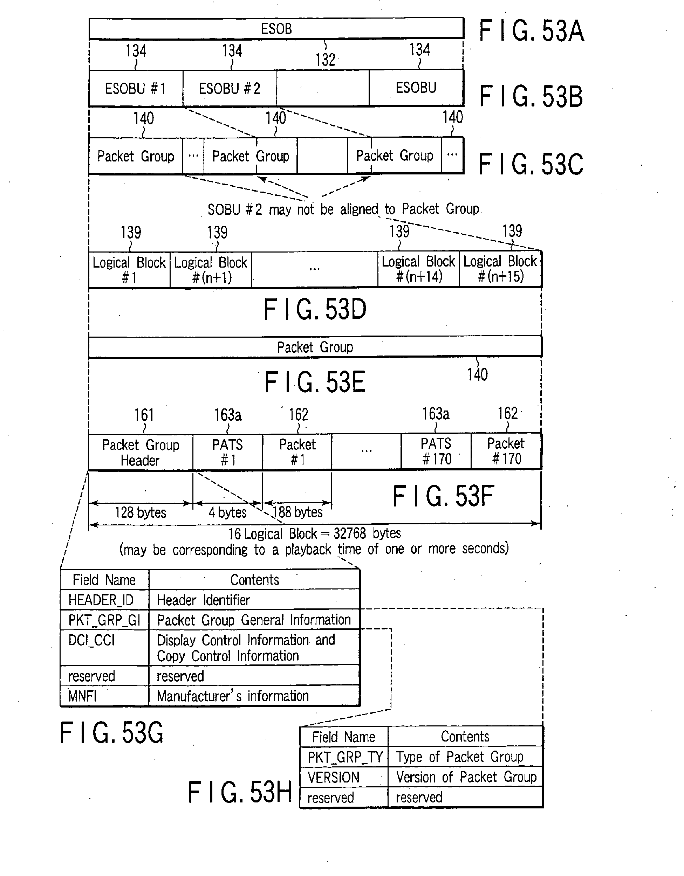

FIGS. 53A to 53H are views for explaining another example of the configuration of the data unit ESOBU for the stream object ESOB. The data structure of FIGS. 53A to 53H may be used in place of that of FIG. 16. In the data structure of FIGS. 53A to 53H, extended stream object (ESOB) 132 is formed of a plurality of extended stream object unit ESOBU 134. Each ESOBU 134 includes one or more packet groups 140 (see FIGS. 53B and 53C). Here, the boundary between adjacent ESOBUs (e.g., the boundary between ESOBU#1 and ESOBU#2, and/or that between ESOBU#2 and ESOBU#3) may not be corresponding to the boundary between adjacent packet groups 140. In other words, ESOBU#2 are not aligned to any of packet groups 140 (see FIGS. 53B and 53C).

Each packet group 140 corresponds to a plurality of logical blocks 139. In the example of FIGS. 53C, 53D and 53E, one packet group 140 corresponds to 16 logical blocks. The size of one packet group 140 may be corresponding to a playback time of one or more seconds. Packet group 140 is formed of packet group header 161 and a subsequent pairs of time stamp items (PATS) 163a and packets (MPEG-TS) 162. One packet group 140 includes one packet group header 161 and 170 pairs of PATSs 163a and packets 162 (see FIG. 53E and 53F).

Packet group header 161 is configured to include header identifier HEADER_ID, packet group general information PKT_GRP_GI, display control information and copy control information DCI_CCI, and manufacturer's information MNFI (FIG. 53G). Packet group general information PKT_GRP_GI is configured to include packet group type information PKT_GRP_TY, and packet group version information VERSION (FIG. 53H).

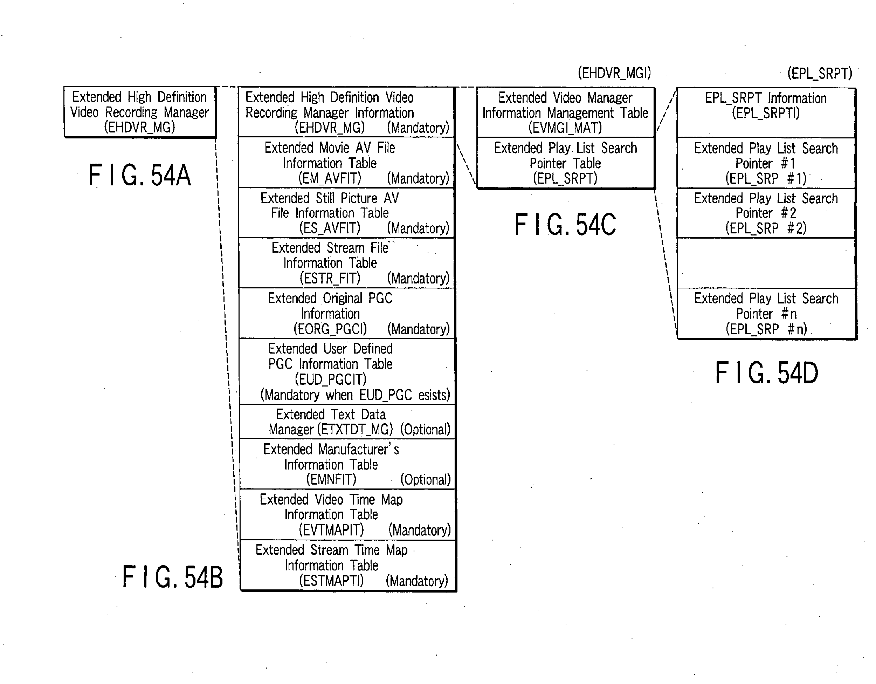

FIGS. 54A to 54D are views for explaining another example of the configuration of management information EHDVR_MG recorded on AV data management information recording area 130 shown in FIG. 1A. The data structure of FIGS. 54A to 54D may be used in place of (or may be used with) that of FIG. 4 to FIG. 15. Extended high definition video recording manager EHDVR_MG is configured to include extended high definition video recording manager information EHDVR_MGI, extended movie AV file information table EM_AVFIT, extended still picture AV file information table ES_AVFIT, extended stream file information table ESTR_FIT, extended original program chain information EORG_PGCI, extended user defined program chain information table EUD_PGCIT (which is necessary when at least one extended user defined PGC exists), extended text data manager ETXTDT_MG, extended manufacturer's information table EMNFIT, extended video time amp information table EVTMAPIT, and extended stream time map information table ESTMAPIT (FIGS. 54A and 54B).

Extended high definition video recording manager information EHDVR_MGI is configured to include extended video manager information management table EVMGI_MAT, and extended play list search pointer table EPL_SRPT (FIG. 54B and 54C). Extended play list search pointer table EPL_SRPT is configured to include extended play list search pointer table information EPL_SRPTI, and one or more extended play list search pointers #1 to #n (FIG. 54C and 54D).

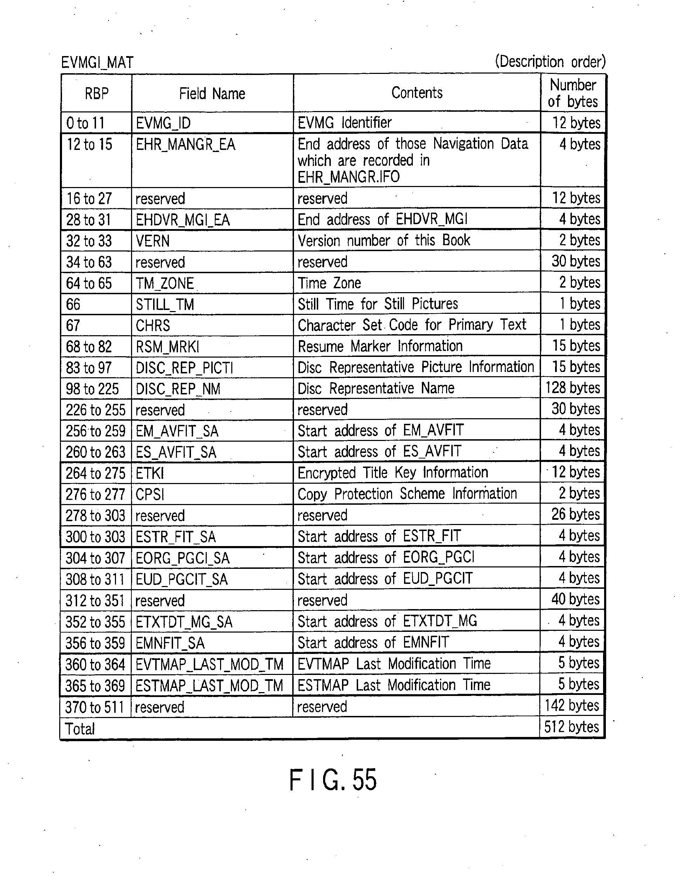

FIG. 55 exemplifies contents of the extended video manager information management table (EVMGI_MAT) shown in FIG. 54C. Extended video manager information management table EVMGI_MAT is configured to include extended video manager identifier EVMG_ID, end address EHR_MANGR_EA of those navigation data recorded in control information file EHR_MANGR.IFO, and end address EHDVR_MGI_EA of EHDVR_MGI. EVMGI_MAT is configured to further include version number VERN of the Book, time zone TM_ZONE, still time STILL_TM for still pictures, character set code CHRS for a primary text, resume marker information RSM_MRKI, disc representative picture information DISC_REP_PICTI, disc representative name DISC_REP_NM, start address EM_AVFIT_SA of the extended movie AV file information table, and start address ES_AVFIT_SA of the extended still AV file information table.

EVMGI_MAT is configured to further include encrypted title key information ETKI, copy protection scheme information CPSI, and start address ESTR_FIT_SA of the extended stream file information table. EVMGI_MAT is configured to further include start address EORG_PGCI_SA of the extended original PGC information, start address EUD_PGCIT_SA of the extended user-defined PGC information table, start address TXTDT_MG_SA of the extended text data manager, start address EMNFIT_SA of the extended manufacturer's information table, last modification time EVTMAP LAST_MOD_TM of the extended video time map, and last modification time ESTMAP_LAST_MOD_TM of the extended still time map.

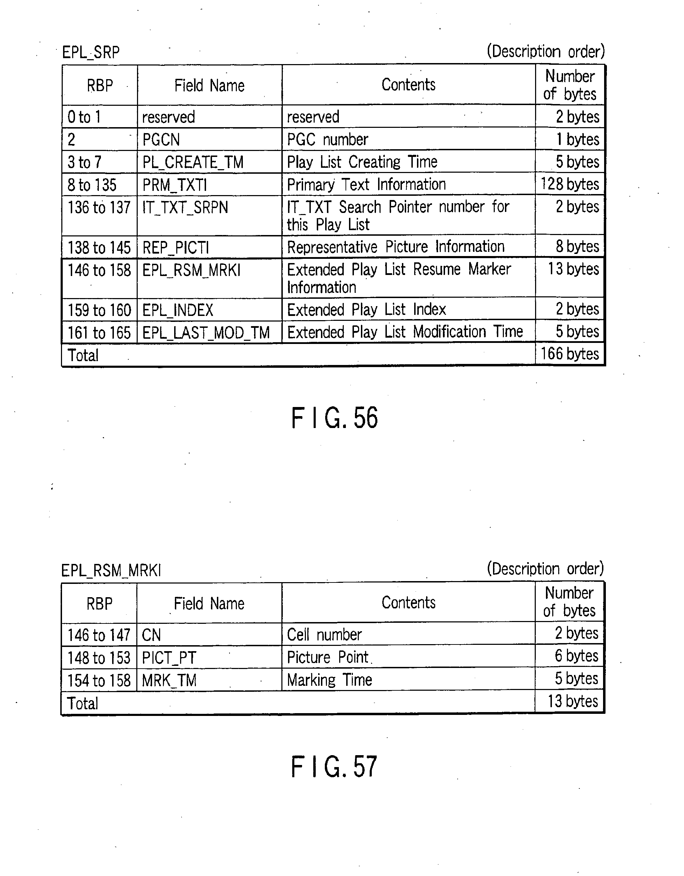

FIG. 56 exemplifies contents of an extended play list search pointer EPL_SRP included in the EPL_SRPT shown in FIG. 54C. Extended play list search pointer EPL_SRP is configured to include PGC number PGCN, play list creating time PL_CREATE_TM, primary text information PRM_TXTI, item text search pointer number IT_TXT_SRPN for this play list, representative picture information REP_PICTI, extended play list resume marker information EPL_RSM_MRKI, extended play list index EPL_INDEX, and extended play list last modification time EPL_LAST_MOD_TM.

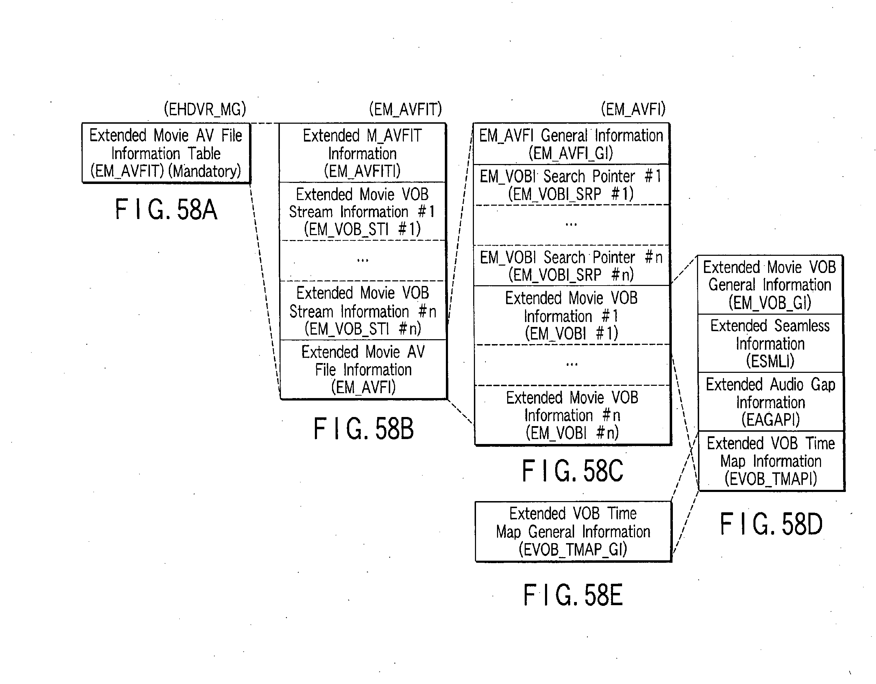

FIG. 57 exemplifies contents of the play list resume marker information EPL_RSM_MRKI shown in FIG. 56. Play list resume marker information EPL_RSM_MRKI is configured to include cell number CN (describing the cell number in which the picture point exists), picture point PICT_PT (describing the picture point in the target cell), and marking time MRK_TM (describing the time when this marker was made).

FIGS. 58A to 58E exemplify contents of the extended movie AV file information table EM_AVFIT shown in FIG. 54B. Extended movie AV file information table EM_AVFIT is configured to include extended movie AV file information table information EM_AVFITI, one or more extended movie video object stream information EM_VOB_STI#1 to EM_VOB_STI#n, and extended movie AV file information EM_AVFI (FIGS. 58A and 58B). Extended movie AV file information EM_AVFI is configured to include EM_AVFI general information EM_AVFI_GI, one or more EM_VOBI search pointers EM_VOBI_SRP#1 to EM_VOBI_SRP#n, and one or more extended movie VOB information EM_VOBI#1 to EM_VOBI#n (FIGS. 58B and 58C). Each EM_VOBI is configured to include extended movie VOB general information EM_VOB_GI, extended seamless information ESMLI, extended audio gap information EAGAPI, and extended VOB time map information EVOB_TMAPI (FIGS. 58C and 58D). This EVOB_TMAPI may comprise extended VOB time map general information EVOB_TMAP_GI (FIGS. 58D and 58E).

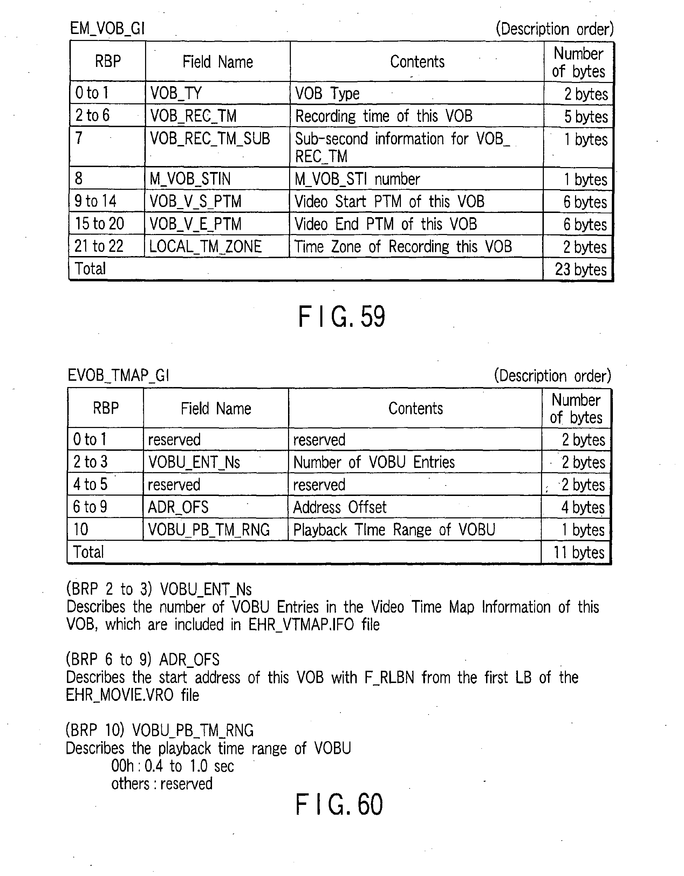

FIG. 59 exemplifies contents of the extended movie video object general information EM_VOB_GI shown in FIG. 58D. Extended movie video object general information EM_VOB_GI is configured to include VOB type VOB_TY, recording time VOB_REC_TM of this VOB, sub-second information VOB_REC_TM_SUB for VOB_REC_TM, M_VOB_STI number M_VOB_STIN, video start presentation time VOB_V_S_PTM of this VOB, video end presentation time VOB_V_E_PTM of this VOB, and time zone LOCAL_TM_ZONE wherein the VOB has been originally recorded and VOB_REC_TM as well as VOB_REC_TM_SUB have been recorded.

FIG. 60 exemplifies contents of the extended video object time map general information EVOB_TMAP_GI shown in FIG. 58E. Extended video object time map general information EVOB_TMAP_GI is configured to include number VOBU_ENT_Ns of the VOBU entries, address offset ADR_OFS, and playback time range VOBU_PB_TM_RNG of VOBU. One or more playback time ranges can be specified by VOBU_PB_TM_RNG. For instance, when VOBU_PB_TM_RNG = 00h, the playback time range is 0.4 to 1.0 second. If VOBU_PB_TM_RNG is 01h, the playback time range may be, e.g., 1.0 to 2.0 seconds. Other time ranges can be specified by VOBU_PB_TM_RNG = 10h or 11h.

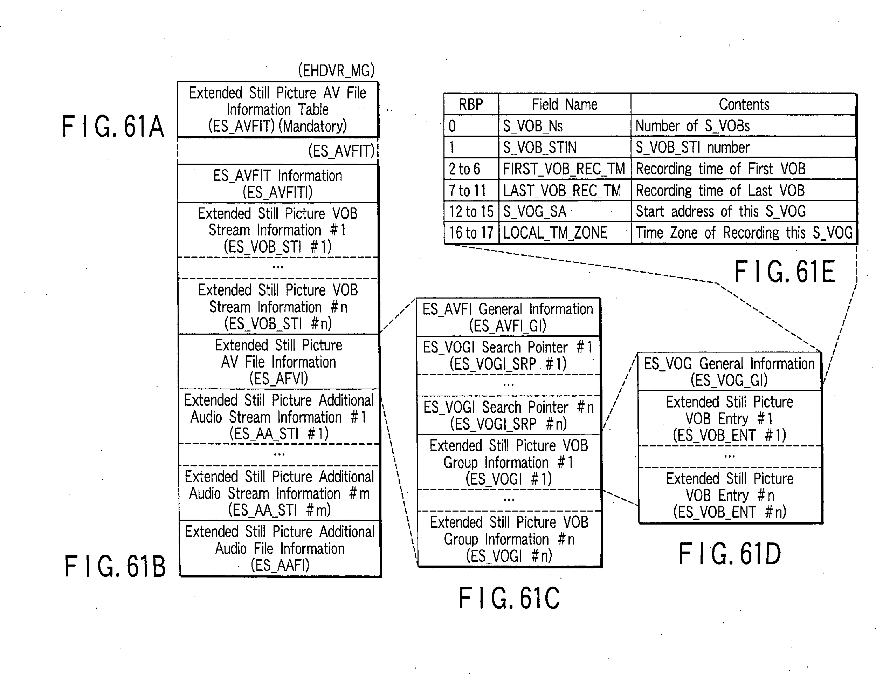

FIGS. 61A to 61E exemplify contents of the extended still picture AV file information table ES_AVFIT shown in FIG. 54B. Extended still picture AV file information table ES_AVFIT is configured to include extended S_AVFIT information ES_AVFITI, one or more extended still picture VOB stream information ES_VOB_STI#1 to ES_VOB_STI#n, extended still picture AV file information ES_AVFI, one or more extended still picture additional audio stream information ES_AA_STI#1 to ES_AA_STI#m, and extended still picture additional audio file information ES_AAFI (FIGS. 61A and 61B). Extended still picture AV file information ES_AVFI is configured to include ES_AVFI general information ES_AVFI_GI, one or more extended still picture video object group information search pointers ES_VOGI_SRP#1 to ES_VOGI_SRP#n, and one or more extended still picture video object group information ES_VOGI#1 to ES_VOGI#n (FIGS. 61B and 61C).

Each ES_VOGI is configured to include extended still picture video object group general information ES_VOG_GI, and one or more extended still picture VOB entries ES_VOB_ENT#1 to ES_VOB_ENT#n (FIGS. 61C and 61D). Here, ES_VOG_GI is configured to include number S_VOB_Ns of S_VOBs, S_VOB_STI number S_VOB_STIN, recording time of the first video object FIRST_VOB_REC_TM, recording time of the last video object LAST_VOB_REC_TM, start address of the still picture video object group S_VOG_SA, and time zone LOCAL_TM_ZONE of this S_VOG (FIGS. 61D and 61E).

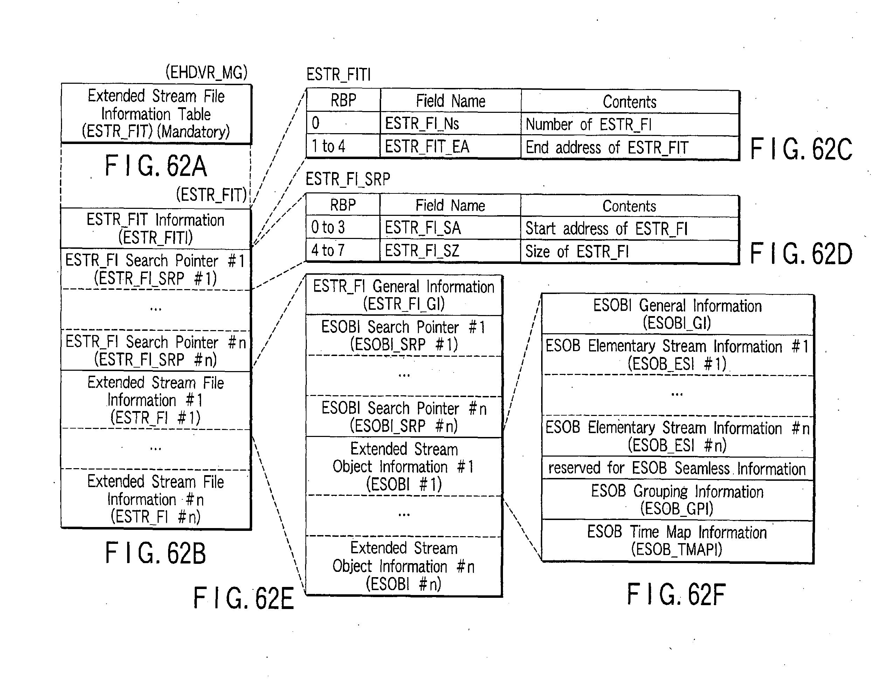

FIGS. 62A to 62F exemplify contents of the extended stream file information table ESTR_FIT shown in FIG. 54B. Extended stream file information table ESTR_FIT is configured to include extended stream file information table information ESTR_FITI, one or more extended stream file information search pointers ESTR_FI_SRP#1 to ESTR_FI_SRP#n, and one or more extended stream file information ESTR_FI#1 to ESTR_FI#n (FIGS. 62A and 62B). Extended stream file information table information ESTR_FITI is configured to include number ESTR FI Ns of ESTR_FI, and end address ESTR_FIT_EA of ESTR_FIT (FIGS. 62B and 62C). Extended stream file information search pointer ESTR_FI_SRP is configured to include start address ESTR_FI_SA of ESTR_FI, and size ESTR_FI_SZ of ESTR_FI (FIGS. 62B and 62D).

Extended stream file information ESTR_FI is configured to include ESTR_FI general information ESTR_FI_GI, one or more extended stream object information search pointers ESOBI_SRP#1 to ESOBI_SRP#n, and one or more extended stream object information ESOBI#1 to ESOBI#n (FIGS. 62B and 62E). Extended stream object information ESOBI is configured to include ESOBI general information ESOBI_GI, one or more extended stream object elementary stream information ESOB_ESI#1 to ESOB_ESI#n, a reserved are for ESOB seamless information, extended stream object grouping information ESOB_GPI, and extended stream object time map information ESOB_TMAPI (FIGS. 62E and 62F).

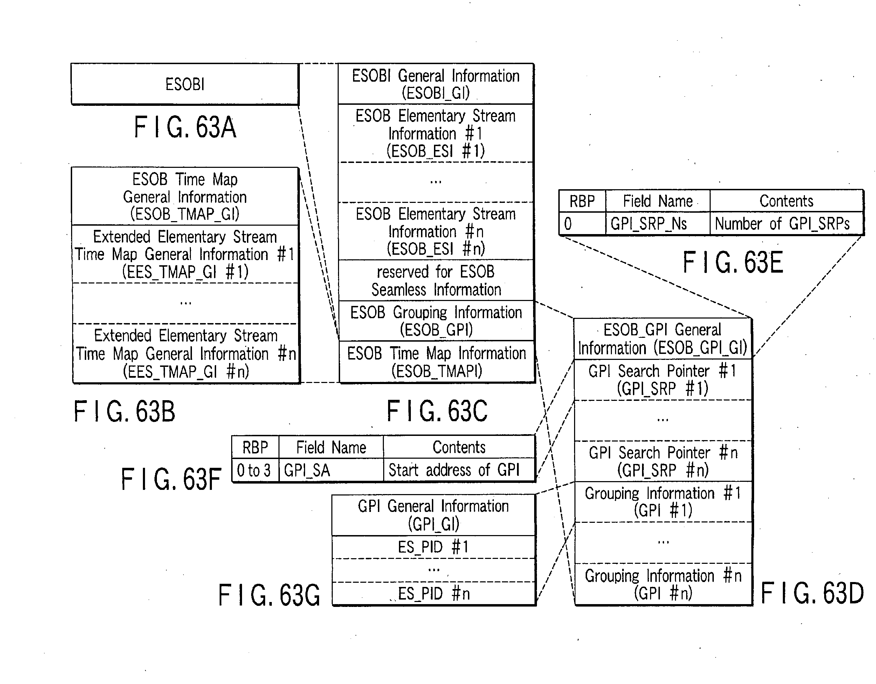

FIGS. 63A to 63G exemplify contents of the extended stream object information ESOBI shown in FIG. 62F. Extended stream object information ESOBI is configured to include ESOBI_GI, ESOB_ESI#1 to ESOB_ESI#n, ESOB seamless information reserved area, ESOB_GPI, and ESOB_TMAPI (FIGS. 63A and 63C). ESOB_GI is configured to include ESOB_GPI general information ESOB_GPI_GI, one or more grouping information search pointers GPI_SRP#1 to GPI_SRP#n, and one or more grouping information GPI #1 to GPI #n (FIGS. 63C and 63D). ESOB_GPI_GI is configured to include number GPI_SRP_Ns of the GPI search pointers (FIGS. 63D and 63E). Each GPI search pointer GPI_SRP is configured to include start address GPI_SA of GPI (FIGS. 63D and 63F). Each GPI is configured to include GPI general information GPI_GI, and one or more elementary stream PID ES_PID#1 to ES_PID#n (FIGS. 63D and 63G). Meanwhile, ESOB_TIMAPI is configured to include extended stream object time map general information ESOB_TMAP_GI, and one or more extended elementary stream time map general information EES_TMAP_GI#1 to EES_TMAP_GI#n (FIGS. 63C and 63B).

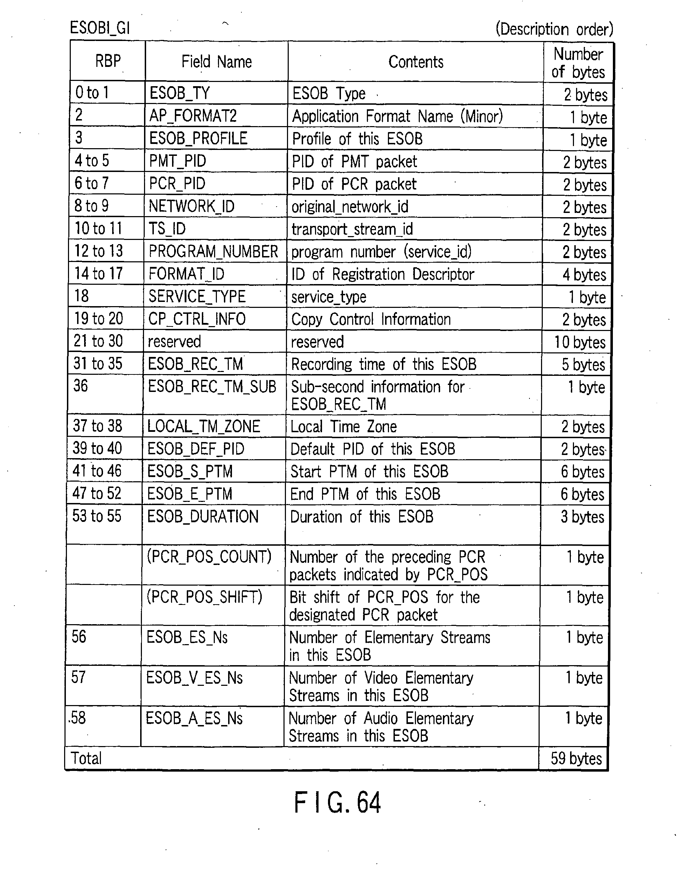

FIG. 64 exemplifies contents of the extended stream object information general information ESOBI_GI shown in FIG. 63C. Extended stream object information general information ESOBI_GI is configured to include extended stream object type ESOB_TY, application format name (minor) APP_FORMAT2, profile ESOB_PROFILE of this ESOB, PID of PMT packet PMT_PID, PCR of PCR packet PCR_PID, original network identifier NETWORK_ID, transport stream identifier TS_ID, program number (service identifier) PROGRAM_NUMBER, ID of registration descriptor FORMAT_ID, service type SERVICE_TYPE, copy control information CP_CTRL_INFO, recording time ESOB_REC_TM of this ESOB, sub-second information ESOB_REC_TM_SUB for ESOB_REC_TM, local time zone LOCAL_TM_ZONE, default PID "ESOB_DEF_PID" of this ESOB, start presentation time "ESOB_S_PTM" of this ESOB, end presentation time "ESOB_E_PTM" of this ESOB, duration ESOB_DURATION of this ESOB, number (PCR_POS_COUNT) of the preceding PCR packets indicated by PCR_POS, bit shift (PCR_POS_SHIFT) of PCR_POS for the designated PCR packet, number ESOB_ES_Ns of elementary streams in this ESOB, number ESOB_V_ES_Ns of video elementary streams in this ESOB, and number ESOB_A_ES_Ns of audio elementary streams in this ESOB.

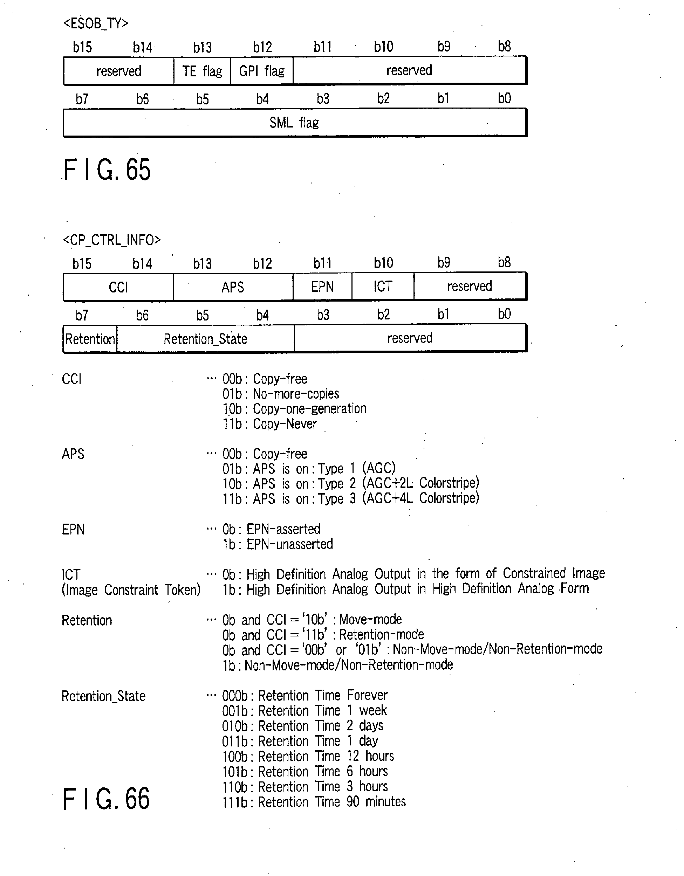

FIG. 65 exemplifies contents of the extended stream object type ESOB_TY shown in FIG. 64. Extended stream object type ESOB_TY is configured to include a reserved bit field followed by a temporarily erased state flag (TE flag), a grouping information flag (GPI flag), another reserved bit field, and a seamless flag (SML flag). Here, the TE flag may be used to indicate whether the corresponding ESOB is in a normal state or in a temporarily erased state. An ESOB in the temporarily erased state will not be referred to by a cell in a user defined PGC. An ESOB in the temporarily erased state will not be played back in a normal playback operation. The GPI flag may be used to indicate whether the corresponding ESOB is provided with an ESOB elementary stream grouping information.

FIG. 66 exemplifies contents of the copy control information CP_CTRL_INFO shown in FIG. 64. Copy control information CP_CTRL_INFO is configured to include a CCI field, an APS field, an EPN field, an ICT field, a retention fled, a retention state field, and reserved field. Bits of the CCI field may be used to specify a copy-free, no more copy, copy one generation (copy once), or copy never. Bits of the APS (analog protection system) field may be used to specify a copy-free, a type 1 APS is on (automatic gain control AGC), a type 2 APS is on (AGC + 2L color stripe), or a type 3 APS is on (AGC + 4L color stripe). A bit of the EPN field may be used to specify an EPN-asserted state, or an EPN-unasserted state. When the EPN-asserted state is specified, contents of the corresponding ESOB are prevented from being output (especially internet-output). When the EPN-unasserted state is specified, contents of the corresponding ESOB are not prevented from being output. A bit of the ICT (image constraint token) field may be used to specify a high definition analog output in the form of a constraint image, or a high definition analog output in a high definition analog form. A bit of the retention field may be used, with a combination of the CCI field, to specify a movie mode (retention = 0b and CCI = 10b), a retention mode (retention = 0b and CCI = 11b), a non-movie mode/non-retention mode (retention = 0b and CCI = 00b or 01b), or a non-movie mode/non-retention mode (retention = 1b). Bits of the retention state field may be used to specify the retention time forever, the retention time one week, the retention time two days, the retention time one day, the retention time 12 hours, the retention time 6 hours, the retention time 3 hours, or the retention time 90 minutes.

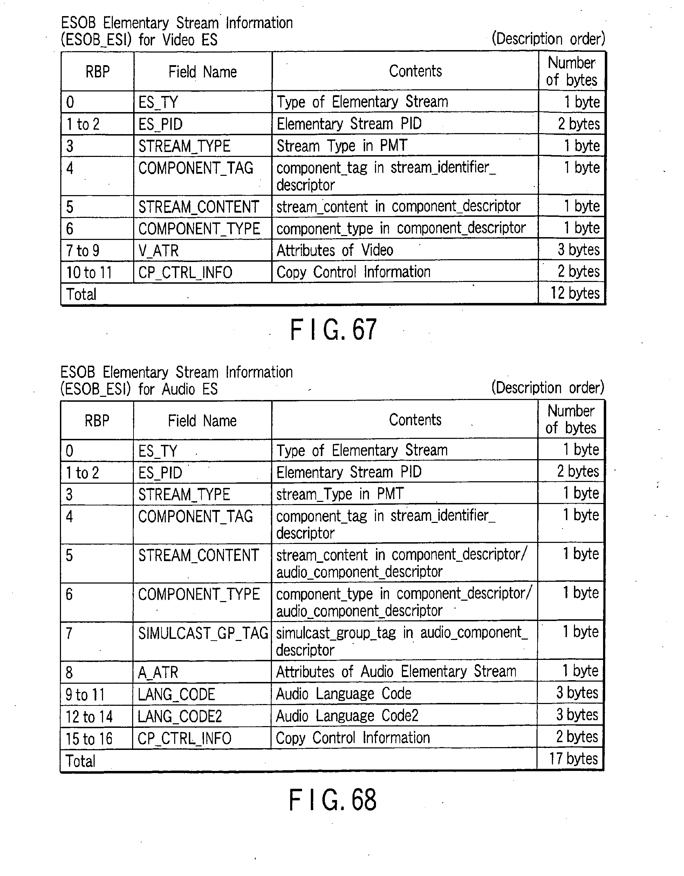

FIG. 67 exemplifies contents of extended stream object elementary stream information (ESOB_ESI for video ES) shown in FIG. 63C. Extended stream object elementary stream information ESOB_ESI for video ES is configured to include type ES_TY of the elementary stream, PID of the elementary stream ES_PID, stream type STREAM_TYPE in PMT, component tag COMPONENT_TAG in the stream identifier descriptor, stream content STREAM_CONTENT in the component descriptor, component type COMPONENT_TYPE in the component descriptor, attributes of video V_ATR, and copy control information CP_CTRL_INFO.

FIG. 68 exemplifies contents of extended stream object elementary stream information (ESOB_ESI for audio ES) shown in FIG. 63C. Extended stream object elementary stream information ESOB_ESI for audio ES is configured to include type ES_TY of the elementary stream, PID of the elementary stream ES_PID, stream type STREAM_TYPE in PMT, component tag COMPONENT_TAG in the stream identifier descriptor, stream content STREAM_CONTENT in the component descriptor/audio component descriptor, component type COMPONENT_TYPE in the component descriptor/ audio component descriptor, simulcast group tag SIMULCAST_GP_TAG in the audio component descriptor, attributes of audio elementary stream A_ATR, audio language code LANG_CODE, second audio language code LANG_CODE2, and copy control information CP_CTRL_INFO.

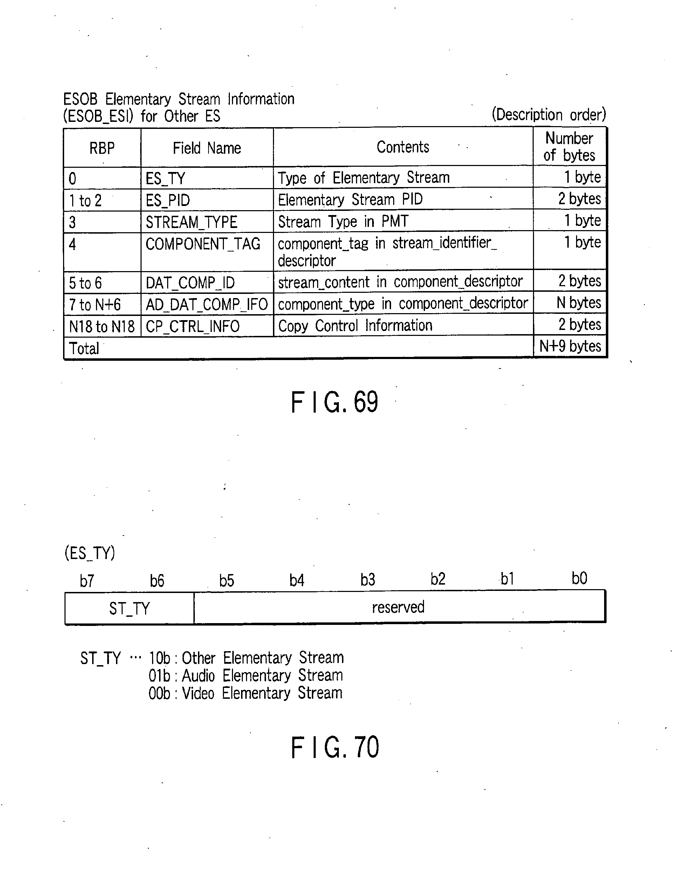

FIG. 69 exemplifies contents of extended stream object elementary stream information (ESOB_ESI for other ES) shown in FIG. 63C. Extended stream object elementary stream information ESOB_ESI for other ES is configured to include type ES_TY of the elementary stream, PID of the elementary stream ES_PID, stream type STREAM_TYPE in PMT, component tag COMPONENT_TAG in the stream identifier descriptor, data component ID "DAT_COMP_ID" in the data component descriptor or data content descriptor for this other elementary stream in case of the ARIB standard, additional data component information "AD_DAT_COMP_IFO" in the data component descriptor for this other elementary stream in case of the ARIB standard, and copy control information CP_CTRL_INFO.

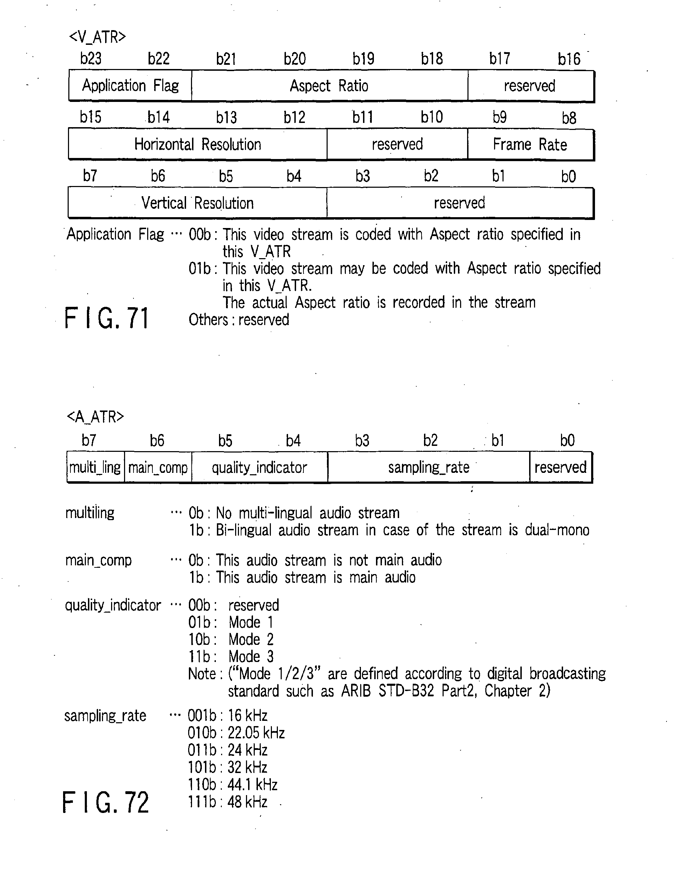

FIG. 70 exemplifies contents of stream type information ES_TY shown in each of FIGS. 67 to 69. Stream type information ES_TY is configured to include a field of stream type ST_TY. Bits of the ST_TY field may be used to specify the video elementary stream, audio elementary stream, or other elementary stream.

FIG. 71 exemplifies contents of the video attribute information V_ATR shown in FIG. 67. Video attribute information V_ATR is configured to include an application flag field, an aspect ratio field, a reserved field, a horizontal resolution field, another reserved field, a frame rate field, a vertical resolution field, and still another reserved field. Here, bits of the application flag field can be used to specify a first state in which the video stream is coded with the aspect ratio specified in the V_ATR, and a second state in which the video stream may be coded with the aspect ratio specified in the V_ATR. In the second state, the actual aspect ratio may be recorded in the corresponding stream. The bits of the application flag field can also be used to specify other (reserved) state.

FIG. 72 exemplifies contents of the audio attribute information A_ATR shown in FIG. 68. Audio attribute information A_ATR is configured to include a multi-lingual field (multi_ling), a main component field (main_comp), a quality indicator field (quality_indicator), a sampling rate field (sampling_rate), and a reserved field. Here, A bit of the multi-lingual field may be used to specify a no multi-lingual audio stream, or a bi-lingual audio stream in case where the stream is a dual mono. A bit of the main component field may be used to specify a case in which the audio stream is not a main audio, or another case in which the audio stream is the main audio. Bits of the quality indicator field may be used to specify a reserved state, a mode 1 state, a mode 2 state, or a mode 3 state (note that the mode 1 state to mode 3 state may be defined according to a digital broadcasting standard such as "ARIB STD-B32 Part 2, Chapter 2.") Bits of the sampling rate field may be used to specify a sampling frequency of 16 kHz, 22.05 kHz, 24 kHz, 32 kHz, 44.1 kHz, or 48 kHz.

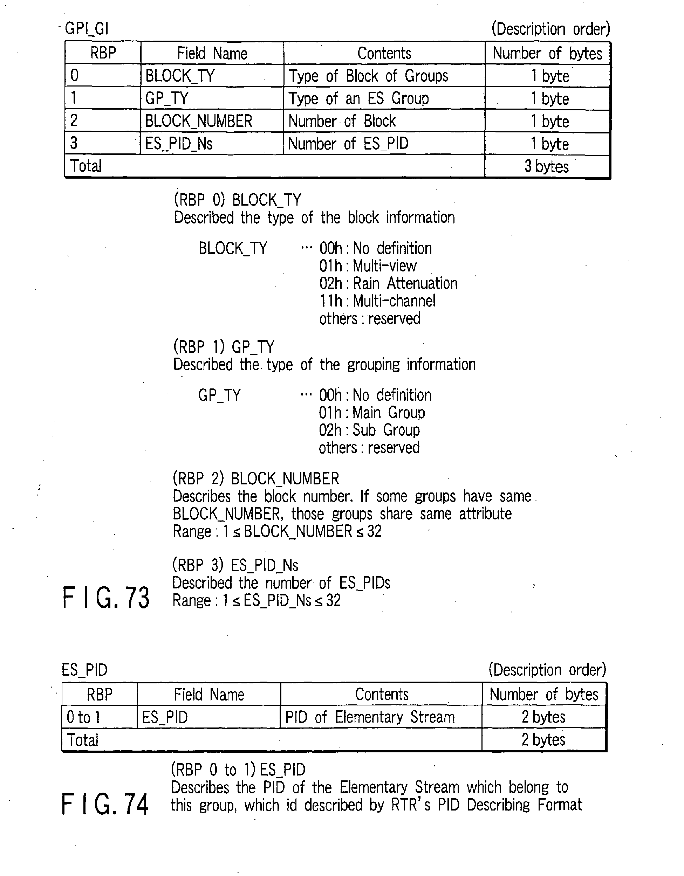

FIG. 73 exemplifies contents of the grouping information general information GPI_GI shown in FIG. 63G. Grouping information general information GPI_GI is configured to include type BLOCK_TY of a block of groups, type GP_TY of an ES group, block number BLOCK_NUMBER, and number of the ES_PIDs "ES_PID_Ns." Here, bits of BLOCK_TY may be used to specify a no definition state, a multi-view state, a rain attenuation state, a multi-channel state, or other reserved states. Bits of GP_TY may be used to specify no definition, a main group, a sub-group, or other reserved ones. The range of BLOCK_NUMBER may be any of 1 to 32. The range of ES_PID_Ns may be any of 1 to 32.

FIG. 74 exemplifies contents of the elementary stream packet identifier ES_PID shown in FIG. 63G. Elementary stream packet identifier ES_PID is configured to include a PID of elementary stream "ES_PID." This ES_PID describes the PID of the elementary stream belonging to the corresponding group.

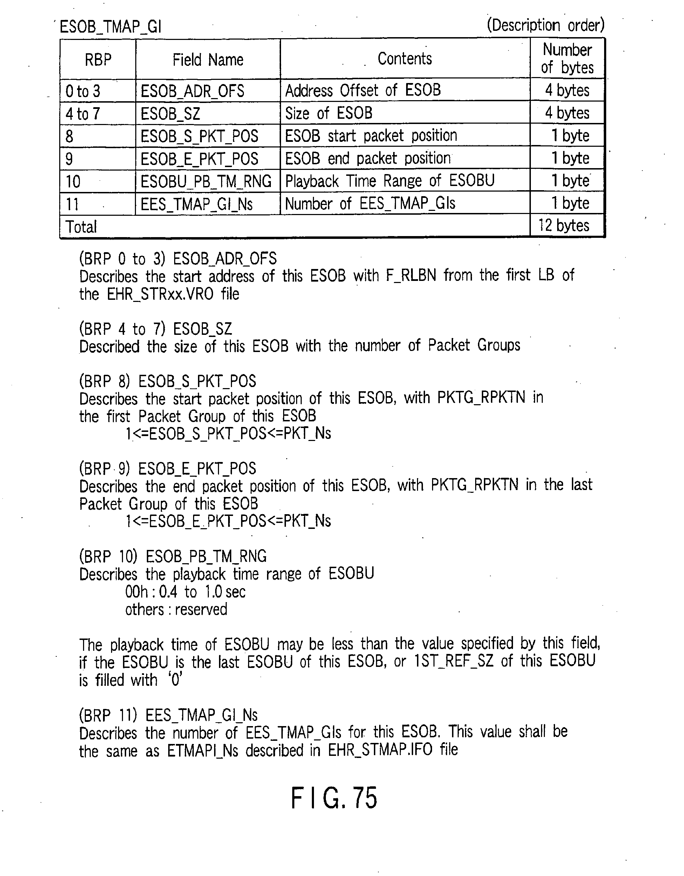

FIG. 75 exemplifies contents of the extended stream object time map general information ESOB_TMAP_GI shown in FIG. 63B. Extended stream object time map general information ESOB_TMAP_GI is configured to include address offset ESOB_ADR_OFS of the ESOB, size ESOB_SZ of the ESOB, ESOB start packet position ESOB_S_PKT_POS, ESOB end packet position ESOB_E_PKT_POS, playback time range ESOBU_PB_TM_RNG of the ESOBU, and number EES_TMAP_GI_Ns of the extended elementary stream time map general information items (EES_TMAP_GIs).

Here, ESOB_ADR_OFS may be used to indicate the start address of the corresponding ESOB from the first logical block of an extended high-resolution stream video recording object file (EHR_STRxx.VRO file; not shown). ESOB_SZ may be used to indicate the size of the corresponding ESOB with the number of packet groups. In other words, the size of ESOB may be described in unit of a packet group.

ESOB_S_PKT_POS may be used to indicate the start packet position of the corresponding ESOB from the first packet group of this ESOB, where the value of ESOB_S_PKT_POS may be any of 1 to PKT_Ns. ESOB_E_PKT_POS may be used to indicate the end packet position of the corresponding ESOB from the last packet group of this ESOB, where the value of ESOB_E_PKT_POS may be any of 1 to PKT_Ns.

ESOBU_PB_TM_RNG may be used to indicate the playback time range of the corresponding ESOBU. More specifically, when ESOBU_PB_TM_RNG = 00h, the playback time range may be 0.4 to 1.0 second, for example. If ESOBU_PB_TM_RNG is 01h, the playback time range may be, e.g., 1.0 to 2.0 seconds, for example. Other time ranges may be specified by ESOBU_PB_TM_RNG = 10h or 11h.

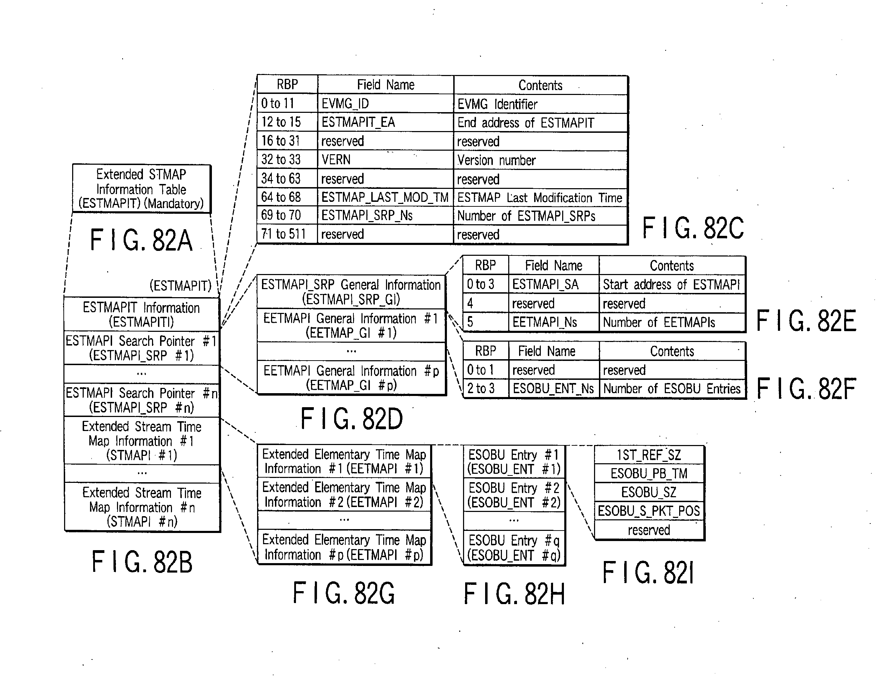

EES_TMAP_GI_Ns may be used to indicate the number of extended elementary stream time map general information items (EES_TMAP_GIs) for the corresponding ESOB. EES_TMAP_GI_Ns (corresponding to the number of EES_TMAP_GI#1 to EES_TMAP_GI#n in FIG. 63B) is selected to be the same as the number (ETMAPI_Ns described in, e.g., extended HR_STMAP.IFO file: not shown) of extended elementary time map information items (corresponding to ESTMAPI#1 to ESTMAPI#n in FIG. 82B).

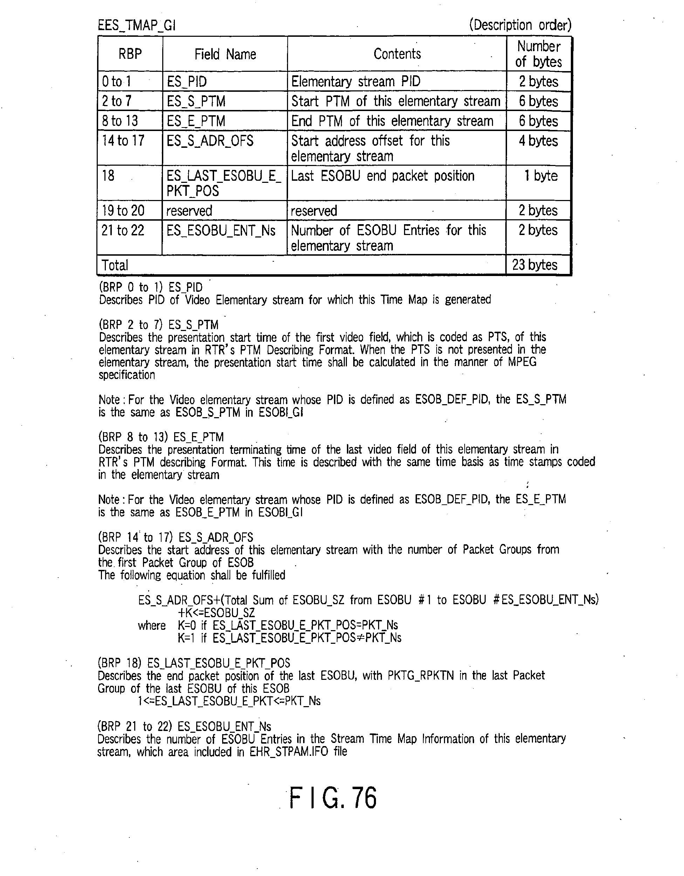

FIG. 76 exemplifies contents of the extended elementary stream time map general information (EES_TMAP_GI) shown in FIG. 63B. Extended elementary stream time map general information EES_TMAP_GI is configured to include elementary stream PID "ES_PID", start presentation time "ES_S_PTM" of the corresponding elementary stream, end presentation time "ES_E_PTM" of the corresponding elementary stream, start address offset "ES_S_ADR_OFS" for the corresponding elementary stream, last ESOBU end packet position "ES_LAST_ESOBU_E_PKT_POS", and number "ES_ESOBU_ENT_Ns" of ESOBU entries for the corresponding elementary stream.

Here, ES_PID may be used to indicate the PID (packet identifier) of a video elementary stream for which the corresponding time map is generated. ES_S_PTM may be used to indicate the presentation start time (coded as presentation time stamp PTS) of the first video field of the corresponding elementary stream. ES_E_PTM may be used to indicate the presentation terminating time of the last video field of the corresponding elementary stream. ES_S_ADR_OFS may be used to indicate the start address of the corresponding elementary stream, with the number of packet groups from the first packet group of the ESOB. ES_LAST_ESOBU_E_PKT_POS may be used to indicate the end packet position of the last ESOBU, with the packet number (e.g., any one of 1 to 170 in the embodiment of FIG. 53F), in the last packet group of the corresponding ESOB. ES_ESOBU_ENT_Ns may be used to indicate the number of ESOBU entries (which are included in, e.g., the extended HR_STMAP.IFO file, not shown) in the extended stream time map information of the corresponding elementary stream.

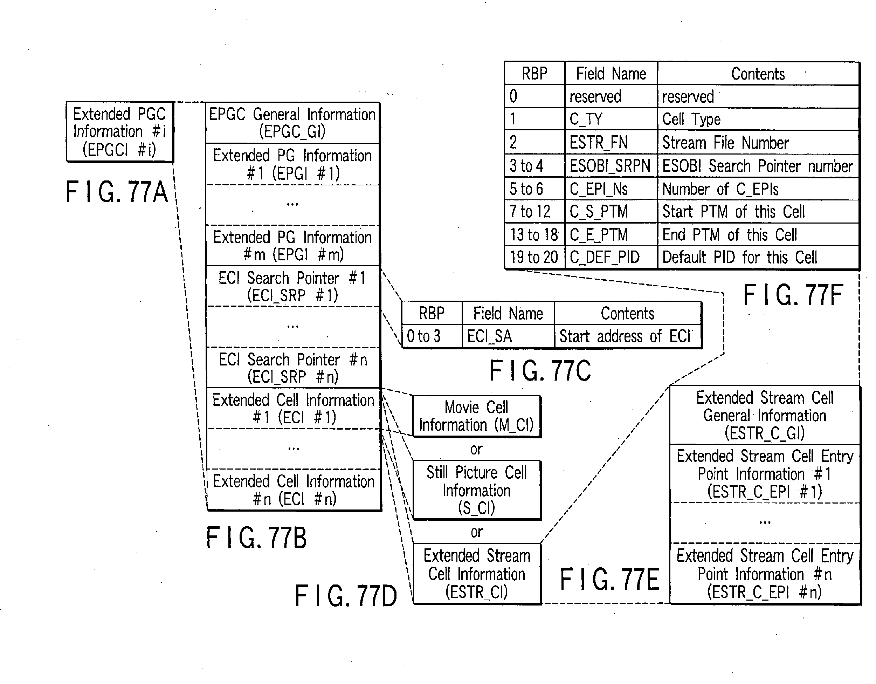

FIGS. 77A to 77F exemplify contents of the extended program chain information (EPGCI; or extended original PGC information EORG_PGCI) shown in FIG. 54B. Extended program chain information EPGCI is configured to include extended program chain general information (EPGC_GI), extended program information #1 (EPGI#1) to extended program information #m (EPGI#m), extended cell information search pointer #1 (ECI_SRP#1) to extended cell information search pointer #n (ECI_SRP#n), and extended cell information #1 (ECI#1) to extended cell information #n (ECI#n) (FIGS. 77A and 77B). Each of ECI_SRP#1 to ECI_SRP#n may include start address ECI_SA of the corresponding ECI (FIGS. 77B and 77C). Incidentally, EPGCI is extended management information for managing PGC which comprises one or more programs each including one or more cells.

Here, there are three types of the extended cell information ECI; movie cell information M_CI, still picture cell information S_CI, and extended stream cell information ESTR_CI (FIGS. 77B and 77D). The data structure of M_CI and S_CI may be substantially the same as those of the current DVD Video Recording standard. Meanwhile, the data structure of ESTR_CI differs therefrom. More specifically, ESTR_CI is configured to include extended stream cell general information ESTR_C_GI, and one or more extended stream cell entry point information items #1 to #n (ESTR_C_EPI#1 to ESTR_C_EPI#n) (FIGS. 77D and 77E). Extended stream cell general information ESTR_C_GI may be configured to include cell type C_TY, stream file number ESTR_FN, extended stream object information search pointer number ESOBI_SRPN, number C_EPI_Ns of the C_EPIs, start PTM "C_S_PTM" of the corresponding cell, end PTM "C_E_PTM" of the corresponding cell, and default PID of the corresponding cell (FIGS. 77E and 77F).

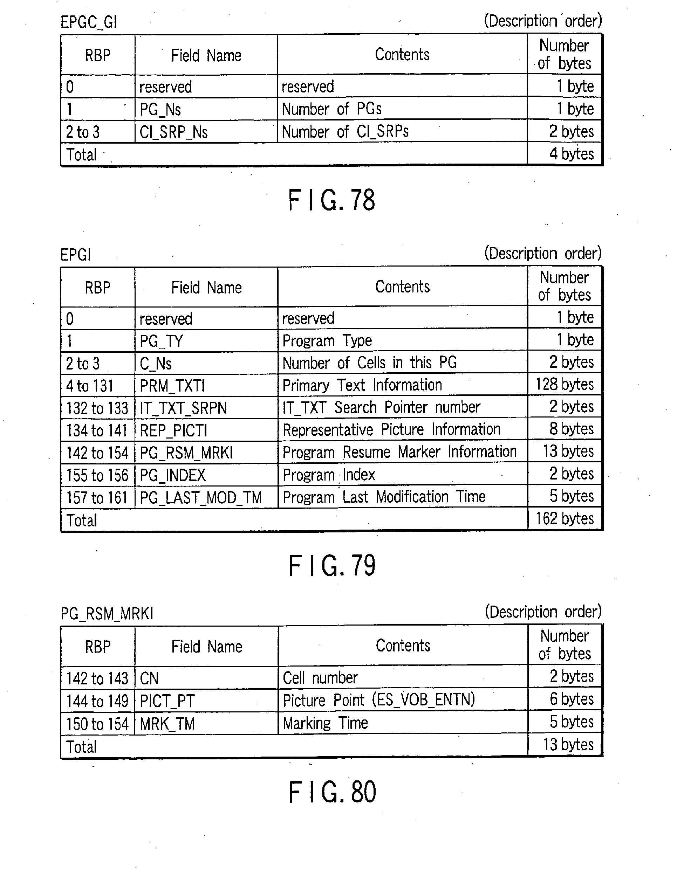

FIG. 78 exemplifies contents of the extended program chain general information (EPGCI_GI) shown in FIG. 77B. Extended program chain general information EPGCI_GI is configured to include number PG_Ns of the programs in the corresponding extended PGC, and number CI_SRP_Ns of the extended CI_SRPs in the corresponding extended PGC. In case of the extended user defined PGC, this PG_Ns is set to '0'. In case of the extended original PGC, this PG_Ns may be any one of 1 to 99. The maximum number of this CI_SRP_Ns may be '1998' which is the sum of '999' for movie cells and '999' for still picture cells.

FIG. 79 exemplifies contents of the extended program information (EPGI) shown in FIG. 77B. Extended program information EPGI is configured to include program type PG_TY, number C_Ns of the cells in the corresponding program, primary text information PRM_TXTI for this program, item text information search pointer number IT_TXT_SRPN indicating an item text whose text data may correspond to this program, representative picture information REP_PICTI, program resume marker information PG_RSM_MRKI, program index PG_INDEX, and program last modification time PG_LAST_MOD_TM describing the time when the corresponding program was modified last.

Here, PG_TY may be used to include protect information indicating whether the corresponding program is in a protected state. If the program is in the protected state, all data object referred to and used in the presentation (playback) of the program should not be erased temporarily or permanently.

REP_PICTI may be used to include cell number CN and picture point PICT_PT. The CN may describe the cell number in which the corresponding picture point (PICT_PT) exists. The PICT_PT may indicate the picture point in the target cell, using the presentation time (PTM):

PG_INDEX may be used to indicate the index number of the corresponding program. PG_INDEX is a unique number assigned to each program. Two or more programs should not have the same PG_INDEX value. Whenever creating a new program, unused available index value may be searched and described in PG_INDEX. The value of PG_INDEX may be kept unchanged until the corresponding program is deleted. The value of PG_INDEX may be kept unchanged when the corresponding program is modified. The value of PG_INDEX may be kept unchanged when other programs are deleted and/or newly created.

FIG. 80 exemplifies contents of the program resume marker information (PG_RSM_MRKI) shown in FIG. 79. Program resume marker information PG_RSM_MRKI is configured to include cell number CN, picture point PICT_PT, and marking time MRK_TM. The CN may describe the cell number in which the picture point (PICT_PT) exists. The PICT_PT may describe the picture point in the target cell. The MRK_TM may describe the time when the corresponding marker was made. In short, PG_RSM_MRKI may be used to include a resume marker of the corresponding program. PG_RSM_MRKI should not refer to the data object in a temporarily erased state.

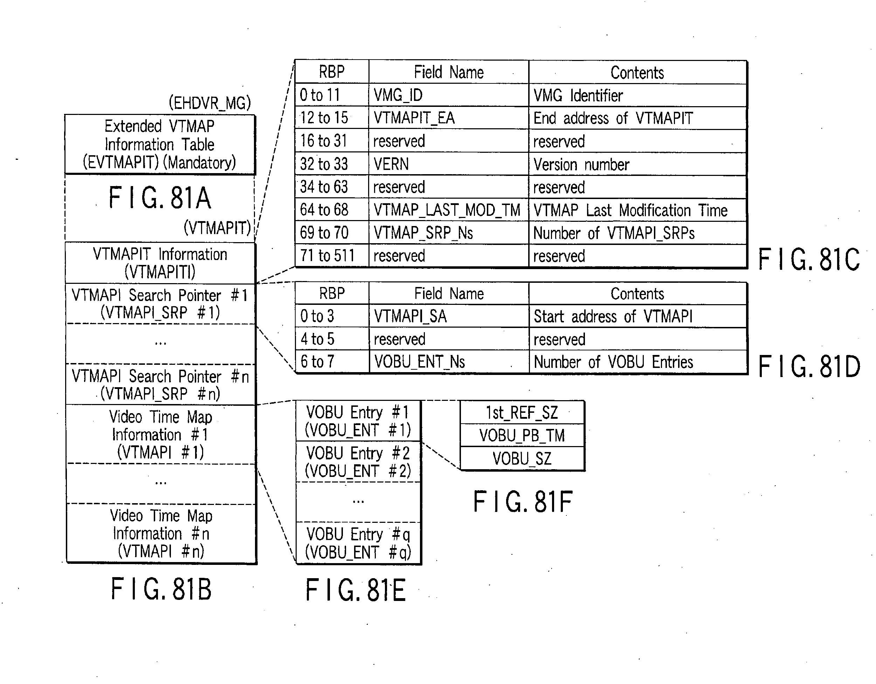

FIGS. 81A to 81F exemplify contents of the extended video time map information table (EVTMAPIT) shown in FIG. 54B. Extended video time map information table EVTMAPIT is configured to include video time map information table information VTMAPITI, one or more video time map information search pointers #1 to #n (VTMAPI_SRP#1 to VTMAPI_SRP#n), and one or more video time map information items #1 to #n (VTMAPI#1 to VTMAPI#n) (FIGS. 81A and 81B).

Here, VTMAPITI may be used to include video manager identifier VMG_ID, end address VTMAPIT_EA of video time map information table VTMAPIT, version number VERN of the used standard (e.g., DVD EHD_VR standard), last modification time VTMAP_LAST_MOD_TM of video time map VTMAP, and number VTMAPI_SRP_Ns of video time map information search pointers (FIGS. 81B and 81C). VMG_ID may be used to describe "DVD_EHR_VTMAP" to identify a video time map file (EHR_VTMAP.IFO; not shown) with character set code of ISO/IEC 646:1983. VTMAP_LAST_MOD_TM may be used to describe the time when the content of EHR_VTMAP.IFO was modified last.

Each VTMAPI_SRP may include start address VTMAPI_SA of VTMAPI, and number VOBU_ENT_Ns of VOBU entries shown in FIG. 81E (FIGS. 81B and 81D). Each VTMAPI may include one or more VOBU entries #1 to #q (VOBU_ENT#1 to VOBU_ENT#q) (FIGS. 81B and 81E). Each VOBU_ENT may include first reference picture size 1ST_REF_SZ of the corresponding video object unit VOBU, playback time VOBU_PB_TM of the corresponding VOBU, and size VOBU_SZ of the corresponding VOBU (FIGS. 81E and 81F).

FIGS. 82A to 82I exemplify contents of the extended stream time map information table (ESTMAPIT) shown in FIG. 54B. Extended stream time map information table ESTMAPIT is configured to include extended stream time map information table information ESTMAPITI, one or more extended stream time map information search pointers #1 to #n (ESTMAPI_SRP#1 to ESTMAPI_SRP#n), and one or more extended stream time map information items #1 to #n (ESTMAPI#1 to ESTMAPI#n) (FIGS. 82A and 82B).

Here, ESTMAPITI may be used to include extended video manager identifier EVMG_ID, end address ESTMAPIT_EA of the extended stream time map information table, version number VERN of the used standard (e.g., DVD EHD_VR standard), last modification time ESTMAP_LAST_MOD_TM of extended stream time map ESTMAP, and number ESTMAPI_SRP_Ns of extended stream time map information search pointers (FIGS. 82B and 82C). EVMG_ID may be used to describe "DVD_EHR_STMAP" to identify a stream time map file (EHR_STMAP.IFO; not shown) with character set code of ISO/IEC 646:1983. ESTMAP_LAST_MOD_TM may be used to describe the time when the content of EHR_STMAP.IFO was modified last.

Each ESTMAPI_SRP may include extended stream time map information search pointer general information ESTMAPI_SRP_GI, and one or more extended elementary time map information general information items #1 to #p (EETMAPI_GI#1 to EETMAPI_GI#p) (FIGS. 82B and 82D). Here, ESTMAPI_SRP_GI may be used to include start address ESTMAPI_SA of ESTMAPI, and number EETMAPI_Ns of extended elementary time map information items (EETMAPIs shown in FIG. 82G) (FIGS. 82D and 82E). Each EETMAPI_GI may be used to include number ESOBU_ENT_Ns of extended stream object unit entries (ESOBU_ENTs in FIG. 82H) (FIGS. 82D and 82F). Each ESTMAPI may include extended elementary time map information items #1 to #p (EETMAPI#1 to EETMAPI#p) (FIGS. 82B and 82G). Each EETMAPI may be configured to include one or more extended SOBU entries #1 to #q (ESOBU_ENT#1 to ESOBU_ENT#q) (FIGS. 82G and 82H).

Each ESOBU_ENT may be configured to include first reference picture size 1ST_REF_SZ of the corresponding ESOBU, playback time ESOBU_PB_TM of the corresponding ESOBU, size ESOBU_SZ of the corresponding ESOBU, and start packet position ESOBU_S_PKT_POS of the corresponding ESOBU (FIGS. 82H and 82I). This ESOBU_S_PKT_POS may be used to describe the start packet position of the corresponding ESOBU, with the relative packet number (PKTG_RPKTN) in the first packet group of the corresponding ESOBU. The value of ESOBU_S_PKT_POS may be any one of 1 to PKT_Ns (number of packets in the packet group).

Incidentally, the pack/packet group header may contain arrival time information ATS and attribute information (PCRI) of the first TS packet, and the pack/packet group data may contain difference information (IAPAT) from the arrival time of the first TS packet together with data of TS packets, or may contain time information items (PATS#) of corresponding TS packets.

Note that at least one of TS packets may have an adaptation field including a predetermined program clock reference (PCR), and the pack/packet group header may contain location information (155X in FIG. 16) of the program clock reference (PCR).

Alternatively, an information recording medium to which the system of an embodiment of the present invention can be applied may also be configured as follows. More specifically, in a recording medium configured to record a digital stream signal complying with an MPEG transport stream and a video recording signal obtained by converting an analog signal into a digital signal by MPEG encoding, this recording medium may have a management area and data area, and the data area can store both the video recording signal and digital stream signal. Data of this digital stream signal can be separately recorded as a plurality of objects (ESOB). Each object contains data units (ESOBU). One data unit is made up of pack/packet groups each of which is formed by grouping a plurality of transport stream packets (TS packets). The pack/packet group is formed of a pack/packet group header and pack/packet group data containing TS packets having data of the digital stream signal.

On the other hand, the management area may contain cell information (CI) associated with cells as playback units, and attribute information (contained in ESFI in FIG. 5; PCR_Pack number or 1st_Ref_PIC_PTM (not shown)) of the object ESOB. This cell information (management information layer 10 in FIG. 2) can designate both data (VOB in FIG. 2) of the video recording signal and the object (ESOB in FIG. 2) (VOB can be designated by time information VOBU_PB_TM (not shown); ESOB can be designated by time information ESOBU_PB_TM in FIG. 12). This cell information (CI#q in FIG. 15) can record number information (corresponding ESOB number in FIG. 15) used to designate the object ESOB.

Note that at least one of TS packets may have an adaptation field including a predetermined program clock reference (PCR), and the management area may contain location information (PCR_Pack number or corresponding 1st_Ref_PIC_PTM in FIG. 12) of the program clock reference.

An information recording method according to an embodiment of the present invention may be configured to record information on the aforementioned medium.

An information playback method according to an embodiment of the present invention may be configured to playback information from the aforementioned medium.

An information recording apparatus according to an embodiment of the present invention may be configured to record information on the aforementioned medium.

An information playback apparatus according to an embodiment of the present invention may be configured to playback information from the aforementioned medium.

Also, an apparatus according to an embodiment of the present invention can comprise a management data generation unit for generating a management map or the like used to manage stream data, a support information appending unit for appending support information of management data in the generated management data, and a drive unit for recording the generated management data.

Incidentally, in the embodiment of FIG. 18, when a stream recording (digital video input) is performed, encoder unit 79 is configured to record the digital stream signal using an MPEG transport stream. On the other hand, when a video recording (analog video input) is performed, encoder unit 79 is configured to record a digital stream signal, obtained by converting an analog video input using A/D converter 84, using an MPEG program stream.

Note that the present invention is not limited to the aforementioned embodiments, and various modifications may be made without departing from the scope of the invention when it is practiced. The respective embodiments may be combined as needed as long as such combinations are possible, and combined effects can be obtained in such case. Furthermore, the embodiments include inventions of various stages, and various inventions can be extracted by appropriately combining a plurality of disclosed required constituent elements. For example, even when some required constituent elements are omitted from all required constituent elements described in the embodiment, an arrangement from which the required constituent elements are omitted can be extracted as an invention as long as the problems that have been discussed in the paragraphs of the problems to be solved by the invention, and the effects that have been explained in the paragraphs of the effect of the invention can be obtained.

As explained herein, the invention presents a mechanism conforming to various broadcasting systems, and simple in management for playback if recording contents of various broadcasting system are mixed and recorded in one information recording medium. Data of digital TV broadcast and the like can be flexibly managed.

## Claims

1. An information recording medium configured to record a digital stream signal conforming to a predetermined digital broadcasting system, the information recording medium comprises a management region and a data region, **characterized in that** the data region (131) is configured to record data of the digital stream signal as being divided into a plurality of object files in each broadcasting system, and the management region (130) is configured to record object file management information in each of said plurality of object fields.

2. The information recording medium according to claim 1, **characterized in that** the management information comprises first information showing a type of the digital broadcasting system.

3. The information recording medium according to claim 2, **characterized in that** the management information further comprises second information showing a packet format of the digital stream signal, third information showing an executing country or executing district of digital broadcast, fourth information showing a type of a broadcast route, and fifth information showing the version of the broadcasting system.

4. The information recording medium according to claim 3, **characterized in that** at least one of the first information, second information and third information is information to be included in default information of an apparatus operating on the digital broadcasting system, and at least one of the fourth information and fifth information is information to be included in service information of the digital broadcast.

5. An information recording apparatus for recording information on an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the apparatus comprising:
a detecting unit which detects a type of the broadcasting system; and
an object file grouping unit which records the object file in each broadcasting system according to the result of detection by the detecting unit.

6. An information recording apparatus for recording information on an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the apparatus comprising:
a detecting unit which detects a type of the broadcasting system; and
an object management table structure changing unit which changes a structure of an object management table to a structure suited to the broadcasting system according to the result of detection by the detecting unit.

7. An information playback apparatus for reproducing information from an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the apparatus comprising:
a detecting unit which detects a type of the broadcasting system of an object to be played back; and
an object file determining unit which determines an object file to be played back according to the result of detection by the detecting unit.

8. An information playback apparatus for reproducing information from an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the apparatus comprising:
a detecting unit which detects a type of the broadcasting system of an object to be played back; and
an object management table structure determining unit which selects a structure of an object management table according to the result of detection by the detecting unit.

9. An information playback apparatus for reproducing information from an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the apparatus comprising:
a detecting unit which detects a type of the broadcasting system of an object to be played back; and
a decoding method changing unit which changes a decoding method according to the result of detection by the detecting unit.

10. An information recording method for recording information on an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the method comprising:
detecting a type of the broadcasting system; and
recording the object file in each broadcasting system according to the result of detection.

11. An information playback method for reproducing information from an information recording medium configured to record a digital stream signal conforming to a predetermined digital broadcasting system, the information recording medium comprising a management region and a data region, the data region (131) being configured to record data of the digital stream signal as being divided into a plurality of object files in each broadcasting system, and the management region (130) being configured to record object file management information in each of said plurality of object fields, the method comprising:
detecting a type of the broadcasting system of an object to be played back; and
determining the object file to be played back according to the result of detection.
